(19) Europäisches Patentamt
European Patent Office
Office européen des brevets

(11) EP 2 874 968 B1

(12) # EUROPÄISCHE PATENTSCHRIFT

(45) Veröffentlichungstag und Bekanntmachung des Hinweises auf die Patenterteilung:
**27.04.2016 Patentblatt 2016/17**

(21) Anmeldenummer: **13739238.7**

(22) Anmeldetag: **19.07.2013**

(51) Int Cl.:
***C04B 24/26*** (2006.01) ***C04B 28/02*** (2006.01)

(86) Internationale Anmeldenummer:
**PCT/EP2013/065353**

(87) Internationale Veröffentlichungsnummer:
**WO 2014/013077 (23.01.2014 Gazette 2014/04)**

(54) **ADDITIV FÜR HYDRAULISCH ABBINDENDE MASSEN**
ADDITIVE FOR HYDRAULIC DISSOLVING MASSES
ADDITIF POUR MASSES SE DÉTACHANT HYDRAULIQUEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2012 EP 12177399**
**20.07.2012 US 201261673853 P**

(43) Veröffentlichungstag der Anmeldung:
**27.05.2015 Patentblatt 2015/22**

(73) Patentinhaber: **Construction Research & Technology GmbH**
**83308 Trostberg (DE)**

(72) Erfinder:
- **GÄDT, Torben**
**83278 Traunstein (DE)**
- **GRASSL, Harald**
**84550 Feichten (DE)**
- **KRAUS, Alexander**
**83132 Pittenhart (DE)**

(56) Entgegenhaltungen:
**EP-A1- 1 136 508**
**EP-A2- 2 412 689**
**WO-A1-00/48961**
**WO-A2-2009/004348**
**WO-A2-2010/029117**
**US-B2- 7 879 146**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 874 968 B1

## Beschreibung

Die Erfindung betrifft ein Additiv für hydraulisch abbindende Massen, das insbesondere als Konsistenzhalter (Slump retainer) geeignet ist.

Hydraulisch abbindende Massen, die wässrige Aufschlämmungen von hydraulischem und/oder mineralischem Bindemittel mit pulverförmigen anorganischen und/oder organischen Substanzen, wie Tonen, Silikatmehlen, Kreiden, Rußen, oder Gesteinsmehlen enthalten, finden zum Beispiel in Form von Betonen, Mörteln oder Gipsen breite Anwendung.

Es ist bekannt, dass hydraulisch abbindende Massen zur Verbesserung ihrer Verarbeitbarkeit, das heißt Knetbarkeit, Streichfähigkeit, Spritzbarkeit, Pumpbarkeit oder Fließfähigkeit, Additive, die polymere Dispergiermittel umfassen, zugesetzt werden. Derartige Additive können die Bildung von Feststoffagglomeraten verhindern, bereits vorhandene und durch Hydratation neu gebildete Teilchen dispergieren und auf diese Weise die Verarbeitbarkeit verbessern. Additive, die polymere Dispergiermittel umfassen, werden insbesondere auch gezielt bei der Herstellung von hydraulisch abbindenden Massen, die hydraulische und/oder mineralische Bindemittel wie (Portland)zement, Hüttensand, Flugasche, Silikastaub, Metakaolin, natürliche Puzzolane, gebrannten Ölschiefer, Calcium-Aluminat-Zement, Kalk, Gips, Halbhydrat, Anhydrit oder Mischungen zweier oder mehrerer dieser Komponenten enthalten, eingesetzt.

Um diese hydraulisch abbindenden Massen auf der Basis der genannten Bindemittel in eine gebrauchsfertige, verarbeitbare Form zu überführen, ist in der Regel wesentlich mehr Anmachwasser erforderlich, als für den nachfolgenden Erhärtungsprozess notwendig wäre. Im Betonkörper verringern die durch das überschüssige, später verdunstende Wasser gebildeten Hohlräume die mechanische Festigkeit und Beständigkeit.

Um den Anteil überschüssigen Wassers bei einer vorgegebenen Verarbeitungskonsistenz zu reduzieren und/oder die Verarbeitbarkeit bei einem vorgegebenen Wasser/Bindemittel-Verhältnis zu verbessern, werden Additive eingesetzt, die im Allgemeinen als Wasserreduktionsmittel oder Fließmittel bezeichnet werden. Als Wasserreduktions- oder Fließmittel werden in der Praxis insbesondere durch radikalische Polymerisation erhaltene, auf carboxylgruppenhaltigen Monomeren und auf polyethylenglykolhaltigen olefinischen Monomeren basierende Polymere eingesetzt, die auch als Polycarboxylatether (abgekürzt als "PCE") bezeichnet werden. Diese Polymere weisen eine carboxylgruppenhaltige Hauptkette mit polyethylenglykolhaltigen Seitenketten auf und werden auch als Kammpolymere bezeichnet.

Von den Wasserreduktions- und Fließmitteln, die bei relativ geringer Dosierung eine Verflüssigung frisch angesetzten Betons bewirken, grenzt man die sogenannten Konsistenzhalter, bzw. Setzmaßaufrechterhalter, die im folgenden als "Slump-retainer" bezeichnet werden, ab, die nur bei relativ hoher Dosierung die gleiche anfängliche Verflüssigung erreichen, aber ein konstantes Ausbreitmaß über die Zeit bewirken. Im Gegensatz zur Zugabe von Wasserreduktionsmitteln ermöglicht die Zugabe von Slump retainern eine auf beispielsweise bis zu 90 Minuten nach dem Anmischen des Betons ausgedehnte, gute Verarbeitbarkeit, während die Verarbeitbarkeit mit Wasserreduktionsmitteln meist schon nach 10 bis 30 Minuten deutlich abnimmt.

Charakteristisch ist für die bisher im Stand der Technik bekannten Kammpolymere, dass in Abhängigkeit von einigen polymerspezifischen Parametern gezielt ein Wasserreduktionsmittel oder auch ein Slump retainer erzeugt werden kann. Diese polymerspezifischen Parameter umfassen die Anzahl der Carboxylgruppen oder sonstiger Säuregruppen, die Anzahl und Länge der Polyethylenglykolseitenketten und das Molekulargewicht. Eine Einstellung zwischen Wasserreduktions- und Setzmaßaufrechterhaltungs-Effekt durch eine entsprechende Auswahl vorstehend genannter polymerspezifischer Parameter ist allerdings nur a priori durch synthetische, bzw. polymerisationstechnische Maßnahmen im Labor oder in einer chemischen Produktionsanlage möglich. Dabei werden meist entsprechende Typen von Säuremonomeren und polyethylenglykolhaltigen Makromonomeren in gewissen Molverhältnissen ausgewählt und polymerisiert. Durch die Festlegung im Produktionsprozess ist eine Umpolung eines Wasserreduktionsmittels zu einem Slump retainer oder umgekehrt nach dem Stand der Technik am Ort der Betonverarbeitung nicht möglich.

Meist werden in der Praxis Wasserreduktionsmittel und Slump retainer in Formulierungen in wechselnden Anteilen eingesetzt. Allerdings ist es durch formulierungstechnische Maßnahmen nur sehr eingeschränkt möglich die Aufrechterhaltung des Setzmaßes (Slumpretention) zu verbessern, insbesondere ist es schwierig die Aufrechterhaltung des Setzmaßes zu verbessern ohne dabei weitere Betoneigenschaften nachteilig zu beeinflussen. So führt eine Formulierung mit Slump retainern zwar zu einem besseren Slumperhalt, wie beispielsweise in WO 2009/004348 im Zusammenhang mit Phosphonaten und in JP 57067057A im Zusammenhang mit Zuckern offenbart ist. Allerdings gewinnt man die Aufrechterhaltung des Setzmaßes nur auf Kosten schlechterer Frühfestigkeiten.

Im Stand der Technik sind als weitere Methoden zur Aufrechterhaltung des Setzmaßes einer zementären Bindemitteldispersion über die Zeit bekannt:

Die Verwendung von Hochleistungsfließmitteln auf Polycarboxylatetherbasis mit hydrolysierbaren Acrylsäureestern, sogenannte "dynamische Superverflüssiger", wie sie in der EP 1136508 A1 und WO 2010/029117 beschrieben sind. Diese Technologie ermöglicht die zeitlich kontrollierte Adsorption der Fließmittelpolymere auf den Zementkornoberflächen, wobei durch Hydrolyse entsprechender Carbonsäurederivate (bspw. Acrylsäureester) im alkalischen Medium Beton die Aufrechterhaltung des Setzmaßes verbessert wird. Auch die Eigenschaften "dynamischer Superverflüssiger" werden durch synthetische, bzw. polymerisationstechnische Maßnahmen im Labor oder in einer chemischen Produktionsanlage festgelegt und sind am Ort der Betonverarbeitung nicht flexibel einstellbar.

Weiterhin werden vernetzte Polycarboxylatether eingesetzt, welche durch Monomere mit mehr als einer polymerisierbaren Funktion, wie beispielsweise Di(meth)acrylate, vernetzt sind. Unter den stark basischen Bedingungen des zementären Porenwassers hydrolysieren die vernetzenden Struktureinheiten, die Vernetzung wird aufgehoben und das als Fließmittel wirksame unvernetzte (Co)polymer wird über die Zeit freigesetzt (WO2000/048961). Auch die Eigenschaften dieser vernetzten Polycarboxylatether werden durch synthetische, bzw. polymerisationstechnische Maßnahmen im Labor oder in einer chemischen Produktionsanlage festgelegt und sind am Ort der Betonverarbeitung nicht flexibel einstellbar. Außerdem besteht die Gefahr einer unbeabsichtigten vorzeitigen Hydrolyse bei der Lagerung der Produkte.

In der US7879146 B2 wird die Herstellung von Doppelschicht-Hydroxiden basierend auf zweiwertigen Metallkationen (bspw. $Ni^{2+}$, $Zn^{2+}$, $Mn^{2+}$ und/oder $Ca^{2+}$ und dreiwertigen Metallkationen (bspw. $All^{3+}$, $Ga^{3+}$, $Fe^{3+}$ und/oder $Cr^{3+}$) offenbart. Die Doppelschicht-Hydroxide können Anionen wie Nitrate, Hydroxide, Carbonate, Sulfate und Chloride interkalieren. Die anorganischen Produkte werden über mehrere Stunden bei erhöhter Temperatur (65 °C) behandelt und dann im Vakuum bei 100 °C getrocknet. In die so hergestellten Doppelschicht-Hydroxide werden in einem sich anschließenden lonenenaustauschprozess organische Moleküle wie beispielsweise Naphthalensulfonate, Derivate der Nitrobenzoesäure, Salicylsäure, Zitronensäure, Polyacrylsäuren, Polyvinylalkohol und ein Superplasticizer auf Basis eines Natriumsalzes von Polynaphthalinsulfonsäure (PNS) interkaliert. Die anorganisch durch Doppelschicht-Hydroxide modifizierten Natriumsalze der Polynaphthalinsulfonsäure (PNS) bewirken im Mörteltest nur eine leicht verbesserte Aufrechterhaltung des Setzmaßes. Diese Verbesserung ist für viele Anwendungen nicht ausreichend.

Die EP 2 412 689 beschreibt ein Nano-Hybrid-Additiv für Beton aus einem schichtförmigen Doppelhydroxid und einem Polyurethan-Copolymer, das durch Vermischen der beiden Komponenten und hydrothermale Behandlung hergestellt wird. Das Additiv soll den Chloridionen-induzierten Abbau von Unterwasserbeton und die Zersetzung von Beton durch die Anwendung von Enteisungsmitteln, wie Calciumchlorid, im Winter verhindern. Nachteilig sind die langen Synthesedauern von > 6h und die benötigten hohen Temperaturen von 80 bis 100°C bei der hydrothermalen Herstellung der Doppelschichthydroxide. Weiterhin ist man auch bei dieser Methode daran gebunden, dass die Eigenschaften des Hybrids in einer komplizierten Synthese in einer chemischen Produktionsanlage festgelegt werden.

Die vielfältigen Anforderungen an das Leistungsprofil der Betone sind länderspezifischen Regulierungen und Normierungen unterworfen und stark abhängig von den an der jeweiligen Baustelle vorherrschenden Bedingungen, wie etwa den Witterungsbedingungen. Besonders die Aufrechterhaltung des Setzmaßes hängt stark von den an derjeweilgen Baustelle vorherrschenden Bedingungen ab.

Da von Baustelle zu Baustelle ganz unterschiedliche Witterungsbedingungen vorherrschen können, besteht in der Bauindustrie das Bedürfnis, die vorstehend beschriebenen Mängel des Stands der Technik zu beheben. Der Erfindung liegt daher die Aufgabe zugrunde, effiziente Slump retainer bereitzustellen. Diese sollen in der Lage sein, unter den auf der Baustelle vorherrschenden Bedingungen eine ausreichende Aufrechterhaltung des Setzmaßes zu gewährleisten ohne andere Betoneigenschaften, wie z. B. die Frühfestigkeit, zu beeinträchtigen.

Diese Aufgabe wird gemäß einer ersten Ausführungsform gelöst durch ein

1. Additiv für hydraulisch abbindende Massen, umfassend eine wässrige kolloid-disperse Zubereitung wenigstens eines Salzes wenigstens eines mehrwertigen Metallkations und wenigstens eines polymeren Dispergiermittels, das anionische und/oder anionogene Gruppen und Polyetherseitenketten umfasst,
wobei das mehrwertige Metallkation ausgewählt ist unter
$All^{3+}$, $Fe^{3}$+, $Fe^{2}$+, $Zn^{2+}$, $Mn^{2+}$, $Cu^{2+}$, $Ca^{2+}$, $Mg^{2+}$, $Sr^{2+}$, $Ba^{2+}$ und Gemischen davon,
bevorzugt ausgewählt ist unter
$All^{3+}$, $Fe^{3}$+, $Fe^{2}$+, $Mn^{2+}$, $Zn^{2+}$, $Ca^{2+}$ und Gemischen davon,
besonders bevorzugt ausgewählt ist unter
$All^{3+}$, $Fe^{3}$+, $Fe^{2}$+, $Ca^{2+}$ und Gemischen davon, und
insbesondere ausgewählt ist unter $All^{3+}$, $Fe^{3}$+, $Fe^{2+}$ und Gemischen davon,
und das mehrwertige Metallkation in überstöchiometrischer Menge, gerechnet als Kationenäquivalente, bezogen auf die Summe der anionischen und anionogenen Gruppen des polymeren Dispergiermittels, vorliegt.

2. Additiv nach Anspruch 1, wobei das mehrwertige Metallkation ausgewählt ist unter $A\beta^{+}$, $Fe^{3}$+, $Fe^{2}$+, $Mn^{2+}$, $Zn^{2+}$, $Ca^{2+}$ und Gemischen davon.

3. Additiv nach Anspruch 1, wobei das mehrwertige Metallkation ausgewählt ist unter $A\beta^{+}$, $Fe^{3}$+, $Fe^{2}$+, $Ca^{2+}$ und Gemischen davon.

4. Additiv nach Anspruch 1, wobei das mehrwertige Metallkation ausgewählt ist unter $A\beta^{+}$, $Fe^{3}$+, $Fe^{2+}$ und Gemischen davon.

5. Additiv nach einer der vorhergehenden Ausführungsformen, umfassend wenigstens ein Anion, das mit dem mehrwertigen Metallkation ein schwerlösliches Salz zu bilden vermag.

6. Additiv nach einer der vorhergehenden Ausführungsformen, wobei das Metallkation in einer Menge entsprechend der folgenden Formel (a) vorliegt:

$$1 < \frac{\sum_i z_{K,i} * n_{K,i}}{\sum_j z_{S,j} * n_{S,j}} < 30 \quad \text{(a)}$$

wobei

$z_{K,i}$ für den Betrag der Ladungszahl des mehrwertigen Metallkations steht,
$n_{K,i}$ für die Molzahl des eingewogenen mehrwertigen Metallkations steht,
$z_{s,j}$ für den Betrag der Ladungszahl der im polymeren Dispergiermittel enthaltenen anionischen und anionogenen Gruppe steht,
$z_{s,j}$ für die Molzahl der im eingewogenen polymeren Dispergiermittel enthaltenen anionischen und anionogenen Gruppe steht,

die Indices i und j voneinander unabhängig und eine ganze Zahl größer als 0 sind, i für die Anzahl verschiedenartiger mehrwertiger Metallkationen steht und j für die Anzahl verschiedenartiger im polymeren Dispergiermittel enthaltener anionischer und anionogener Gruppen steht, wobei z so definiert ist, dass die Ladungszahl für Kationen sich stets auf die volle formale Ladung bezieht, d.h. $z_F e(FeCl_3)=3$, $z_{Fe}(FeCl_2)=2$. z steht für den Betrag der formalen Ladung der Anionen bei maximaler Deprotonierung, d.h. $z_{PO4}(H_3PO_4)=z_{PO4}(Na_3PO_4)=3$, oder $z_{CO3}(Na_2CO_3)=2$. Im Fall von Aluminat wird gesetzt $z_{AlO2}(NaAlO_2)=z_{AlO2}(NaAl(OH)_4)=1$, im Fall von Silikat wird für alle Silikatspezies gesetzt $z_{SiO3}(Na_2SiO_3)=2$.

7. Additiv nach Ausführungsform 6, wobei das Verhältnis nach Formel (a) im Bereich von >1 bis 30, vorzugsweise 1,01 bis 10 liegt.

8. Additiv nach Ausführungsform 6 oder 7, wobei das Verhältnis nach Formel (a) im Bereich von 1,01 bis 8 oder 1,1 bis 8, bevorzugt 1,01 bis 6 oder 1,1 bis 6 oder 1,2 bis 6 liegt.

9. Additiv nach einer der Ausführungsformen 6 bis 8, wobei das Verhältnis nach Formel (a) im Bereich von 1,01 bis 5 oder 1,1 bis 5 oder 1,2 bis 5 oder 1,25 bis 5, liegt.

10. Additiv nach einer der Ausführungsformen 5 bis 9, wobei das mehrwertige Metallkation in einer Menge entsprechend der folgenden Formel (a) und das Anion in einer Menge entsprechend der folgenden Formel (b) vorliegt:

$$1 < \frac{\sum_i z_{K,i} * n_{K,i}}{\sum_j z_{S,j} * n_{S,j}} < 30 \quad \text{(a)}$$

$$0 \leq \frac{\sum_l z_{A,l} * n_{A,l}}{\sum_i z_{K,i} * n_{K,i}} < 3 \quad \text{(b)}$$

wobei

$z_{K,i}$ für den Betrag der Ladungszahl des mehrwertigen Metallkations steht,
$n_{K,i}$ für die Molzahl des eingewogenen mehrwertigen Metallkations steht,
$z_{s,j}$ für Ladungszahl der im polymeren Dispergiermittel enthaltenen anionischen und anionogenen Gruppen steht,

$z_{s,j}$ für die Molzahl der im eingewogenen polymeren Dispergiermittel enthaltenen anionischen und anionogenen Gruppen steht,
$Z_{A,l}$ für die Ladungszahl des eingewogenen Anions steht,
$n_{A,l}$ für die Molzahl des eingewogenen Anions steht,

die Indices i, j und l voneinander unabhängig und eine ganze Zahl größer als 0 sind, i für die Anzahl verschiedenartiger mehrwertiger Metallkationen steht und j für die Anzahl verschiedenartiger im polymeren Dispergiermittel enthaltener anionischer und anionogener Gruppen steht, l für die Anzahl verschiedenartiger Anionen, welche mit dem Metallkation ein schwerlösliches Salz bilden können, steht.

11. Additiv nach Ausführungsform 10, wobei das Verhältnis nach Formel (b) im Bereich von 0 bis 3, vorzugsweise 0,1 bis 2, besonders bevorzugt 0,2 bis 1,5, liegt.

12. Additiv nach einer der Ausführungsformen 5 bis 11, wobei das Anion ausgewählt ist unter Carbonat, Oxalat, Silikat, Phosphat, Polyphosphat, Phosphit, Borat, Aluminat, Sulfat und Gemischen davon.

13. Additiv nach Ausführungsform 12, wobei das Anion ausgewählt ist unter Carbonat, Silikat, Phosphat, Aluminat und Gemischen davon.

14. Additiv nach Ausführungsform 13, wobei das Anion Phosphat ist.

15. Additiv nach Ausführungsform 10, wobei das Anion Phosphat ist und das Verhältnis nach Formel (b) im Bereich von 0,2 bis 1 liegt.

16. Additiv nach Ausführungsform 10, wobei das Anion Aluminat oder Carbonat ist und das Verhältnis nach Formel (b) im Bereich von 0,2 bis 2 liegt.

17. Additiv nach Ausführungsform 10, wobei das Anion Silikat ist und das Verhältnis nach Formel (b) im Bereich von 0,2 bis 2 liegt.

18. Additiv nach einer der Ausführungsformen 5 bis 17, wobei das Additiv im wesentlichen keine Zubereitung eines $Al^{3+}$, $Ca^{2+}$, oder $Mg^{2+}$ Salzes und eines Silikats enthält.

19. Additiv nach einer der vorhergehenden Ausführungsformen, zusätzlich umfassend wenigstens ein Neutralisierungsmittel.

20. Additiv nach Ausführungsform 19, wobei das Neutralisierungsmittel ein organisches aliphatisches Monoamin, aliphatisches Polyamin, Alkalimetallhydroxid, insbesondere Natrium- oder Kaliumhydroxid, oder Ammoniak ist.

21. Additiv nach Ausführungsform 20, wobei das Neutralisierungsmittel ausgewählt ist unter Ammoniak, Monohydroxy-$C_1$-$C_4$-alkylaminen, Di-hydroxy-$C_1$-$C_4$-alkylaminen, Tri-hydroxy-$C_1$-$C_4$-alkylaminen, Mono-$C_1$-$C_4$-alkylaminen, Di-$C_1$-$C_4$-alkylaminen, Tri-$C_1$-$C_4$-alkylaminen, $C_1$-$C_4$-Alkylendiaminen, (Tetra-hydroxy-$C_1$-$C_4$-alkyl)- $C_1$-$C_4$-alkylendiaminen, Polyethyleniminen, Polypropyleniminen und Gemischen davon.

22. Additiv nach Ausführungsform 21, wobei das Neutralisierungsmittel ausgewählt ist unter Ammoniak, Monohydroxy-$C_1$-$C_4$-alkylaminen, Di-hydroxy-$C_1$-$C_4$-alkylaminen, Tri-hydroxy-$C_1$-$C_4$-alkylaminen, $C_1$-$C_4$-Alkylendiaminen, und Polyethyleniminen.

23. Additiv nach Ausführungsform 22, wobei das Neutralisierungsmittel ausgewählt ist unter Ammoniak, Ethylendiamin, Monoethanolamin, Diethanolamin, Triethanolamin und Polyethyleniminen.

24. Additiv nach einer der vorhergehenden Ausführungsformen, das einen pH-Wert von 2 bis 11.5, vorzugsweise 5 bis 9 und insbesondere 6 bis 8 aufweist.

25. Additiv nach einer der vorhergehenden Ausführungsformen, wobei das polymere Dispergiermittel als anionische oder anionogene Gruppe zumindest eine Struktureinheit der allgemeinen Formeln (Ia), (Ib), (Ic) und/oder (Id) aufweist:

(Ia)

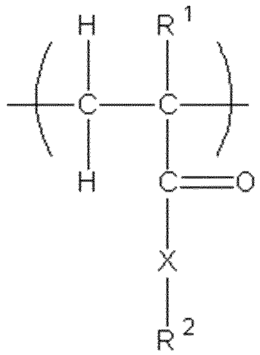

worin

$R^1$ für H oder eine unverzweigte oder verzweigte $C_1$-$C_4$-Alkylgruppe, $CH_2COOH$ oder $CH_2CO$-X-$R^2$, vorzugsweise für H oder $CH_3$, steht;
X für NH-($C_nH_{2n}$), O($C_nH_{2n}$) mit n = 1, 2, 3 oder 4, wobei das Stickstoffatom bzw. das Sauerstoffatom an die CO-Gruppe gebunden ist, oder für eine chemische Bindung, vorzugsweise für X = chemische Bindung oder O($C_nH_{2n}$), steht;
$R^2$ für OM, $PO_3M_2$, oder O-$PO_3M_2$ steht; mit der Maßgabe, dass X für eine chemische Bindung steht, wenn $R^2$ für OM steht;

(Ib)

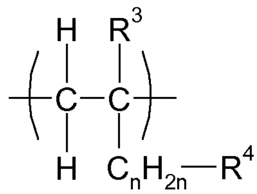

worin

$R^3$ für H oder eine unverzweigte oder verzweigte $C_1$-$C_4$-Alkylgruppe, vorzugsweise für H oder $CH_3$, steht;
n für 0, 1, 2, 3 oder 4, vorzugsweise für 0 oder 1, steht;
$R^4$ für $PO_3M_2$, oder O-$PO_3M_2$ steht;

(Ic)

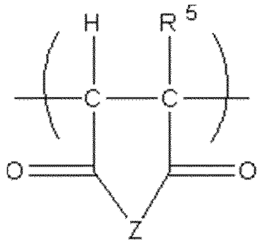

worin

$R^5$ für H oder eine unverzweigte oder verzweigte $C_1$-$C_4$-Alkylgruppe, vorzugsweise für H, steht;
Z für O oder oder $NR^7$, vorzugsweise für O, steht;

$R^7$ für H, $(C_nH_{2n})$-OH, $(C_nH_{2n})$-$PO_3M_2$, $(C_nH_{2n})$-$OPO_3M_2$, $(C_6H_4)$-$PO_3M_2$, oder $(C_6H_4)$-$OPO_3M_2$ steht, und
n für 1, 2, 3 oder 4, vorzugsweise für 1, 2 oder 3, steht;

(Id)

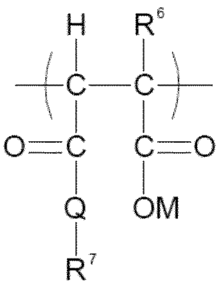

worin

$R^6$ für H oder eine unverzweigte oder verzweigte $C_1$-$C_4$-Alkylgruppe, vorzugsweise für H, steht;
Q für $NR^7$ oder O, vorzugsweise für O, steht;
$R^7$ für H, $(C_nH_{2n})$-OH, $(C_nH_{2n})$-$PO_3M_2$, $(C_nH_{2n})$-$OPO_3M_2$, $(C_6H_4)$-$PO_3M_2$, oder $(C_6H_4)$-$OPO_3M_2$ steht,
n für 1, 2, 3 oder 4, vorzugsweise für 1, 2 oder 3, steht; und
jedes M unabhängig voneinander für H oder ein Kationäquivalent steht.

26. Additiv nach Ausführungsform 25, wobei das polymere Dispergiermittel als anionische oder anionogene Gruppe mindestens eine Struktureinheit der Formel (Ia) aufweist, worin $R^1$ für H oder $CH_3$ steht; und/oder mindestens eine Struktureinheit der Formel (Ib), worin $R^3$ für H oder $CH_3$ steht; und/oder mindestens eine Struktureinheit der Formel (Ic), worin $R^5$ für H oder $CH_3$ steht und Z für O steht; und/oder mindestens eine Struktureinheit der Formel (Id), worin $R^6$ für H steht und Q für O steht.

27. Additiv nach Ausführungsform 25, wobei das polymere Dispergiermittel als anionische oder anionogene Gruppe mindestens eine Struktureinheit der Formel (Ia) aufweist, worin $R^1$ für H oder $CH_3$ steht und $XR^2$ für OM oder X für $O(C_nH_{2n})$ mit n = 1, 2, 3 oder 4, insbesondere 2, steht und $R^2$ für O-$PO_3M_2$ steht.

28. Additiv nach einer der vorhergehenden Ausführungsformen, wobei das polymere Dispergiermittel als Polyetherseitenkette zumindest eine Struktureinheit der allgemeinen Formeln (IIa), (IIb), (IIc) und/oder (IId) aufweist:

(IIa)

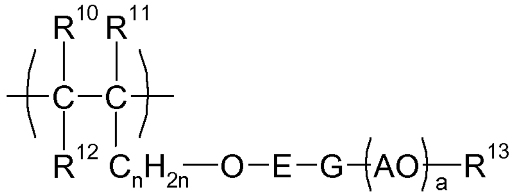

worin

$R^{10}$, $R^{11}$ und $R^{12}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht;
G für O, NH oder CO-NH steht; oder
E und G gemeinsam für eine chemische Bindung stehen;
A für $C_XH_{2X}$ mit x = 2, 3, 4 oder 5 oder $CH_2CH(C_6H_5)$, vorzugsweise für 2 oder 3, steht;
n für 0, 1, 2, 3, 4 oder 5, vorzugsweise für 0, 1 oder 2, steht;

a für eine ganze Zahl von 2 bis 350, vorzugsweise 5 bis 150, steht;
$R^{13}$ für H, eine unverzweigte oder verzweigte $C_1$-$C_4$-Alkylgruppe, CO-$NH_2$ und/oder $COCH_3$ steht;

(IIb)

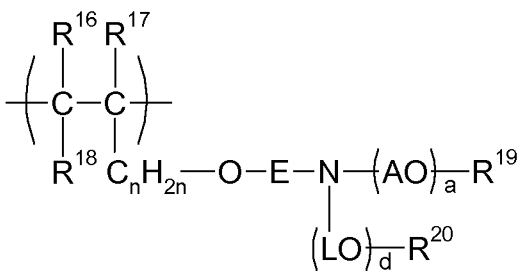

worin

$R^{16}$, $R^{17}$ und $R^{18}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht oder für eine chemische Bindung steht;
A für $C_xH_{2x}$ mit x = 2, 3, 4 oder 5oder $CH_2CH(C_6H_5)$, vorzugsweise für 2 oder 3, steht;
n für 0, 1, 2, 3, 4 und/oder 5, vorzugsweise für 0, 1 oder 2, steht;
L für $C_xH_{2x}$ mit x = 2, 3, 4 oder 5oder $CH_2$-$CH(C_6H_5)$, vorzugsweise für 2 oder 3, steht;
a für eine ganze Zahl von 2 bis 350, vorzugsweise 5 bis 150, steht;
d für eine ganze Zahl von 1 bis 350, vorzugsweise 5 bis 150, steht;
$R^{19}$ für H oder eine unverzweigte oder verzweigte $C_1$-$C_4$-Alkylgruppe steht;
$R^{20}$ für H oder eine unverzweigte $C_1$-$C_4$-Alkylgruppe steht;

(IIc)

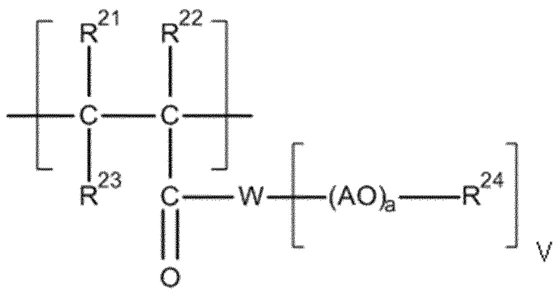

worin

$R^{21}$, $R^{22}$ und $R^{23}$ unabhängig voneinander für H oder eine unverzweigte oder verzweigte $C_1$-$C_4$-Alkylgruppe stehen;
W für O, $NR^{25}$ oder N steht
V für 1 steht, wenn W = O oder $NR^{25}$, und für 2 steht, wenn W = N;
A für $C_xH_{2x}$ mit x = 2, 3, 4 oder 5oder $CH_2CH(C_6H_5)$, vorzugsweise für 2 oder 3, steht;
a für eine ganze Zahl von 2 bis 350, vorzugsweise 5 bis 150, steht;
$R^{24}$ für H oder eine unverzweigte oder verzweigte $C_1$-$C_4$-Alkylgruppe steht; und
$R^{25}$ für H oder eine unverzweigte oder verzweigte $C_1$-$C_4$-Alkylgruppe steht;

(IId)

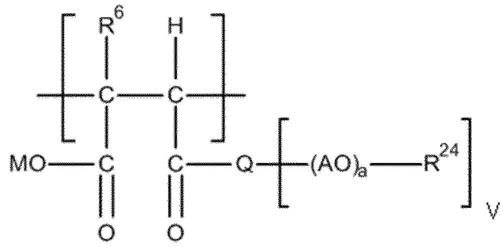

worin

$R^6$ für H oder eine unverzweigte oder verzweigte $C_1$-$C_4$-Alkylgruppe steht;
Q für $NR^{10}$, N oder O steht;
V für 1 steht, wenn W = O oder $NR^{10}$ und für 2 steht, wenn W = N;
$R^{10}$ für H oder eine unverzweigte oder verzweigte $C_1$-$C_4$-Alkylgruppe steht; und
A für $C_XH_{2X}$ mit x = 2, 3, 4 oder 5, oder $CH_2C(C_6H_5)H$, vorzugsweise für 2 oder 3, steht; und
a für eine ganze Zahl von 2 bis 350, vorzugsweise 5 bis 150, steht.

29. Additiv nach Ausführungsform 28, wobei das polymere Dispergiermittel als Polyetherseitenkette aufweist:

(a) mindestens eine Struktureinheit der Formel (IIa), worin $R^{10}$ und $R^{12}$ für H stehen, $R^{11}$ für H oder $CH_3$ steht, E und G gemeinsam für eine chemische Bindung stehen, A für $C_xH_{2x}$ mit x = 2 und/oder 3, a für 3 bis 150 steht, und $R^{13}$ für H oder eine unverzweigte oder verzweigte $C_1$-$C_4$-Alkylgruppe steht; und/oder

(b) mindestens eine Struktureinheit der Formel (IIb), worin $R^{16}$ und $R^{18}$ für H stehen, $R^{17}$ für H oder $CH_3$ steht, E für eine unverzweigte oder verzweigte $C_1$-$C_6$-Alkylengruppe steht, A für $C_XH_{2X}$ mit x = 2 und/oder 3 steht, L für $C_XH_{2X}$ mit x = 2 und/oder 3 steht, a für eine ganze Zahl von 2 bis 150 steht, d für eine ganze Zahl von 1 bis 150 steht, $R^{19}$ für H oder eine unverzweigte oder verzweigte $C_1$-$C_4$-Alkylgruppe steht, und $R^{20}$ für H oder eine unverzweigte oder verzweigte $C_1$-$C_4$-Alkylgruppe steht; und/oder

(c) mindestens eine Struktureinheit der Formel (IIc), worin $R^{21}$ und $R^{23}$ für H stehen, $R^{22}$ für H oder $CH_3$ steht, A für $C_xH_{2x}$ mit x = 2 und/oder 3 steht, a für eine ganze Zahl von 2 bis 150 steht, und $R^{24}$ für H oder eine unverzweigte oder verzweigte $C_1$-$C_4$-Alkylgruppe steht; und/oder

(d) mindestens eine Struktureinheit der Formel (IId), worin $R^6$ für H steht, Q für O steht, $R^7$ für $(C_nH_{2n})$-O-$(AO)_a$-$R^9$ steht, n für 2 und/oder 3 steht, A für $C_xH_{2x}$ mit x = 2 und/oder 3, a für eine ganze Zahl von 1 bis 150 steht und $R^9$ für H oder eine unverzweigte oder verzweigte $C_1$-$C_4$-Alkylgruppe steht.

30. Additiv nach einer der Ausführungsformen 28 oder 29, wobei das polymere Dispergiermittel mindestens eine Struktureinheit der Formel (IIa) und/oder (IIc) umfasst.

31. Additiv nach einer der Ausführungsformen 1 bis 24, wobei das polymere Dispergiermittel ein Polykondensationsprodukt ist, das Struktureinheiten (III) und (IV) umfasst:

(III)

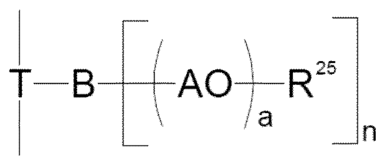

worin

T für einen substituierten oder unsubstituierten Phenyl- oder Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
n für 1 oder 2 steht;
B für N, NH oder O steht, mit der Maßgabe, dass n für 2 steht, wenn B für N steht und der Maßgabe, dass n für 1 steht, wenn B für NH oder O steht;
A für $C_xH_{2x}$ mit x = 2, 3, 4 oder 5 oder $CH_2CH(C_6H_5)$ steht;
a für eine ganze Zahl von 1 bis 300, vorzugsweise 5 bis 150, steht;
$R^{25}$ für H, einen verzweigten oder unverzweigten $C_1$- bis $C_{10}$-Alkylrest, $C_5$- bis $C_8$-Cycloalkylrest, Arylrest, oder Heteroarylrest mit 5 bis 10 Ringatomen, wovon 1 oder 2 Atome Heteroatome sind, die ausgewählt sind unter N, O und S, steht;

wobei die Struktureinheit (IV) ausgewählt ist unter den Struktureinheiten (IVa) und (IVb)

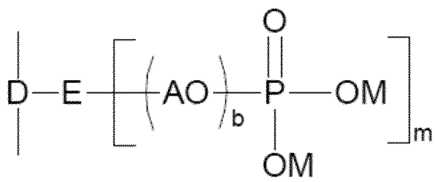
(IVa)

worin

D für einen substituierten oder unsubstituierten Phenyl oder Naphthylrest oderfür einen substituierten oder unsubstituierten heteroaromatischen Rest mit 5 bis 10 Ringatomen, wovon 1 oder 2 Atome Heteroatome sind, die ausgewählt sind unter N, O und S, steht;
E für N, NH oder O steht, mit der Maßgabe, dass m für 2 steht, wenn E für N steht und der Maßgabe, dass m für 1 steht, wenn E für NH oder O steht;
A für $C_XH_{2X}$ mit x = 2, 3, 4 oder 5 oder $CH_2CH(C_6H_5)$ steht;
b für eine ganze Zahl von 1 bis 300, vorzugsweise 1 bis 50, steht;
M unabhängig voneinander für H, ein Kationäquivalent steht; und

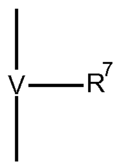
(IVb)

worin

V für einen substituierten oder unsubstituierten Phenyl- oder Naphthylrest steht, wobei V gegebenenfalls durch 1 oder zwei Reste substituiert ist, die unabhängig voneinander ausgewählt sind unter $R^8$, OH, $OR^8$, $(CO)R^8$, COOM, $COOR^8$, $SO_3R^8$ und $NO_2$, vorzugsweise OH, ; $OC_1$-$C_4$-Alkyl und $C_1$-$C_4$-Alkyl;
$R^7$ für COOM, $OCH_2COOM$, $SO_3M$ oder $OPO_3M_2$ steht;
M für H oder ein Kationäquivalent steht; und
$R^8$ für $C_1$-$C_4$-Alkyl, Phenyl, Naphthyl, Phenyl-$C_1$-$C_4$-alkyl oder $C_1$-$C_4$-Alkylphenyl steht.

32. Additiv nach Ausführungsform 31, wobei T für einen substituierten oder unsubstituierten Phenylrest oder Naphthylrest steht, E für NH oder O steht, A für $C_xH_{2x}$ mit x = 2 und/oder 3 steht, a für eine ganze Zahl von 1 bis 150 steht, und $R^{25}$ für H, oder einen verzweigten oder unverzweigten $C_1$- bis $C_{10}$-Alkylrest steht.

33. Additiv nach Ausführungsform 31, wobei D für einen substituierten oder unsubstituierten Phenylrest oder Naphthylrest steht, E für NH oder O steht, A für $C_XH_{2X}$ mit x = 2 und/oder 3 steht, und b für eine ganze Zahl von 1 bis

150 steht.

34. Additiv nach einer der Ausführungsformen 31 bis 33, wobei T und/oder D für Phenyl oder Naphthyl, das durch 1 oder 2 $C_1$-$C_4$-Alkyl-, Hydroxy- oder 2 $C_1$-$C_4$-Alkoxygruppen substituiert ist, stehen.

35. Additiv nach Ausführungsform 31, wobei V für Phenyl oder Naphthyl, das durch 1 oder 2 $C_1$-$C_4$-Alkyl, OH, $OCH_3$ oder COOM substituiert ist, und $R^7$ für COOM oder $OCH_2COOM$ steht.

36. Additiv nach einer der Ausführungsformen 31 bis 35, wobei das Polykondensationsprodukt eine weitere Struktureinheit (V) der Formel

(V) 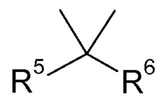

umfasst,
worin
$R^5$ und $R^6$ gleich oder verschieden sein können und für H, $CH_3$, COOH oder eine substituierte oder unsubstituierte Phenyl- oder Naphthylgruppe oder für eine substituierte oder unsubstituierte heteroaromatische Gruppe mit 5 bis 10 Ringatomen, wovon 1 oder 2 Atome Heteroatome sind, die ausgewählt sind unter N, O und S.

37. Additiv nach Ausführungsform 36, worin $R^5$ und $R^6$ gleich oder verschieden sein können und für H, $CH_3$, oder COOH, insbesondere für H oder einer der Reste $R^5$ und $R^6$ für H und der andere für $CH_3$, stehen.

38. Additiv nach einer der Ausführungsformen 1 bis 30, wobei das polymere Dispergiermittel Einheiten der Formeln (I) und (II), insbesondere der Formeln (Ia) und (IIa) aufweist.

39. Additiv nach einer der Ausführungsformen 1 bis 30, wobei das polymere Dispergiermittel Struktureinheiten der Formeln (Ia) und (IIc) aufweist.

40. Additiv nach einer der Ausführungsformen 1 bis 30, wobei das polymere Dispergiermittel Struktureinheiten der Formeln (Ic) und (IIa) aufweist.

41. Additiv nach einer der Ausführungsformen 1 bis 30, wobei das polymere Dispergiermittel Struktureinheiten der Formeln (Ia), (Ic) und (IIa) aufweist.

42. Additiv nach einer der Ausführungsformen 1 bis 30, wobei das polymere Dispergiermittel aufgebaut ist aus (i) anionischen oder anionogenen Struktureinheiten, die abgeleitet sind von Acrylsäure, Methacrylsäure, Maleinsäure, Hydroxyethylacrylatphosphorsäureester, und/oder Hydroxyethylmethacrylatphosphorsäureester, Hydroxyethylacrylat-Phosphorsäurediester , und/oder Hydroxyethylmethacrylat-Phosphorsäurediester und (ii) Polyetherseitenkettenstruktureinheiten, die abgeleitet sind von $C_1$-$C_4$-Alkyl-polyethylenglykolacrylsäureester, Polyethylenglykolacrylsäureester,$C_1$-$C_4$-Alkyl-polyethylenglykolmethacrylsäureester, Polyethylenglykolmethacrylsäureester, $C_1$-$C_4$-Alkyl-polyethylenglykolacrylsäureester, Polyethylenglykolacrylsäureester, Vinyloxy-$C_2$-$C_4$-alkylen-polyethylenglykol, Vinyloxy-$C_2$-$C_4$-alkylen-polyethylenglykol-$C_1$-$C_4$-alkylether, Allyloxy- polyethylenglykol, Allyloxy- polyethylenglykol-$C_1$-$C_4$-alkylether, Methallyloxy- polyethylen-glykol, Methallyloxy- polyethylenglykol-$C_1$-$C_4$-alkylether, Isoprenyloxy- polyethylenglykol und/oder Isoprenyloxy- polyethylenglykol -$C_1$-$C_4$-alkylether

43. Additiv nach Ausführungsformen 42, wobei das polymere Dispergiermittel aufgebaut ist aus Struktureinheiten (i) und (ii), die abgeleitet sind von

(i) Hydroxyethylacrylatphosphorsäureester und/oder Hydroxyethylmethacrylatphosphorsäureester und (ii) $C_1$-$C_4$-Alkyl-polyethylenglykolacrylsäureester und/oder $C_1$-$C_4$-Alkyl-polyethylenglykolmethacrylsäureester; oder

(i) Acrylsäure und/oder Methacrylsäure und (ii) $C_1$-$C_4$-Alkyl-polyethylenglykolacrylsäureester und/oder $C_1$-$C_4$-Alkyl-polyethylenglykolmethacrylsäureester; oder

(i) Acrylsäure Methacrylsäure und/oder Maleinsäure und (ii) Vinyloxy-$C_2$-$C_4$-alkylen-polyethylenglykol, Allyloxy-polyethylenglykol, Methallyloxy- polyethylen-glykol und/oder Isoprenyloxy- polyethylenglykol.

44. Additiv nach Ausführungsform 42, wobei das polymere Dispergiermittel aufgebaut ist aus Struktureinheiten (i) und (ii), die abgeleitet sind von

(i) Hydroxyethylmethacrylatphosphorsäureester und (ii) $C_1$-$C_4$-Alkyl-polyethylenglykolmethacrylsäureester oder Polyethylenglykolmethacrylsäureester; oder

(i) Methacrylsäure und (ii) $C_1$-$C_4$-Alkyl-polyethylenglykolmethacrylsäureester oder Polyethylenglykolmethacrylsäureester ; oder

(i) Acrylsäure und Maleinsäure und (ii) Vinyloxy-$C_2$-$C_4$-alkylen-polyethylenglykol oder

(i) Acrylsäure und Maleinsäure und (ii) Isoprenyloxy-polyethylenglykol oder

(i) Acrylsäure und (ii) Vinyloxy-$C_2$-$C_4$-alkylen-polyethylenglykol oder

(i) Acrylsäure und (ii) Isoprenyloxy-polyethylenglykol oder

(i) Acrylsäure und (ii) Methallyloxy-polyethylenglykol oder

(i) Maleinsäure und (ii) Isoprenyloxy-polyethylenglykol oder

(i) Maleinsäure und (ii) Allyloxy-polyethylenglykol oder

(i) Maleinsäure und (ii) Methallyloxy-polyethylenglykol

45. Additiv nach einer der Ausführungsformen 25 bis 30, wobei das Molverhältnis der Struktureinheiten (I) : (II) 1:4 bis 15:1, insbesondere 1:1 bis 10:1, beträgt.

46. Additiv nach einer der vorhergehenden Ausführungsformen, wobei das Molgewicht der Polyetherseitenketten >2.000 g/mol, bevorzugt >4.000 g/mol ist

47. Additiv nach Ausführungsform 46, wobei das Molgewicht der Polyetherseitenketten im Bereich von 2000-8000 g/mol, insbesondere 4000-6000 g/mol, liegt.

48. Additiv nach einer der vorhergehenden Ausführungsformen, wobei die Ladungsdichte des polymeren Dispergiermittels im Bereich von 0.7 - 1.5 mmol/g, bevorzugt zwischen 0.8 - 1.25 mmol/g liegt.

49. Additiv nach einer der vorhergehenden Ausführungsformen, wobei das Molgewicht des polymeren Dispergiermittels im Bererich von 10.000 g/mol bis 80.000 g/mol, bevorzugt 15.000 g/mol bis 55.000 g/mol liegt.

50. Additiv nach einer der Ausführungsformen 31 bis 37, wobei das Molverhältnis der Struktureinheiten (III) : (IV) 4:1 bis 1:15, insbesondere 2:1 bis 1:10, beträgt.

51. Additiv nach einer der Ausführungsformen 31 bis 37, wobei das Molverhältnis der Struktureinheiten (III + IV) : (V) 2:1 bis 1:3, insbesondere 1:0,8 bis 1:2, beträgt.

52. Additiv nach einer der Ausführungsformen 31 bis 37, oder 50 bis 51, wobei das polymere Dispergiermittel aufgebaut ist aus Struktureinheiten der Formeln (III) und (IV), worin T und D für Phenyl oder Naphthyl steht, wobei das Phenyl oder Naphthyl die gegebenenfalls durch 1 oder 2 $C_1$-$C_4$-Alkyl-, Hydroxy- oder 2 $C_1$-$C_4$-Alkoxygruppen substituiert ist, B und E für O stehen, A für $C_xH_{2x}$ mit x = 2 steht, a für 3 bis 150, insbesondere 10 bis 150, steht, und b für 1, 2 oder 3 steht.

53. Additiv nach einer der vorhergehenden Ausführungsformen, umfassend ein polymeres Dispergiermittel mit Struktureinheiten der oben genannten Formeln (Ia) bis (Id), (IIa) bis (IId) (Polycarboxylatether bzw. Polyphosphatether) oder der Formeln (III) und (IV) (Polykondensat), ein mehrwertiges Metallkation ausgewählt unter $Al^{3+}$, $Fe^{3}$+,

$Fe^{2}$+, $Ca^{2+}$ und Gemischen davon und ein Anion, ausgewählt unter Phosphat, Aluminat, Hydroxid und Gemischen davon.

54. Additiv nach Ausführungsform 53, wobei die Zubereitung umfasst:

a) Polycarboxylatether + $Ca^{2+}$+ Phosphat

b) Polycarboxylatether + $Ca^{2+}$+ Aluminat

c) Polycarboxylatether + $Fe^{3}$

d) Polycarboxylatether + $Fe^{2+}$

e) Polycarboxylatether + $Al^{3+}$

f) Polycarboxylatether + $Al^{3+}$+ Phosphat

g) Polycarboxylatether + $Fe^{3+}$+ Phosphat

h) Polykondensat + $Ca^{2+}$+ Phosphat

i) Polykondensat + $Al^{3+}$

j) Polykondensat + $Al^{3+}$+ Phosphat

k) Polyphosphatether + $Ca^{2+}$

l) Polyphosphatether + $Al^{3+}$

m) Polyphosphatether + $Fe^{3+}$ oder $Fe^{2+}$

n) Polyphosphatether + $Ca^{2+}$+ Phosphat.

55. Additiv nach einer der vorhergehenden Ausführungsformen, dadurch erhältlich, dass man das Salz des mehrwertigen Metallkations in Gegenwart des polymeren Dispergiermittels fällt, um eine kolloid-disperse Zubereitung des Salzes zu erhalten.

56. Additiv nach einer der vorhergehenden Ausführungsformen, dadurch erhältlich, dass man ein frisch gefälltes Salz des mehrwertigen Metallkations in Gegenwart des polymeren Dispergiermittels dispergiert um eine kolloid-disperse Zubereitung des Salzes zu erhalten.

57. Additiv nach Ausführungsform 55 oder 56, wobei man die kolloid-disperse Zubereitung mit einem Neutralisierungsmittel versetzt.

58. Additiv nach einer der Ausführungsformen 1 bis 56, dadurch erhältlich, dass man ein Hydroxid und/oder Oxid des mehrwertigen Metallkations mit einer Säure peptisiert, um eine kolloid-disperse Zubereitung des Salzes des mehrwertigen Metallkations zu erhalten.

59. Additiv nach Ausführungsform 58, wobei die Säure ausgewählt ist unter Borsäure, Kohlensäure, Oxalsäure, Kieselsäure, Schwefelsäure, Polyphosphorsäure, Phosphorsäure und/oder Phosphoriger Säure.

60. Additiv nach einer der vorhergehenden Ausführungsformen, wobei das Verhältnis nach Formel (a) im Bereich von 1,01 bis 30 vorzugsweise 1,01 bis 10, besonders bevorzugt 1,1 bis 8, weiter bevorzugt 1,2 bis 6 und insbesondere 1,25 bis 5, liegt.

61. Additiv nach Ausführungsform 60, wobei das Verhältnis nach Formel (b) im Bereich von 0,01 bis 3, vorzugsweise 0,1 bis 2, besonders bevorzugt 0,2 bis 1,5., liegt.

62. Additiv nach einer der vorhergehenden Ausführungsformen, umfassend eine Zubereitung eines $Al^{3+}$-Salzes.

63. Additiv nach einer der Ausführungsformen 1 bis 61, umfassend eine Zubereitung eines $Fe^{3+}$-Salzes.

64. Additiv nach einer der Ausführungsformen 1 bis 61 oder 63, umfassend eine Zubereitung eines $Fe^{2+}$-Salzes.

65. Additiv nach einer der Ausführungsformen 1 bis 61, umfassend eine Zubereitung eines $Ca^{2+}$-Salzes.

66. Additiv nach einer der Ausführungsformen 5 bis 65, wobei das Anion ausgewählt ist unter Carbonat, Silikat, Phosphat und Aluminat, insbesondere Phosphat.

67. Additiv nach Ausführungsform 66, wobei das Anion Phosphat ist und das Verhältnis nach Formel (b) im Bereich von 0,2 bis 1 liegt.

68. Additiv nach Ausführungsform 66, wobei das Anion Aluminat oder Carbonat ist und das Verhältnis nach Formel (b) im Bereich von 0,2 bis 2 liegt.

69. Additiv nach Ausführungsform 66, wobei das Anion Silikat ist und das Verhältnis nach Formel (b) im Bereich von 0,2 bis 2 liegt.

70. Baustoffmischung, umfassend ein Additiv nach einer der Ausführungsformen 1 bis 69 und ein Bindemittel, ausgewählt unter (Portland)zement, Hüttensand, Flugasche, Silikastaub, Metakaolin, natürlichen Puzzolanen, gebranntem Ölschiefer, Calcium-Aluminat-Zement und Gemischen davon.

71. Baustoffmischung nach Ausführungsform 70, welche als hydraulisches Bindemittel (Portland)zement umfasst.

72. Baustoffmischung nach Ausführungsform 70, welche im wesentlichen keinen (0 bis 5 Gew.-%) Portlandzement umfasst.

Gemäß einer Ausführungsform liegt das Metallkation in einer Menge entsprechend der folgenden Formel (a) vor:

$$1 < \frac{\sum_i z_{K,i} * n_{K,i}}{\sum_j z_{S,j} * n_{S,j}} < 30 \quad \text{(a)}$$

wobei

$z_{K,i}$ für den Betrag der Ladungszahl des mehrwertigen Metallkations steht,
$n_{k,i}$ für die Molzahl des eingewogenen mehrwertigen Metallkations steht,
$z_{s,j}$ für den Betrag der Ladungszahl der im polymeren Dispergiermittel enthaltenen anionischen und anionogenen Gruppe steht,
$z_{s,j}$ für die Molzahl der im eingewogenen polymeren Dispergiermittel enthaltenen anionischen und anionogenen Gruppe steht,

die Indices i und j voneinander unabhängig und eine ganze Zahl größer als 0 sind, i für die Anzahl verschiedenartiger mehrwertiger Metallkationen steht und j für die Anzahl verschiedenartiger im polymeren Dispergiermittel enthaltener anionischer und anionogener Gruppen steht, wobei z so definiert ist, dass die Ladungszahl für Kationen sich stets auf die volle formale Ladung bezieht, d.h. $z_{Fe}(FeCl_3)=3$, $z_{Fe}(FeCl_2)=2$. Weiterhin steht z für den Betrag der formalen Ladung der Anionen bei maximaler Deprotonierung, d.h. $z_{PO4}(H_3PO_4)=z_{PO4}(Na_3PO_4)=3$, oder $z_{CO3}(Na_2CO_3)=2$. Im Fall von Aluminat wird gesetzt $Z_{AlO2}(NaAlO_2)=Z_{AlO2}(NaAl(OH)_4)=1$, im Fall von Silikat wird für alle Silikatspezies gesetzt $z_{SiO3}(Na_2SiO_3)=2$.

Die Summe über das Produkt aus Ladungszahl $z_{s,j}$ und Molzahl $z_{s,j}$ in mmol/g des polymeren Dispergiermittels kann nach verschiedenen bekannten Verfahren bestimmt werden, beispielsweise durch die Bestimmung durch Ladungsdichtetitration mit einem Polykation wie z.B. beschrieben in J. Plank et al., Cem. Conr. Res. 2009, 39, 1-5. Weiterhin ist der mit dem Stand der Technik vertraute Fachmann in der Lage, diesen Wert aus den Monomereinwaagen für die Synthese des polymeren Kammpolymers in einfacher Rechnung zu bestimmen (siehe Rechnung für Beispiel 41). Schließlich ist es möglich den Zahlenwert der Summe über das Produkt aus $z_s$ und $n_s$ experimentell zu erhalten, indem

durch Kernresonanzspektroskopie (NMR) die Verhältnisse der Polymerbausteine bestimmt werden. Dafür nutzt man insbesondere die Integration der Signale im 1H-NMR Spektrum eines Kammpolymers

Das mehrwertige Metallkation ist ausgewählt ist unter $Al^{3+}$, $Fe^{3}$+, $Fe^{2}$+, $Zn^{2+}$, $Mn^{2+}$, $Cu^{2+}$, $Ca^{2+}$, $Mg^{2+}$, $Sr^{2+}$, $Ba^{2+}$ und Gemischen davon, bevorzugt ausgewählt unter $Al^{3+}$, $Fe^{3}$+, $Fe^{2}$+, $Mn^{2+}$, $Zn^{2+}$, $Ca^{2+}$ und Gemischen davon, besonders bevorzugt ausgewählt unter $Al^{3+}$, $Fe^{3}$+, $Fe^{2}$+, $Ca^{2+}$ und Gemischen davon und insbesondere ausgewählt unter $Al^{3+}$, $Fe^{3}$+, $Fe^{2}$+, und Gemischen davon.

Bevorzugt ist das Gegenanion des eingesetzten mehrwertigen Metallkationsalzes so gewählt, dass die Salze gut wasserlöslich sind, bevorzugt ist die Löslichkeit bei Standardbedingungen von 20 °C und Normaldruck größer als 10 g/l, besonders bevorzugt größer als 100 g/l und insbesondere bevorzugt größer als 200 g/l. Der Zahlenwert der Löslichkeit bezieht sich dabei auf das Lösungsgleichgewicht ($MX = M_n^+ + X^{n-}$, wobei $M^{n+}$: Metallkation; $X^{n-}$: Anion) des Reinstoffs des Salzes in deionisiertem Wasser bei 20°C und Normaldruck und berücksichtigt nicht die Effekte durch Protonierungsgleichgewichte (pH-Wert) und Komplexierungsgleichgewichte.

Bevorzugt sind die Anionen Sulfat, oder ein einfach geladenes Gegenanion, bevorzugt ein Nitrat, Acetat, Formiat, Hydrogensulphat, Halogenid, Halogenat, Pseudohalogenid, Methansulfonat und/oder Amidosulfonat. Besonders bevorzugt ist aus der Reihe der Halogenide Chlorid. Zu den Pseudohalogeniden werden gezählt Cyanid, Azid, Cyanat, Thiocyanat, Fulminat. Auch Doppelsalze können als Metallsalz eingesetzt werden. Doppelsalze sind Salze, welche mehrere verschiedene Kationen aufweisen. Beispielhaft genannt sei der Alaun ($KAl(SO_4)_2 \cdot 12H_2O$), welcher als Aluminiumsalz geeignet ist. Die Metallkationsalze mit den vorstehend genannten Gegenanionen sind gut wasserlöslich und damit besonders gut geeignet, da höhere Konzentrationen der wässrigen Metallsalzlösungen (als Edukt) eingestellt werden können.

Als Betrag der Ladungszahl der im polymeren Dispergiermittel enthaltenen anionischen und anionogenen Gruppen ist diejenige Ladungszahl bezeichnet, die bei vollständiger Deprotonierung der anionogenen Gruppe vorliegt.

Anionische Gruppen sind die im polymeren Dispergiermittel enthaltenen deprotonierten Säuregruppen. Anionogene Gruppen sind die im polymeren Dispergiermittel enthaltenen Säuregruppen. Gruppen, die zugleich anionisch und anionogen sind, wie teilweise deprotonierte mehrbasige Säurereste, werden bei der Bildung der Summe der Stoffmengen der im polymeren Dispergiermittel enthaltenen anionischen und anionogenen Gruppen ausschließlich den anionischen Gruppen zugerechnet.

Als verschiedenartige mehrwertige Metallkationen werden mehrwertige Metallkationen unterschiedlicher Elemente bezeichnet. Darüber hinaus werden als verschiedenartige mehrwertige Metallkationen auch Metallkationen desselben Elements mit unterschiedlicher Ladungszahl bezeichnet.

Als verschiedenartig werden anionische und anionogene Gruppen des polymeren Dispergiermittels bezeichnet, die sich durch Protonierung nicht ineinander überführen lassen.

Das Verhältnis nach Formel (a) liegt bevorzugt im Bereich von >1 bis 30 oder 1,01 bis 10. Besonders bevorzugt liegt das Verhältnis im Bereich von 1,01 bis 8 oder 1,1 bis 8 oder 1,01 bis 6 oder 1,1 bis 6 oder 1,2 bis 6 und insbesondere im Bereich von 1,01 bis 5 oder 1,1 bis 5 oder 1,2 bis 5 oder 1,25 bis 5.

Auch wenn eine überstöchiometrische Menge des mehrwertigen Metallkations vorliegt, kann ein Teil der Säuregruppen des polymeren Dispergiermittels als anionogene Gruppen vorliegen.

In einer bevorzugten Ausführungsform umfasst das Additiv für hydraulisch abbindende Massen wenigstens ein Anion, das mit dem mehrwertigen Metallkation ein schwerlösliches Salz zu bilden vermag, wobei mit schwerlöslichem Salz ein Salz bezeichnet ist, dessen Löslichkeit in Wasser bei Standardbedingungen von 20 °C und Normaldruck kleiner als 5 g/l ist, bevorzugt kleiner als 1 g/l ist.

Gemäß einer Ausführungsform ist das Anion ausgewählt unter Carbonat, Oxalat, Silikat, Phosphat, Polyphosphat, Phosphit, Borat, Aluminat und Sulfat. Bevorzugt ist das Anion ausgewählt unter Carbonat, Silikat, Phosphat und Aluminat, besonders bevorzugt ist das Anion Phosphat. Bevorzugt handelt es sich bei der Anionenquelle um eine wasserlösliche Säure oder ein wasserlösliches Salz, wobei mit wasserlöslicher Säure oder wasserlöslichem Salz eine Löslichkeit in Wasser bei Standardbedingungen von 20 °C und Normaldruck mehr als 20 g/l ist, bevorzugt mehr als 100 g/l ist.

Gemäß einer weiteren Ausführungsform liegt das Anion in einer Menge entsprechend der folgenden Formel (b) vor:

$$0 \leq \frac{\sum_l z_{A,l} * n_{A,l}}{\sum_i z_{K,i} * n_{K,i}} < 3 \qquad \text{(b)}$$

wobei

$z_{k,i}$ für den Betrag der Ladungszahl des mehrwertigen Metallkations steht,

$n_{k,i}$ für die Molzahl des eingewogenen mehrwertigen Metallkations steht,
$z_{A,l}$ für die Ladungszahl des eingewogenen Anions steht,
$n_{A,l}$ für die Molzahl des eingewogenen Anions steht.

Das Verhältnis nach Formel (b) liegt bevorzugt im Bereich von 0 bis 3, vorzugsweise 0,1 bis 2, besonders bevorzugt 0,2 bis 1,5. Dabei kann jeder oben genannte Bereich für Formel (a) mit jedem Bereich für Formel (b) kombiniert werden.

Zu den genannten Anionen zählen auch die polymeren Bor-, Silikat-, und Oxalatanionen sowie die Polyphosphate. Unter dem Begriff "polymere Anionen" sind Anionen zu verstehen, welche neben Sauerstoffatomen mindestens zwei Atome aus der Reihe Bor, Kohlenstoff, Silicium und Phosphor umfassen. Besonders bevorzugt handelt es sich um Oligomere mit einer Anzahl von Atomen zwischen 2 und 20, insbesondere bevorzugt 2 bis 14 Atomen, am meisten bevorzugt 2 bis 5 Atomen. Die Anzahl der Atome liegt bei den Silikaten besonders bevorzugt im Bereich von 2 bis 14 Siliciumatomen und bei den Polyphosphaten besonders bevorzugt im Bereich von 2 bis 5 Phosphoratomen.

Bevorzugtes Silikat ist $Na_2SiO_3$ und Wasserglas mit einem Modul, definiert als das Verhältnis von $SiO_2$ zu Alkalioxid, im Bereich von 1 / 1 zu 4 / 1, besonders bevorzugt 1 / 1 zu 3/1.

Bei den Silikaten ist es möglich, dass ein Teil der Siliciumatome der Silikate durch Aluminium ersetzt wird. Aus der Klasse der Aluminosilicate sind entsprechende Verbindungen bekannt. Bevorzugt ist der Anteil von Aluminium kleiner als 10 mol % bezogen auf die Summe von Silicium und Aluminium, besonders bevorzugt ist der Aluminiumanteil gleich null.

Es hat sich als vorteilhaft erwiesen, wenn das Anion Phosphat ist und das Verhältnis nach Formel (b) im Bereich von 0,2 bis 1 liegt.

Es hat sich weiter als vorteilhaft erwiesen, wenn das Anion Aluminat oder Carbonat ist und das Verhältnis nach Formel (b) im Bereich von 0,2 bis 2 liegt.

Es hat sich weiter als vorteilhaft erwiesen, wenn das Anion Silikat ist und das Verhältnis nach Formel (b) im Bereich von 0,2 bis 2 liegt.

Bevorzugt ist das Gegenkation des Anionsalzes, welches mit dem mehrwertigen Metallkation ein schwerlösliches Salz bilden kann, ein einfach geladenes Kation bzw. ein Proton, bevorzugt ein Alkalimetallkation und/oder Ammoniumion. Das Ammoniumion kann auch ein organisches Ammoniumion umfassen, beispielsweise Alkylammoniumionen mit ein bis vier Alkylresten. Der organische Rest kann auch aromatischer Natur sein oder aromatische Reste umfassen. Das Ammoniumion kann auch ein Alkanolammoniumion sein.

Das Additiv für hydraulisch abbindende Massen kann zusätzlich wenigstens ein Neutralisierungsmittel umfassen.

Bevorzugt ist das Neutralisierungsmittel ein organisches Amin, ein Polyamin oder Ammoniak, da diese Neutralisierungmittel die Koagulation von ausfallendem Salz effizienter verhindern. Geeignete organische Amine sind insbesondere ein aliphatisches Monoamin oder aliphatisches Polyamin . Polyamine sind auch Diamine und Triamine.

M steht in den genannten Formeln vorzugsweise für ein Alkalimetallion, insbesondere das Natriumion, 1/2 Erdalkalimetallion (d.h. ein Äquivalent), insbesondere ½ Calciumion, das Ammoniumion, oder ein organisches Ammoniumion, wie ein $C_1$-$C_4$-Alkylamin oder ein Mono-hydroxy-$C_1$-$C_4$-alkylamin.

Das Neutralisierungsmittel ist bevorzugt ausgewählt unter Ammoniak, Mono-hydroxy-$C_1$-$C_4$-alkylaminen, Di-hydroxy-$C_1$-$C_4$-alkylaminen, Tri-hydroxy-$C_1$-$C_4$-alkylaminen, Mono-$C_1$-$C_4$-alkylaminen, Di-$C_1$-$C_4$-alkylaminen, Tri-$C_1$-$C_4$-alkylaminen, $C_1$-$C_4$-Alkylendiaminen, (Tetra-hydroxy-$C_1$-$C_4$-alkyl)- $C_1$-$C_4$-alkylendiaminen, Polyethyleniminen, Polypropyleniminen und Gemischen davon.

Besonders bevorzugt ist das Neutralisierungsmittel ausgewählt unter Ammoniak, Mono-hydroxy-$C_1$-$C_4$-alkylaminen, Di-hydroxy-$C_1$-$C_4$-alkylaminen, Tri-hydroxy-$C_1$-$C_4$-alkylaminen, $C_1$-$C_4$-Alkylendiaminen, und Polyethyleniminen.

Insbesondere bevorzugte Neutralisierungsmittel sind ausgewählt unter Ammoniak, Ethylendiamin, Monoethanolamin, Diethanolamin, Triethanolamin und Polyethyleniminen.

Vorzugsweise weist das Additiv für hydraulisch abbindende Massen einen pH-Wert von 2 bis 11,5, vorzugsweise 5 bis 9, insbesondere 6 bis 8, auf.

Bei den anionischen und anionogenen Gruppen handelt es sich vorzugsweise um Carboxyl-, Carboxylat-, oder Phosphatgruppen, Hydrogenphospat- oder Dihydrogenphosphatgruppen.

In einer Ausführungsform weist das polymere Dispergiermittel zumindest eine Struktureinheit der oben definierten allgemeinen Formeln (Ia), (Ib), (Ic) und/oder (Id) auf, wobei die Struktureinheiten (Ia), (Ib), (Ic) und (Id) sowohl innerhalb einzelner Polymermoleküle, als auch zwischen verschiedenen Polymermolekülen gleich oder verschieden sein können.

Besonders bevorzugt handelt es sich bei der Struktureinheit nach Formel Ia um eine Methacrylsäure- oder Acrylsäure-Einheit, bei der Struktureinheit nach Formel Ic um eine Maleinsäureanhydrid-Einheit und bei der Struktureinheit nach Formel Id um eine Maleinsäure- oder eine Maleinsäuremonoester-Einheit.

Soweit die Monomere (I) Phosphorsäureester oder Phosphonsäureester sind, können sie auch die entsprechenden Di- und Tri-ester sowie den Monoester der Diphosphorsäure umfassen. Diese entstehen im allgemeinen bei der Veresterung von organischen Alkoholen mit Phosphorsäure, Polyphosphorsäure, Phosphoroxiden, Phosphorhalogeniden oder Phosphoroxyhalogeniden bzw. den entsprechenden Phosphonsäureverbindungen neben dem Monoester in unterschiedlichen Anteilen, beispielsweise 5-30 Mol-% Diester und 1-15 Mol-% Triester sowie 2-20 Mol-% des Monoesters der Diphosphorsäure.

In einer Ausführungsform weist das polymere Dispergiermittel zumindest eine Struktureinheit der oben definierten allgemeinen Formeln (IIa), (IIb), (IIc) und/oder (IId) auf. Die allgemeinen Formeln (IIa), (IIb), (IIc) und (IId) können sowohl innerhalb einzelner Polymermoleküle, als auch zwischen verschiedenen Polymermolekülen gleich oder verschieden sein. Alle Struktureinheiten A können sowohl innerhalb einzelner Polyetherseitenketten, als auch zwischen verschiedenen Polyetherseitenketten gleich oder verschieden sein.

Besonders bevorzugt handelt es sich bei der Struktureinheit nach Formel IIa um eine alkoxylierte Isoprenyl-, alkoxylierte Hydroxybutylvinylether-, alkoxylierte (Meth)allylalkohol-, oder um eine vinylierte Methylpolyalkylenglykol-Einheit, jeweils vorzugsweise mit einem arithmetischen Mittel von 2 bis 350 Oxyalkylengruppen.

Gemäß einer Ausführungsform enthält das polymere Dispergiermittel die Struktureinheiten der Formeln (I) und (II). Neben den Struktureinheiten der Formeln (I) und (II) kann das polymere Dispergiermittel auch weitere Struktureinheiten enthalten, die sich von radikalisch polymerisierbaren Monomeren ableiten, wie Hydroxyethyl(meth)acrylat, Hydroxypropyl(meth)acrylat, (Meth)acrylamid, ($C_1$-$C_4$)-alkyl(meth)acrylate, Styrol, Styrolsulfonsäure, 2-Acrylamido-2-methylpropansulfonsäure, (Meth)allylsulfonsäure, Vinylsulfonsäure, Vinylacetat, Acrolein, N-Vinylformamid, Vinylpyrrolidon, (Meth)allylalkohol, Isoprenol, 1-Butylvinylether, Isobutylvinylether, Aminopropyvinylether, Ethylenglykolmonovinylether, 4-Hydroxybutylmonovinylether, (Meth)acrolein, Crotonaldehyd, Dibutylmaleat, Dimethylmaleat, Diethylmaleat, Dipropylmaleat, etc.

Das durch Gelpermeationschromatographie (GPC) bestimmte mittlere Molekulargewicht $M_w$ des Salzes aus mehrwertigem Metallkation und polymerem Dispergiermittel liegt im allgemeinen im Bereich von etwa 15,000 bis etwa 1 000 000.

Das durch Gelpermeationschromatographie (GPC) bestimmte mittlere Molekulargewicht $M_w$ des polymeren Dispergiermittels (Kammpolymer), bevorzugt des wasserlöslichen Kammpolymers, beträgt vorzugsweise 5,000 bis 200,000 g/mol, besonders bevorzugt 10,000 bis 80,000 g/mol, und ganz besonders bevorzugt 15,000 bis 70,000 g/mol. Die Bestimmung des Molekulargewichts erfolgte wie unten näher beschrieben.

Vorzugsweise erfüllt das Kammpolymer die Anforderungen der Industrienorm EN 934-2 (Februar 2002).

Die Herstellung der polymeren Dispergiermittel, welche die Struktureinheiten (I) und (II) enthalten, erfolgt in üblicher Weise, beispielsweise durch radikalische Polymerisation. Sie ist z. B. beschrieben in EP0894811, EP1851256, EP2463314, EP0753488.

In einer Ausführungsform ist das polymere Dispergiermittel ein Polykondensationsprodukt, das die oben definierten Struktureinheiten (III) und (IV) umfasst.

Die Struktureinheiten T und D in den allgemeinen Formeln (III) und (IV) des Polykondensationsprodukts sind vorzugsweise abgeleitet von Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl, Phenoxyessigsäure, Salicylsäure, vorzugsweise von Phenyl, wobei T und D unabhängig voneinander gewählt werden können und auch jeweils von einer Mischung der genannten Reste abgeleitet sein können. Die Gruppen B und E stehen unabhängig voneinander vorzugsweise für O. Alle Struktureinheiten A können sowohl innerhalb einzelner Polyetherseitenketten, als auch zwischen verschiedenen Polyetherseitenketten gleich oder verschieden sein. A steht in einer besonders bevorzugten Ausführungsform für $C_2H_4$.

In der allgemeinen Formel (III) steht a vorzugsweise für eine ganze Zahl von 1 bis 300 und insbesondere 5 bis 150, und in der allgemeinen Formel (IV) steht b vorzugsweise für eine ganze Zahl von 1 bis 300, insbesondere 1 bis 50 und besonders bevorzugt 1 bis 10. Weiterhin können die Reste der allgemeinen Formeln (III) oder (IV) unabhängig voneinander jeweils die gleiche Kettenlänge besitzen, wobei a und b jeweils durch eine Zahl repräsentiert wird. Es wird dabei in der Regel zweckmäßig sein, wenn jeweils Mischungen mit unterschiedlichen Kettenlängen vorliegen, so dass die Reste der Struktureinheiten im Polykondensationsprodukt für a und unabhängig für b unterschiedliche Zahlenwerte aufweisen.

Im allgemeinen weist das erfindungsgemäße Polykondensationsprodukt ein gewichtsmittleres Molekulargewicht von 5.000 g/mol bis 200.000 g/mol, vorzugsweise 10.000 bis 100.000 g/mol und besonders bevorzugt 15.000 bis 55.000 g/mol auf.

Das Molverhältnis der Struktureinheiten (III):(IV) beträgt typischerweise 4:1: bis 1:15 und vorzugsweise 2:1 bis 1:10. Es ist vorteilhaft, über einen relativ hohen Anteil an Struktureinheiten (IV) im Polykondensationsprodukt zu verfügen, da eine verhältnismäßig hohe negative Ladung der Polymere einen guten Einfluss auf die Stabilität der wässrigen kolloiddispersen Zubereitung hat. Das Molverhältnis der Struktureinheiten (IVa):(IVb), wenn beide enthalten sind, beträgt typischerweise 1:10 bis 10:1 und vorzugsweise 1:3 bis 3:1.

In einer bevorzugten Ausführungsform der Erfindung enthält das Polykondensationsprodukt eine weitere Struktureinheit (V), die durch die folgende Formel repräsentiert wird:

(V) 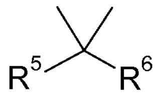

worin

$R^5$ für H, $CH_3$, COOH oder substituiertes oder unsubstituiertes Phenyl oder Naphthyl steht;
$R^6$ H, $CH_3$, COOH oder substituiertes oder unsubstituiertes Phenyl oder Naphthyl.

Vorzugsweise stehen $R^5$ und $R^6$ für H oder einer der Reste $R^5$ und $R^6$ steht für H und der andere für $CH_3$.
Typischerweise sind $R^5$ und $R^6$ in Struktureinheit (V) gleich oder verschieden und stehen für H, COOH und/oder Methyl. Ganz besonders bevorzugt ist H.
In einer anderen Ausführungsform beträgt das Molverhältnis der Struktureinheiten [(III) + (IV)]: (V) im Polykondensat 2:1 bis 1:3, bevorzugt 1:0,8 bis 1:2.
Die Polykondensate werden typischerweise nach einem Verfahren hergestellt, bei dem man die Verbindungen miteinander umsetzt, die den Struktureinheiten (III), (IV) und (V) zugrundeliegen. Die Herstellung der Polykondensate ist beispielsweise beschrieben in WO 2006/042709 und WO 2010/026155.
Vorzugsweise ist das Monomer mit einer Ketogruppe ein Aldehyd oder Keton. Beispiele für Monomere der Formel (V) sind Formaldehyd, Acetaldehyd, Aceton, Glyoxylsäure und/oder Benzaldehyd. Formaldehyd ist bevorzugt.
Das erfindungsgemäße polymere Dispergiermittel kann auch in Form seiner Salze, wie beispielsweise des Natrium-, Kalium-, organischen Ammonium-, Ammonium- und/oder Calciumsalzes, vorzugsweise als Natrium- und/oder Calciumsalz, vorliegen.
Bevorzugt enthält die Zubereitung folgende Kombinationen aus polymerem Dispergiermittel mit Struktureinheiten der oben genannten Formeln (Ia) bis (Id), (IIa) bis (IId) (Polycarboxylatether bzw. Polyphosphatether) sowie der Formeln (III) und (IV) (Polykondensat), Metallkationsalz und ggf. Anionverbindung:

a) Polycarboxylatether + $Ca^{2+}$ + Phosphat
b) Polycarboxylatether + $Ca^{2+}$ + Aluminat
c) Polycarboxylatether + $Fe^{3+}$ + $NH_4OH$
d) Polycarboxylatether + $Fe^{2+}$
e) Polycarboxylatether + $Al^{3+}$
f) Polycarboxylatether + $Al^{3+}$ + Phosphat
g) Polycarboxylatether + $Fe^{3+}$ + Phosphat
h) Polykondensat + $Ca^{2+}$ + Phosphat
i) Polykondensat + $Al^{3+}$
j) Polykondensat + $Al^{3+}$ + Phosphat
k) Polyphosphatether + $Ca^{2+}$
l) Polyphosphatether + $Al^{3+}$
m) Polyphosphatether + $Fe^{3+}$ oder $Fe^{2+}$
n) Polyphosphatether + $Ca^{2+}$ + Phosphat

Bevorzugt enthalten die Additive 50 bis 95 % Wasser und 5 bis 50% Feststoff, besonders bevorzugt 45-85 % Wasser und 15 bis 45% Feststoff. Der Feststoff umfasst dabei das Polymer sowie das erfindungsgemäße mehrwertige Metallkationsalz sowie gegebenenfalls ein weiteres Anionensalz, dessen Anion mit dem mehrwertigen Metallkation ein schwerlösliches Salz bildet,
**[0070]** Das erfindungsgemäße Additiv kann als wässriges Produkt in Form einer Lösung, Emulsion oder Dispersion oder in fester Form, beispielsweise als Pulver, nach einem Trocknungsschritt, vorliegen. Der Wassergehalt des Additivs in fester Form beträgt dann bevorzugt weniger als 10 Gew. %, besonders bevorzugt weniger als 5 Gew. %. Es ist auch möglich, einen Teil des Wassers, vorzugsweise bis zu 10 Gew. %, durch organische Lösungsmittel zu ersetzen. Vorteilhaft sind Alkohole wie Ethanol, (Iso)propanol und 1-Butanol, einschließlich seiner Isomere. Auch Aceton kann verwendet werden. Durch den Einsatz der organischen Lösungsmittel lassen sich die Löslichkeit und damit das Kristallisationsverhalten der erfindungsgemäßen Salze beeinflussen.
Die erfindungsgemäße Zubereitung weist einen Mittelwert der Partikelgrößenverteilung von 10 nm bis 100 μm, bevorzugt 10 nm bis 500 nm, auf, gemessen mit dynamischer Lichtstreuung, siehe Beispielteil.

Die Herstellung der erfindungsgemäßen Additive erfolgt durch Kontaktieren des Salzes des mehrwertigen Metallkations und des polymeren Dispergiermittels in wässrigem Medium, in fester Form oder in einer Polymerschmelze. Vorzugsweise verwendet man ein wasserlösliches Salz des mehrwertigen Metallkations. Das Salz des Metallkations kann in fester Form, zweckmäßig aber als wässrige Lösung oder Suspension bereitgestellt werden. Es ist daher möglich, das Metallkationsalz als Pulver, als wässrige Lösung oder auch als wässrige Aufschlämmung zu einer wässrigen Lösung eines Dispergiermittels zu geben.

Das wasserlösliche Anionsalz kann ebenfalls sowohl in fester Form eingesetzt werden (insitu Herstellung einer Lösung, bzw. Kontaktieren mit der Polymerschmelze), als auch bevorzugt in Form einer wässrigen Lösung verwendet werden.

Ein erfindungsgemäßes Additiv für hydraulisch abbindende Massen kann dadurch erhalten werden, dass man das Salz des mehrwertigen Metallkations in Gegenwart des polymeren Dispergiermittels fällt, wobei man eine kolloid-disperse Zubereitung des Salzes erhält. Mit der Fällung des Salzes des mehrwertigen Metallkations ist hier die Bildung von kolloiddispersen Salzpartikeln bezeichnet, die durch das polymere Dispergiermittel dispergiert werden und deren weitere Koagulation verhindert wird.

Unabhängig davon, ob man das Salz des mehrwertigen Metallkations in Gegenwart des polymeren Dispergiermittels fällt oder ob man ein frisch gefälltes Salz des mehrwertigen Metallkations in Gegenwart des polymeren Dispergiermittels dispergiert, kann das erfindungsgemäße Additiv für hydraulisch abbindende Massen alternativ auch dadurch erhalten werden, dass man die Zubereitung zusätzlich mit einem wie oben beschriebenen Neutralisierungsmittel versetzt.

Ein erfindungsgemäßes Additiv für hydraulisch abbindende Massen kann auch dadurch erhalten werden, dass man ein Hydroxid und/oder Oxid des mehrwertigen Metallkations mit einer Säure behandelt, um eine kolloid-disperse Zubereitung des Salzes des mehrwertigen Metallkations zu erhalten, wobei die Säure vorzugsweise unter Borsäure, Kohlensäure, Oxalsäure, Kieselsäure, Polyphosphorsäure, Phosphorsäure und/oder Phosphoriger Säure ausgewählt ist.

Die Herstellung des Additivs erfolgt im Allgemeinen durch Vermischen der Komponenten, die vorzugsweise als wässrige Lösung vorliegen. Vorzugsweise werden dabei zunächst das polymere Dispergiermittel (Kammpolymer) und das mehrwertige Metallkation vermischt und anschließend wird das Anion, das mit dem mehrwertigen Metallkation ein schwerlösliches Salz zu bilden vermag, zugegeben. Nach einer anderen Ausführungsform werden zunächst das polymere Dispergiermittel (Kammpolymer) und das Anion, das mit dem mehrwertigen Metallkation ein schwerlösliches Salz zu bilden vermag, vermischt und anschließend wird das mehrwertige Metallkation zugegeben. Zur Einstellung des pH-Wertes kann dann eine Säure oder Base zugegeben werden. Das Vermischen der Komponenten erfolgt im Allgemeinen bei einer Temperatur im Bereich von 5 bis 80°C, zweckmäßig 10 bis 40°C und insbesondere bei Raumtemperatur (ca. 20-30°C).

Ein erfindungsgemäßes Additiv für hydraulisch abbindende Massen kann auch dadurch erhalten werden, dass man ein frisch gefälltes Salz des mehrwertigen Metallkations in Gegenwart des polymeren Dispergiermittels dispergiert um eine kolloid-disperse Zubereitung des Salzes zu erhalten. Unter frisch gefällt ist hier unmittelbar im Anschluss an die Fällung, d.h. innerhalb von etwa 5 Minuten, vorzugsweise 2 oder 1 Minute, zu verstehen.

Die Herstellung kann kontinuierlich oder diskontinuierlich erfolgen. Das Vermischen der Komponenten erfolgt im Allgemeinen in einem Reaktor mit mechanischem Rührwerk. Die Rührgeschwindigkeit des Rührwerks kann dabei zwischen 10 rpm und 2000 rpm liegen. Es ist aber auch möglich, die Lösungen mit Hilfe eines Rotor-Stator Mischers zu vermischen, welcher Rührgeschwindigkeiten im Bereich von 1000 bis 30.000 rpm aufweisen kann. Weiterhin können auch andere Mischgeometrien zur Anwendung kommen, wie z.B. ein kontinuierlicher Prozess bei dem die Lösungen über einen Y-Mischer vermischt werden.

Gegebenenfalls kann sich ein weiterer Verfahrensschritt zur Trocknung des anorganisch modifizierten Kammpolymers anschließen. Die Trocknung kann erfolgen durch Walzentrocknung, Sprühtrocknung, Trocknung im Wirbelbettverfahren, durch Substanztrocknung bei erhöhter Temperatur oder sonstige übliche Trocknungsverfahren. Der bevorzugte Bereich der Trocknungstemperatur liegt zwischen 50 und 230 °C.

Das erfindungsgemäße Additiv für hydraulisch abbindende Massen kann als Slump retainer (Slump retainer) in wasserhaltigen Baustoffmischungen, die ein hydraulisches Bindemittel enthalten, verwendet werden, wobei das hydraulische Bindemittel ausgewählt ist unter (Portland)zement, Hüttensand, Flugasche, Silikastaub, Metakaolin, natürlichen Puzzolanen, gebranntem Ölschiefer, Calcium-Aluminat-Zement oder Mischungen zweier oder mehrerer dieser Komponenten.

Unter dem Begriff des Slump retainers ist in dieser Anmeldung zu verstehen, dass die Additive über eine Verarbeitungszeit von bis zu 90 Minuten, bevorzugt bis zu 60 Minuten, nach Vermischen der Baustoffmischung mit Wasser ein möglichst für die Bedingungen des jeweiligen Anwendungsfalls ausreichendes, möglichst hohes und insbesondere über den vorstehend genannten Zeitraum im Wesentlichen nicht abfallendes Setzmaß der Bindemittelsuspension bewirken. Die Additive ermöglichen es, ein für die jeweilige Anwendung maßgeschneidertes Eigenschaftsprofil einzustellen. Außerdem ist es möglich, das Additiv nicht erst bei der Mörtel- oder Betonherstellung sondern bereits bei

der Zementherstellung zuzugeben. Es erfüllt dann gleichzeitig die Funktion eines Mahlhilfsmittels.

Die Betonadditive können zusätzlich zur erfindungsgemäßen kolloid-dispersen Zubereitung aus polymerem Fließmittel, mehrwertigem Metallkation und erfindungsgemäßem Anion noch weitere Komponenten enthalten. Diese weiteren Komponenten umfassen wasserreduzierende Fließmittel wie z.B. Ligninsulfonat, Naphthalinsulfonat Kondensate, sulfonierte Melaminharze, oder konventionelle Polycarboxylatether, sowie Entschäumer, Luftporenbildner, Verzögerer, Schwundreduzierer und/oder Erhärtungsbeschleuniger.

Die Erfindung betrifft auch eine Baustoffmischung, die mindestens ein erfindungsgemäßes Additiv und mindestens ein Bindemittel enthält. Das Bindemittel ist vorzugsweise ausgewählt unter (Portland)zement, Hüttensand, Flugasche, Silikastaub, Metakaolin, natürlichen Puzzolanen, gebranntem Ölschiefer, Calcium-Aluminat-Zement und Gemischen davon. Weiter kann die Baustoffmischung übliche Bestandteile enthalten, wie Härtungsbeschleuniger, Härtungsverzögerer, Clay modifier, Schrumpfreduzierer, Korrosionsinhibitoren, Mittel zur Erhöhung der Festigkeit, Wasserreduzierer etc.

Die Dosierung an erfindungsgemäßem Additiv beträgt im allgemeinen 0.1 bis 4 Gew.-% als Feststoff, und bezogen auf den Zementgehalt der Baustoffmischung. Dabei kann die Dosierung als wässrige kolloid-disperse Zubereitung erfolgen oder als getrockneter Feststoff, z.B. in Form eines Pulvers.

**Beispiele**

**Gelpermeationschromatographie**

Die Probenpräparation für die Molgewichtsbestimmung erfolgte durch Lösen von Polymerlösung im GPC Puffer, so dass die Polymerkonzentration im GPC-Puffer 0.5 Gew.-% beträgt. Danach wurde diese Lösung über einen Spritzenvorsatzfilter mit Polyethersulfonmembran und Porengröße 0.45 µm filtriert. Das Injektionsvolumen dieses Filtrats betrug 50-100 µl.

Die Bestimmung der mittleren Molekulargewichte erfolgte auf einem GPC Gerät der Firma Waters mit dem Typnamen Alliance 2690 mit UV-Detektor (Waters 2487) und RI-Detektor (Waters 2410).

| | |
|---|---|
| Säulen: | Shodex SB-G Guard Column for SB-800 HQ series<br>Shodex OHpak SB 804HQ and 802.5HQ<br>(PHM gel, 8 x 300 mm, pH 4,0 bis 7,5) |
| Eluent: | 0,05 M wässrige Ammoniumformiat / Methanol-Mischung = 80:20 (Volumenteile) |
| Flußrate: | 0,5 ml/min |
| Temperatur: | 50° C |
| Injektion: | 50 bis 100 µl |
| Detektion: | RI und UV |

Die Molekulargewichte der Polymere wurden bestimmt relativ zu Polyethylenglykol Standards der Firma PSS Polymer Standards Service GmbH. Die

Molekulargewichtsverteilungskurven der Polyethylenglykolstandards wurden mittels Lichtstreuung bestimmt. Die Massen der Polyethylenglykolstandards betrugen 682 000, 164 000, 114 000, 57 100, 40 000, 26 100, 22 100, 12 300, 6 240, 3 120, 2 010, 970, 430, 194, 106 g/mol.

**Dynamische Lichtstreuung**

Die Partikelgrößenverteilung wird mit einem Malvern Zetasizer Nano ZS (Malvern Instruments GmbH, Rigipsstr. 19, 71083 Herrenberg) bestimmt. Die zur Messung und Auswertung genutzte Software ist das zum Gerät gehörende Softwarepaket von Malvern.

Das Messprinzip beruht auf dynamischer Lichtstreuung, insbesondere auf nicht-invasiver Rückstreuung. Die gemessene Partikelgrößenverteilung entspricht dem hydrodynamischen Durchmesser $D_h$ des Konglomerats aus Kammpolymer, d.h. Wasserreduzierer und anorganischem Kern bestehend aus erfindungsgemäßen Kationen und erfindungsgemäßen Anionen.

Die Resultate der Messungen sind eine Intensitätsverteilung gegen die Partikelgröße. Aus dieser Verteilung wird durch die Software eine mittlere Partikelgröße bestimmt. Der genutzte Algorithmus ist in der Malvern Software hinterlegt. Die Proben sind nach 1 bis 10 Tagen gemessen worden. Für die Messung werden 0.1 Gew. % Lösungen der Konglomerate aus Wasserreduzierer und erfindungsgemäßem Kation und erfindungsgemäßem Anion verwendet. Als Lösungsmittel wird Milli-Q Wasser, d.h. ultrareines Wasser mit einem Widerstand von 18.2 mΩ cm verwendet. Die Probe wird in eine Einweg Kunststoffküvette eingefüllt und bei einer Temperatur von 25°C vermessen. Dazu werden 10 Läufe / Messung und je 2 Messungen pro Probe durchgeführt. Ausgewertet wurden nur solche Ergebnisse, welche eine

ausreichend hohe Datenqualität aufwiesen, d.h. welche den Standards der Gerätesoftware entsprachen.

**Allgemeine Vorschrift Sprühtrocknung**

Die erfindungsgemäßen Additive können durch Sprühtrocknung in Pulverform überführt werden. Dabei werden die wässrigen Lösungen bzw. Suspensionen der erfindungsgemäßen Additive mit einem Sprühtrockner (z.B. Modell Mobil Minor der Firma GEA Niro) bei einer Eingangstemperatur von etwa 230°C und einer Ausgangstemperatur von etwa 80°C getrocknet. Dafür wurden die wässrigen Lösungen zuvor mit 1 Gew% (bezogen auf den Feststoffgehalt der wässrigen Lösung) einer Mischung aus Additin RC 7135 LD (Antioxidans; Rhein Chemie GmbH) und einem mit Wasser mischbaren Lösungsmittel auf Polyethylenglykolbasis (jeweils 50 Gew%) versetzt. Die erhaltenen Pulver werden mit 1 Gew.% hochdisperser Kieselsäure (N20P, Wacker Chemie AG) versetzt, mit einer Retsch Grindomix RM 200 Mühle für 10s bei 8.000 rpm gemahlen und über ein 500 μm Sieb filtriert.

**Polymersynthese**

Das Kammpolymer P1 basiert auf den Monomeren Maleinsäure, Acrylsäure und Vinyloxybutylpolyethyleneglykol - 5800. Das molare Verhältnis von Acrylsäure zu Maleinsäure beträgt 7. Mw = 40.000 g/mol und wurde über GPC bestimmt. Der Feststoffgehalt beträgt 45 Gew. %. Die Synthese ist zum Beispiel in EP0894811 beschrieben.

Das Kammpolymer P2 liegt als neutrale wässrige Lösung eines Copolymers aus Acrylsäure, Maleinsäure und Vinyloxybutylpolyethyleneglykol-1100 vor. Das molare Verhältnis von Acrylsäure zu Maleinsäure beträgt 6,5. Das Molekulargewicht beträgt Mw 26.000 g/mol und der Feststoffgehalt ist 44%.

Das Kammpolymer P3 ist ein Kondensat aus den Bausteinen PhenolPEG5000 und Phenoxyethanolphosphat. Das Molekulargewicht beträgt 23.000 g/mol. Die Synthese ist beschrieben in DE102004050395. Der Feststoffgehalt ist 31%.

Lupasol FG ist ein kommerzielles Produkt der BASF SE. Es handelt sich um ein Polyethylenimin mit der Molmasse Mw=800 g/mol.

Phosphorsäureesterhaltiges Kammpolymer P4

In einem Glasreaktor, ausgestattet mit Rührer, Thermometer, pH-Elektrode und mehreren Zulaufeinrichtungen, wurden 180 g deionisiertes Wasser vorgelegt und auf eine Polymerisationsstarttemperatur von 80 °C temperiert (Vorlage). In einem separaten Zulaufgefäß wurden 4.669 g einer 25,7% igen wässrigen Methylpolyethylenglykol(5.000)methacrylsäureester Lösung mit 297,6 g Hydroxyethylmethacrylatphosphorsäureester (HEMA - Phosphat) und 190,2 g einer 20%igen NaOH Lösung (entspricht Lösung A) vermischt. In einem weiteren separaten Zulaufgefäß wurden 13,71 g Natriumperoxodisulfat mit 182,1 g Wasser vermischt (Lösung B). In einem dritten Zulauf wurde mit 13,2 g 2-Mercaptoethanol und 39,6 g deionisiertem Wasser eine 25%ige Lösung hergestellt (Lösung C).

Nach Herstellung von Lösung A, B und C wurde zeitgleich mit der Zugabe aller drei Lösungen zur gerührten Vorlage begonnen. Dabei wurden alle Zugaben über einen Zeitraum von 60 Minuten linear in die Vorlage dosiert.

Nach Beendigung der Zugabe wurde die Temperatur für weitere 30 Minuten bei 80°C gelassen, danach ließ man die Lösung abkühlen und es wurde mit 50%iger Natronlauge auf pH 7,3 neutralisiert. Das erhaltene Copolymer fiel als klare Lösung an, die einen Feststoffgehalt von 27,8 % aufwies. Das mittlere Molekulargewicht des Copolymers lag bei Mw 39.000 g/Mol, Mp 34.000 g/Mol und die Polydispersität betrug 1.55.

Polymer P5

In einem Glasreaktor, ausgestattet mit Rührer, Thermometer, pH-Elektrode und mehreren Zulaufeinrichtungen, wurden 510 g deionisiertes Wasser vorgelegt und auf eine Polymerisationsstarttemperatur von 80 °C temperiert (Vorlage). In einem separaten Zulaufgefäß wurden 5010 g einer 47,9% igen aufgereinigten wässrigen Methylpolyethylenglykol(5.000)methacrylsäureester-Lösung (Visiomer MPEG5005-MA-W v. Evonik, enthält neben dem MPEG5000-Methacrylat zusätzlich 60,5g Methacrylsäure (703 mmol)) mit 250,2 g (2909mmol) Methacrylsäure vermischt In einem weiteren separaten Zulaufgefäß wurden 31,99 g Natriumperoxodisulfat mit 424,97 g Wasser vermischt (Lösung B). In einem dritten Zulauf wurde mit 25,0 g 2-Mercaptoethanol und 75,0 g deionisiertem Wasser eine 25%ige Lösung hergestellt (Lösung C).

Nach Herstellung von Lösung A, B und C wurde zeitgleich mit der Zugabe aller drei Lösungen zur gerührten Vorlage begonnen. Dabei wurden alle Zugaben über einen Zeitraum von 60 Minuten linear in die Vorlage dosiert.

Nach Beendigung der Zugabe wurde die Temperatur für weitere 30 Minuten bei 80°C gelassen, wurde die Lösung abgekühlt. Es wurden 6327g klare Lösung mit einen Feststoffgehalt von 42,75 % erhalten. Der Ansatz wurde nicht neutralisiert, sondern in saurer wässriger Form belassen. Das Molekulargewicht lag bei Mw 35.000 g/mol mit einer

Polydispersität von 1.65.

Polymer P6

In einem 2 l Vierhalskolben mit Thermometer, Rückflußkühler und einem Anschluss für zweite Zuläufe wurden 1.000 g Wasser, 700 g Vinyloxybutylpolyethylenglykol (VOBPEG 5800) (120.7 mmol), 0,02 g $FeSO4$, 1, 8 g Mercaptoethanol und 10 g Brüggolit FF06 (Reduktionsmittel auf Sulfinsäurebasis; Brüggemann KG) vorgelegt. Anschließend wurde 47.4 g Acrylsäure (99%, 651.8 mmol) und 5 g 50% $H2O2$ zugegeben. Nach 30 Minuten ist ein pH von 4.3 erreicht und die Polymerlösung hat einen Feststoffgehalt von 43.0 %. Das Molekulargewicht liegt bei 70.000 g/mol.

Beispielhafte Berechnung der Ladungsdichte:

$$\sum_j z_{S,j} \times n_{S,j} \text{ in mmol pro Gramm Polymer } = \frac{\text{n(Molzahl Einwaage Säuremonomere in mmol)} \cdot \text{ Ladungszahl Säuremonomer}}{\text{m(Masse Polymerlösung in g)} \cdot \text{ Feststoffgehalt der Polymerlösung in \%}}$$

Beispielberechnung für Polymer P5 (Einwaagen siehe Polymersynthese)

$$\sum_j z_{S,j} \times n_{S,j} = \frac{(703 \text{ mmol} + 2909 \text{ mmol}) \cdot 1}{(6327\text{g} \cdot 42{,}75\%/100)} = 1{,}335 \text{ mmol / g}$$

Beispielhafte Berechnung für Polymer P6

$$\sum_j z_{S,j} \times n_{S,j} = \frac{(651.8 \text{ mmol}) \cdot 1}{(1764\text{g} \cdot 43\%/100)} = 0{,}859 \text{ mmol / g}$$

Beispielhafte Berechnung von Formel (a) anhand Beispiel 41:

Aus der Einwaagentabelle werden die entsprechenden Massen entnommen: Masse Polymer P5 13,9 g und Masse Aluminiumnitrat Nonahydrat 15,2 g.
somit

$n_K$ = 15,2 g / 375 g/mol = 40,5 mmol,
ns = 13,9 g · 1,335 mmol/g = 18,56 mmol

und

$$\frac{\sum_i z_{K,i} \times n_{K,i}}{\sum_j z_{S,j} \times n_{S,j}} = \frac{40{,}5 \text{ mmol} \cdot 3}{18{,}56 \text{ mmol} \cdot 1} = 6{,}55$$

Tab. 1: Physikalische Daten der Referenzpolymere

| | P1 | P2 | P3 | P4 | P5 | P6 |
|---|---|---|---|---|---|---|
| $\sum_j z_{s,j} \times n_{s,j}$ in mmol pro Gramm Polymer | 0,93 | 1,33 | 0,745 | 1,38 | 1,335 | 0,859 |

(fortgesetzt)

| | P1 | P2 | P3 | P4 | P5 | P6 |
|---|---|---|---|---|---|---|
| Mw (GPC) | 40000 | 26000 | 23000 | 39000 | 35000 | 70000 |
| DLS (Dh , nm) | 11,3 | 8 | 10,3 | 10,7 | 10,4 | 14,7 |

Beispiele zur Herstellung der erfindungsgemäßen Additive

**Vorschrift:**

Die wässrigen Lösungen der Kammpolymere werden mit den erfindungsgemäßen Metallkationsalzen, den erfindungsgemäßen Anionenverbindungen, sowie ggf. einer Base oder Säure zum Anpassen des pH Werts unter Rühren vermischt. Die Vermischung wird in einem bei 20°C temperierten 1l Doppelmantel-Glasreaktor mit Flügelrührer mit 300 U/min durchgeführt. Die Reihenfolge der Zugabe ist in der Tabelle durch einen Buchstabencode angegeben. P steht für die wässrige Lösung des Kammpolymers, K für das erfindungsgemäße Metallkationsalz, A für die erfindungsgemäße Anionverbindung und B bzw. S für Base bzw. Säure. Wenn ein Index angegeben ist, bezieht sich der Index auf die Zugabereihenfolge zweier Komponenten der gleichen Art. Ein Code von $PK_1K_2AB$ bedeutet zum Beispiel, dass das Polymer P vorgelegt wird, anschließend wird Metallkationsalz $K_1$ hinzugegeben, gefolgt von Metallkationsalz $K_2$. Anschließend erfolgt die Zugabe der Anionverbindung A und die Zugabe der Base B. Die Mengen beziehen sich immer auf die Feststoffgehalte. Der finale pH Wert der resultierenden Lösungen bzw. Suspensionen ist ebenfalls angegeben.

Alternative Vorschrift

Die Lösung des Kammpolymers in einen Becher mit Magnetrührer vorgelegt und mit der angegebenen Masse Wasser siehe Tabelle verdünnt. Anschließend wird das erfindungsgemäße Kationensalz (Mengen siehe Tabelle) zugegeben und unter Rühren gelöst. Weiterhin wird das erfindungsgemäße Anion unter Rühren zugegeben. Gegebenenfalls wird mit einer Base der pH-Wert auf den gewünschten Wert eingestellt. Es bilden sich dabei viskose Suspensionen.

Beispiele für erfindungsgemäße Additive sind in den nachfolgenden Tabellen 2 bis 5 zusammengestellt:

Tab. 2

| Zusammensetzung Erdalkalimetall modifizierte Kammpolymere | | | | | | | | | | | | | | |
|---|---|---|---|---|---|---|---|---|---|---|---|---|---|---|
| **Nr.** | **Polymer** | **Metall-Salz** | **Anion-Verb.** | **Base / Säure** | **pH** | **Reihenfolge** | **Wasser (M%)** | **Polymer (M%)** | **Metall-Salz (M%)** | **Anion-Verb. (M%)** | **Base / Säure (M%)** | $\frac{\sum_i z_{K,i} * n_{K,i}}{\sum_j z_{S,j} * n_{S,j}}$ | $\frac{\sum_i z_{A,i} * n_{A,i}}{\sum_i z_{K,i} * n_{K,i}}$ | DLS Dh, nm |
| **1** | P1 | $Ca(NO_3)_2$ | $NaAlO_2$ | HNO3 | 6,6 | PKAS | 70,1 | 21,3 | 4,4 | 2,2 | 2,1 | 2,68 | 0,5 | |
| **2** | P1 | $Ca(NO_3)_2$ | $NaAlO_2$ | HNO3 | 7,0 | KAPS | 70,1 | 21,3 | 4,4 | 2,2 | 2,1 | 2,68 | 1,0 | |
| **3** | P1 | $Ca(NO_3)_22$ | $NaAlO_2$ | HNO3 | 6,6 | PKAS | 68,1 | 20,3 | 4,2 | 4,2 | 3,2 | 2,68 | 1,0 | 118 |
| **4** | P1 | $Ca(NO_3)_2$ | $NaAlO_2$ | HNO3 | 7,6 | PAKS | 68,1 | 20,3 | 4,2 | 4,2 | 3,2 | 2,68 | 1,0 | |
| **5** | P1 | $Ca(NO_3)_2$ | $Na_2CO_3$ | - | 8,2 | PKA | 70,4 | 22,0 | 4,5 | 3,1 | - | 2,68 | 1,07 | 171 |
| **6** | P1 | $Ca(NO_3)_2$ | $H_3PO_4$ | $NH_4OH$ | 6,7 | PKAB | 70,9 | 21,1 | 4,1 | 2,4 | 1,4 | 2,56 | 1,47 | 110 |
| **7** | P1 | $Ca(NO_3)_2$ | $H_3PO_4$ | NaOH | 7,0 | PKAB | 73,6 | 22,7 | 2,6 | 0,5 | 0,8 | 1,48 | 0,45 | 241 |
| **8** | P1 | $Ca(NO_3)_2$ | $H_3PO_4$ | NaOH | 11 | PKAB | 73,6 | 22,7 | 2,6 | 0,5 | 0,8 | 1,48 | 0,45 | |
| **9** | P1 | $Ca(NO_3)_2$ | $H_3PO_4$ | NaOH | 11 | PKAB | 55,2 | 38,2 | 4,3 | 0,8 | 1,1 | 1,48 | 0,45 | |
| **10** | P1 | $Ca(NO_3)_2$ | $H_3PO_4$ | NaOH | 8,8 | PKAB | 72,5 | 21,1 | 4,3 | 0,9 | 1,2 | 2,68 | 0,5 | |
| **11** | P1 | $Ca(NO_3)_2$ | $H_3PO_4$ | NaOH | 7 | PAKB | 72,5 | 21,1 | 4,3 | 0,9 | 1,2 | 2,68 | 0,5 | |
| **12** | P1 | $Ca(NO_3)_2$ | $H_3PO_4$ | NaOH | 7 | KABP | 72,5 | 21,1 | 4,3 | 0,9 | 1,2 | 2,68 | 0,5 | |
| **13** | P1 | $Ca(NO_3)_2$ | $Na_2SiO_3$ | HNO3 | 8 | PKAS | 69,1 | 17,3 | 3,5 | 5,3 | 4,7 | 2,68 | 1,19 | |
| **14** | P1 | $Ca(NO_3)_2$ | $Na_2CO_3$ | - | 7,9 | PKA | 72,7 | 20,5 | 4,2 | 2,7 | - | 2,68 | 1,0 | |
| **15** | P1 | $Ca(NO_3)_2$ | $H_3PO_4$ | NaOH | 9 | PKAB | 72,6 | 21,7 | 4,5 | 0,4 | 0,8 | 2,68 | 0,25 | |
| **16** | P1 | $Ca(NO_3)_2$ | $H_3PO_4$ | NaOH | 11 | PKAB | 73,8 | 22,8 | 2,2 | 0,5 | 0,8 | 1,25 | 0,54 | |
| **17** | P1 | $Ca(NO_3)_2$ | $H_3PO_4$ | NaOH | 11 | PKAB | 73,9 | 22,9 | 1,9 | 0,5 | 0,8 | 1,07 | 0,63 | |
| **18** | P1 | $Ca(NO_3)_2$ | $H_3PO_4$ | NaOH | 11 | PKAB | 72,5 | 21,1 | 4,3 | 0,9 | 1,2 | 2,68 | 0,50 | |
| **19** | P1 | $Ca(NO_3)_2$ | $H_3PO_4$ | NaOH | 11 | PKAB | 72,7 | 22,2 | 3,6 | 0,9 | 0,6 | 2,14 | 0,63 | |
| **20** | P1 | $Ca(NO_3)_2$ | $H_3PO_4$ | NaOH | 11 | PKAB | 71,6 | 22,1 | 5,4 | 0,9 | - | 3,22 | 0,42 | |

(fortgesetzt)

| Nr. | Polymer | Metall-Salz | Anion-Verb. | Base / Säure | pH | Reihenfolge | Wasser (M%) | Polymer (M%) | Metall-Salz (M%) | Anion-Verb. (M%) | Base / Säure (M%) | $\frac{\sum_i z_{K,i} * n_{K,i}}{\sum_j z_{S,j} * n_{S,j}}$ | $\frac{\sum_i z_{A,i} * n_{A,i}}{\sum_i z_{K,i} * n_{K,i}}$ | DLS Dh, nm |
|---|---|---|---|---|---|---|---|---|---|---|---|---|---|---|
| **21** | P1 | $Ca(NO_3)_2$ | $H_3PO_4$ | NaOH | 10 | PKAB | 70,5 | 19,4 | 8,0 | 0,9 | 1,2 | 5,36 | 0,25 | |
| **22** | P1 | $Ca(NO_3)_2$ | $H_3PO_4$ | NaOH | 10 | PKAB | 67,9 | 18,6 | 12,7 | 0,9 | 1,1 | 8,94 | 0,15 | |
| **23** | P1 | $Ca(NO_3)_2$ | $H_3PO_4$ | NaOH | 10 | PKAB | 68,7 | 16,3 | 11,1 | 1,6 | 2,3 | 8,94 | 0,30 | |
| **24** | P4 | $Ca(NO_3)_2$ | $H_3PO_4$ | NaOH | 7,1 | PAKB | 68,7 | 26,1 | 5 | - | 0,2 | 1,63 | 0,58 | |
| **25** | P4 | $Ca(OH)_2$ | $H_3PO_4$ | | 6 | PAK | 60,3 | 3,9 | 3,1 | 1,7 | - | 1,48 | 0,64 | |
| **26** | P4 | $Ca(OH)_2$ | $H_3PO_4$ | | 6,5 | PAK | 61,2 | 33,5 | 3,6 | 1,7 | - | 2,09 | 0,45 | |
| **27** | P1 | $SrCl_2x6H2O$ | $H_3PO_4$ | NaOH | 10 | PKAB | 71,7 | 22,7 | 4,2 | 0,5 | 0,9 | 1,48 | '0,45 | |
| **28** | P1 | $BaCl_2x2H2O$ | $H_3PO_4$ | NaOH | 9 | PKAB | 72,0 | 22,9 | 3,9 | 0,5 | 0,8 | 1,48 | 0,45 | |
| **29** | P4 | $Ca(NO_3)_2$ | $H_3PO_4$ | | 4,6 | PAK | 65,8 | 21,0 | 12,2 | 1,0 | | 5,2 | 0,18 | |
| **30** | P3 | $Ca(NO_3)_2$ | $H_3PO_4$ | NaOH | 8 | PAKB | 66,2 | 29,2 | 3,9 | 0,5 | 0,2 | 2,18 | 0,27 | |

Tab. 3

Zusammensetzung Aluminium modifizierte Kammpolymere

| **Nr.** | **Polymer** | **Metall-Salz** | **Anion-Verb.** | **Base / Säure** | **pH** | **Reihenfolge** | **Wasser (M%)** | **Polymer (M%)** | **Metall-Salz (M%)** | **Anion-Verb. (M%)** | **Base / Säure (M%)** | $\frac{\sum_i z_{K,i} * n_{K,i}}{\sum_j z_{S,j} * n_{S,j}}$ | $\frac{\sum_i z_{A,i} * n_{A,i}}{\sum_i z_{K,i} * n_{K,i}}$ | **DLS Dh, nm** |
|---|---|---|---|---|---|---|---|---|---|---|---|---|---|---|
| **31** | P2 | $Al(NO_3)3x9H_2O$ | | NaOH | 7 | PKB | 70,3 | 20,3 | 7,3 | - | 2,1 | 2,17 | 0 | 45 |
| **32** | P2 | $Al(NO_3)3x9H_2O$ | | NaOH | 2,8 | PK | 69,1 | 22,7 | 8,2 | - | - | 2,17 | 0 | |
| **33** | P1 | $Al(NO_3)3x9H_2O$ | | NaOH | 7,0 | PKB | 70,1 | 20,5 | 7,3 | - | 2,2 | 3,06 | 0 | |
| **34** | P1 | $Al(NO_3)3x9H_2O$ | $H_3PO_4$ | $NH_4OH$ | 7,3 | PKAB | 68,4 | 21,6 | 7,5 | 1,0 | 1,5 | 2,98 | 0,5 | 123 |
| **35** | P1 | $Al(NO_3)3x9H_2O$ | $H_3PO_4$ | $NH_4OH$ | 6,8 | PKAB | 67,7 | 21,2 | 7,4 | 1,9 | 1,8 | 2,98 | 0,99 | >500 |
| **36** | P1 | $Al(NO_3)3x9H_2O$ | $H_3PO_4$ | $NH_4OH$ | 6,9 | PKAB | 64,1 | 20,2 | 12,4 | 1,8 | 1,5 | 8,93 | 0,48 | 126 |
| **37** | P1 | $Al(NO_3)3x9H_2O$ | $H_3PO_4$ | $NH_4OH$ | 5,7 | PKAB | 78,7 | 9,1 | 9,5 | 1,4 | 1,3 | 8,93 | 0,48 | 114 |
| **38** | P1 | $Al_2(SO_4)3x18H_2O$ | $H_3PO_4$ | $NH_4OH$ | 6,5 | PKAB | 64,2 | 19,5 | 12,0 | 1,7 | 2,5 | 5,95 | 0,50 | 178 |
| **39** | P1 | $Al(NO_3)3x9H_2O$ | $Na_2CO_3$ | $NH_4OH$ | 8,2 | PKBA | 72,5 | 14,5 | 10,1 | 1,4 | 1,4 | 5,95 | 0,39 | 85 |
| **40** | P1 | $Al(NO_3)3x9H_2O$ | $Na_2SiO_3$ | $NH_4OH$ | 6,7 | PAKB | 64,0 | 18,0 | 12,5 | 4,1 | 1,4 | 5,95 | 0,1 | 88 |
| **41** | P5 | $Al(NO_3)3x9H_2O$ | $H_3PO_4$ | $NH_4OH$ | 7,8 | PKAB | 64,9 | 13,9 | 15,2 | 2,3 | 3,7 | 6,55 | 0,5 | |
| **42** | P3 | $Al(NO_3)3x9H_2O$ | $H_3PO_4$ | NaOH | 8 | PAKB | 64,5 | 28,6 | 5,5 | 0,5 | 0,9 | 2,07 | 0,28 | |
| **43** | P3 | $Al(NO_3)3x9H_2O$ | $H_3PO_4$ | NaOH | 3 | PKAB | 64,9 | 28,7 | 5,8 | 0,5 | 0,2 | 2,07 | 0,28 | |
| **44** | P4 | $Al(NO_3)3x9H_2O$ | $H_3PO_4$ | NaOH | 6,9 | PAKB | 66,0 | 22,8 | 8,3 | 1,1 | 1,9 | 2,10 | 0,44 | |

Tab. 4

| Zusammensetzung Eisen modifizierte Kammpolymere | | | | | | | | | | | | | |
|---|---|---|---|---|---|---|---|---|---|---|---|---|---|
| **Nr.** | **Polymer** | **Metall-Salz** | **Anion-Verb.** | **Base / Säure** | **pH** | **Reihenfolge** | **Wasser (M%)** | **Polymer (M%)** | **Metall-Salz (M%)** | **Anion-Verb. (M%)** | **Base / Säure (M%)** | $\frac{\sum_i z_{K,i} * n_{K,i}}{\sum_j z_{S,j} * n_{S,j}}$ | $\frac{\sum_i z_{A,i} * n_{A,i}}{\sum_i z_{K,i} * n_{K,i}}$ | **DLS Dh, nm** |
| **45** | **P1** | $Fe_2(SO_4)_3x1H_2O$ | | $NH_4OH$ | 6,6 | **PKB** | 71,5 | 23,2 | 4,4 | - | 0,9 | 2,95 | 0 | 36 |
| **46** | P1 | Fe(NO3)3x9H2O | | $NH_4OH$ | 7,0 | PKB | 68,6 | 22,1 | 8,2 | - | 1,1 | 2,95 | 0 | |
| **47** | P1 | $Fe(SO_4)x7H_2O$ | | $NH_4OH$ | 7 | PKB | 70,5 | 23,4 | 6,0 | - | 0,2 | 1,97 | 0 | |
| **48** | P1 | $Fe_2(SO_4)_3x1H_2O$ | | NaOH | 2,2 | PK | 72,8 | 22,8 | 3,3 | - | 1,1 | 2,2 | 0 | |
| **49** | P2 | $FeCl_3x6H_2O$ | | $NH_4OH$ | 6,4 | PKB | 51,1 | 37,0 | 9,6 | - | 2,3 | 2,17 | 0 | 55 |
| **50** | P1 | $Fe_2(SO_4)_3x1H_2O$ | | Ethylen-diamin | 5 | PKB | 70,8 | 23,6 | 4,5 | - | 1,1 | 2,95 | 0 | |
| **51** | P1 | $Fe_2(SO_4)_3x1H_2O$ | | Ethylen-diamin | 5 | PBK | 70,8 | 23,6 | 4,5 | - | 1,1 | 2,95 | 0 | |
| **52** | P1 | $Fe_2(SO_4)_3x1H_2O$ | | Ethanol-amin | 5 | PKB | 69,8 | 23,3 | 4,5 | - | 2,5 | 2,95 | 0 | |
| **53** | P1 | $Fe_2(SO_4)_3x1H_2O$ | | Lupasol FG | 7 | PKB | 69,4 | 23,1 | 4,4 | - | 3,0 | 2,95 | 0 | |
| **54** | P1 | $Fe_2(SO_4)_3x1H_{2O}$ | $Na_2SiO_3$ | NaOH | 7 | PKAB | 71,3 | 21,6 | 4,1 | 2,2 | 0,7 | 2,95 | 0,18 | |
| **55** | P1 | $Fe(NO_3)_3x9H_2O$ | $H_3PO_4$ | $NH_4OH$ | 7,2 | PKAB | 72,5 | 22,1 | 3,8 | 0,4 | 1,2 | 2,68 | 0,20 | |
| **56** | P1 | $Fe(NO_3)_3x9H_20$ | $H_3PO_4$ | $NH_4OH$ | 7,2 | PKAB | 72,0 | 21,8 | 4,1 | 0,8 | 1,3 | 2,95 | 0,36 | |
| **57** | P4 | $FeCl_3x6H_2O$ | $H_3PO_4$ | $NH_4OH$ | 7,6 | PKB | 66,3 | 25,0 | 6,5 | 1,2 | 1,0 | 2,13 | 0,43 | 48 |
| **58** | P3 | $Fe_2(SO_4)_3x1H_{2O}$ | $H_3PO_4$ | NaOH | 3 | PAKB | 66,1 | 29,3 | 4,1 | 0,5 | 0,1 | 2,70 | 0,22 | |
| **59** | P3 | $Fe_2(SO_4)_3x1H_2O$ | $H_3PO_4$ | NaOH | 8 | PAKB | 65,3 | 28,9 | 4,0 | 0,5 | 1,2 | 2,70 | 0,22 | |
| **60** | P3 | $Fe(SO_4)x7H_2O$ | $H_3PO_4$ | NaOH | 8 | PAKB | 65,9 | 29,1 | 4,3 | 0,5 | 0,2 | 1,41 | 0,41 | |

Tab.5

| Zusammensetzung Zink, Mangan und Kupfer modifizierte Kammpolymere | | | | | | | | | | | | | | |
|---|---|---|---|---|---|---|---|---|---|---|---|---|---|---|
| **Nr.** | **Polymer** | **Metall-Salz** | **Anion-Verb.** | **Base / Säure** | **pH** | **Reihenfolge** | **Wasser (M%)** | **Polymer (M%)** | **Metall-Salz (M%)** | **Anion-Verb. (M%)** | **Base / Säure (M%)** | $\frac{\sum_i z_{K,i} \times n_{K,i}}{\sum_i z_{S,i} \times n_{S,i}}$ | $\frac{\sum_i z_{A,i} * n_{A,i}}{\sum_i z_{K,i} * n_{K,i}}$ | **DLS Dh, nm** |
| **61** | P4 | $Zn(NO_3)_2x6H_2O$ | $H_3PO_4$ | NaOH | 7 | PKB | 63,2 | 21,6 | 12,3 | 1,1 | 1,9 | 2,8 | 0,33 | 245 |
| **62** | P4 | $Zn(NO_3)_2x6H_2O$ | $H_3PO_4$ | NaOH | 7 | PKB | 66,4 | 24,6 | 7,0 | 1,2 | 0,8 | 1,4 | 0,66 | |
| **63** | P3 | $Zn(NO_3)_2x6H_2O$ | $H_3PO_4$ | NaOH | 8 | PAKB | 65,7 | 29,0 | 4,6 | 0,5 | 0,2 | 1,42 | 0,41 | |
| **64** | P3 | $MnSO_4x4H_2O$ | $H_3PO_4$ | | 8 | PAK | 67,1 | 29,7 | 2,7 | 0,5 | 0 | 1,43 | 0,41 | |
| **65** | P3 | CuSO4 | $H_3PO_4$ | $H_2SO_4$ | 3 | PAK | 67,5 | 29,3 | 2,4 | 0,4 | 0,4 | 1,36 | 0,41 | |

Anwendungstests

Mörteltests

Als Mörteltests wurden Standardmörteltests nach DIN EN 1015 mit Mergelstetten CEM I 42.5 R und einem w/z Wert von 0.425 verwendet. Das Gewichtsverhältnis von Sand zu Zement betrug 2.2 zu 1. Es wurde eine Mischung aus 70-Gew.% Normensand (Normensand GmbH, D-59247 Beckum) und 30 Gew.% Quarzsand verwendet. Vor der Austestung im Mörtel wurden die Polymerproben mit 1-Gew.% Triisobutylphosphat bezogen auf den Polymerfeststoffgehalt entschäumt.

Das Ausbreitmaß erhält man, indem der Ausbreittisch, gemäß dem o.g. DIN-Verfahrens, durch 15-maliges Anheben und Aufstoßen erschüttert wird. Die durch das Klopfen auftretenden Scherkräfte bewirken ein weiteres Ausbreiten des Mörtels. Der Durchmesser des Mörtelkuchens nach dem Klopfen wird als Ausbreitmaß bezeichnet.

Die angegebenen Dosierungen beziehen sich immer auf den Feststoffgehalt der eingesetzten Polymersuspensionen, nicht auf den Aktivgehalt an Polymer.

Tab. 6

| Mörtelergebnisse Erdalkalimetalle | | | | | | | | | | |
|---|---|---|---|---|---|---|---|---|---|---|
| Nr. | Polymer | Dosierung % | Ausbreitmaß (cm) | | | | | Delta 30 min, cm | 16h Festigkeit N/mm$^2$ | |
| | | | 4 min | 10 min | 30 min | 60 min | 90 min | | Biege | Druck |
| | P1 | 0,105 | 24,7 | 21,7 | 18,4 | | | | 3,434 | 11,86 |
| | P4 | 0,135 | 25,2 | 24 | 17,8 | | | | 3,63 | 11,89 |
| 3 | P1 | 0,24 | 22,6 | 25,8 | 25,4 | 24,2 | 22,1 | +7,0 | 3,517 | 11,64 |
| 1 | P1 | 0,185 | 26,1 | 25,8 | 23,9 | 20,4 | 18,5 | +5,5 | | |
| 2 | P1 | 0,20 | 20,8 | 23,7 | 24,0 | 22,1 | 20,1 | +5,6 | | |
| 4 | P1 | 0,21 | 23,2 | 25,3 | 24,8 | 24,7 | 22,7 | +6,4 | | |
| 5 | P1 | 0,165 | 26,4 | 26,1 | 24,2 | 23,1 | 19,8 | +5,8 | 2,28 | 9,51 |
| 6 | P1 | 0,24 | 25,6 | 25,7 | 24 | 21,9 | 19,8 | +5,6 | 1,912 | 7,47 |
| 7 | P1 | 0,16 | 25,5 | 25,3 | 23,9 | 23,2 | 21,9 | +5,5 | | |
| 8 | P1 | 0,21 | 23,2 | 23,7 | 24,6 | 24,4 | 22,9 | +6,2 | 3,41 | 11,1 |
| 9 | P1 | 0,22 | 22,5 | 25 | 26,3 | 25,9 | 24,3 | +7,9 | | |
| 10 | P1 | 0,215 | 24,8 | 25,8 | 24,7 | 23,3 | 22,,5 | +6,3 | | |
| 11 | P1 | 0,195 | 23,1 | 24,3 | 23,2 | 22,7 | 21,3 | +4,8 | | |
| 12 | P1 | 0,20 | 24,9 | 23,1 | 21,7 | 20,4 | | +3,3 | | |
| 13 | P1 | 0,205 | 26,4 | 24,6 | 20,6 | 18,3 | - | +2,2 | | |
| 14 | P1 | 0,15 | 25,6 | 25,3 | 23,4 | 20,6 | - | +5,0 | | |
| 15 | P1 | 0,155 | 23,2 | 23,4 | 22,8 | 22,4 | 20,8 | +4,4 | | |
| 21 | P1 | 0,32 | 21,2 | 24 | 26,5 | 26,9 | 26,6 | +6,1 | | |
| 22 | P1 | 0,32 | 19,8 | 22,8 | 24,7 | 25,4 | 25,0 | +6,3 | | |
| 23 | P1 | 0,32 | 19,4 | 21,6 | 23,3 | 23,9 | 23,7 | +4,9 | | |
| 24 | P4 | 0,19 | 26,4 | 27,5 | 26,2 | 24,4 | 23,1 | +8,4 | | |
| 25 | P4 | 0,22 | 23,2 | 22,9 | 22,6 | | | +4,2 | | |
| 26 | P4 | 0,30 | 21,5 | 23,2 | 22,9 | | | +4,5 | | |
| 27 | P1 | 0,18 | 23,7 | 26,1 | 27 | 25,3 | 20,5 | +8,6 | | |
| 28 | P1 | 0,15 | 23,8 | 23,6 | 22,2 | 20,3 | | +3,8 | | |

(fortgesetzt)

| Mörtelergebnisse Erdalkalimetalle | | | | | | | | | | |
|---|---|---|---|---|---|---|---|---|---|---|
| Nr. | Polymer | Dosierung % | Ausbreitmaß (cm) | | | | | Delta 30 min, cm | 16h Festigkeit N/mm$^2$ | |
| 29 | P4 | 0,6 | 23,5 | 22,1 | 21,4 | 22,8 | 23,2 | +3,6 | | |

Tab. 7

| Mörtelergebnisse Aluminium | | | | | | | | | | |
|---|---|---|---|---|---|---|---|---|---|---|
| Nr. | Polymer | Dos. % | Ausbreitmaß (cm) | | | | | Delta, 30 min, cm | 16h Festigkeit N/mm2 | |
| | | | 4 min | 10 min | 30 min | 60 min | 90 min | | Biege | Druck |
| | P1 | 0,105 | 24,7 | 21,7 | 18,4 | | | | 3,434 | 11,86 |
| | P2 | 0,145 | 25,4 | 21,8 | 19,1 | | | | 2,425 | 7,89 |
| | P4 | 0,135 | 25,2 | 24 | 17,8 | | | | 3,63 | 11,89 |
| | P5 | 0,11 | 26,2 | 22 | 18,2 | | | | | |
| 31 | P2 | 0,21 | 24,2 | 22,6 | 20,1 | 18,3 | | +1,0 | | |
| 32 | P2 | 0,22 | 25,3 | 25 | 23,6 | 20,7 | 19,3 | +4,5 | 1,504 | 5,16 |
| 33 | P1 | 0,14 | 24,2 | 22,5 | 19,4 | | | +1,0 | | |
| 34 | P1 | 0,2 | 23,6 | 25,6 | 25,5 | 24,6 | 23,2 | +7,1 | 2,079 | 7,14 |
| 35 | P1 | 0,19 | 26,4 | 26,7 | 25,5 | 22,1 | 19,7 | +7,1 | 2,05 | 8,27 |
| 36 | P1 | 0,30 | 20,8 | 23,0 | 24,5 | 25,5 | 24,0 | +6,1 | 2,189 | 6,87 |
| 37 | P1 | 0,30 | 21,8 | 23,4 | 23,6 | 23,8 | 22,5 | +5,2 | | |
| 38 | P1 | 0,26 | 24,6 | 24,8 | 23,7 | 21,3 | 19,8 | +5,3 | 1,445 | 5,753 |
| 39 | P1 | 0,21 | 24,8 | 25,1 | 24,6 | 22,7 | 20,3 | +6,2 | 3,174 | 11,09 |
| 40 | P1 | 0,215 | 23,3 | 23,9 | 22,4 | 21,5 | 18,6 | +4,0 | 3,576 | 11,972 |
| 41 | P5 | 0,27 | 25,2 | 25,3 | 26,4 | 25,7 | 23,7 | +8,2 | | |
| 44 | P4 | 0,20 | 22,7 | 24,1 | 23,5 | 20,4 | | +6,7 | | |

Tab. 8

| Mörtelergebnisse Eisen | | | | | | | | | | |
|---|---|---|---|---|---|---|---|---|---|---|
| Nr. | Polymer | Dosierung % | Ausbreitmaß (cm) | | | | | Delta 30 min, cm | 16h Festigkeit N/mm2 | |
| | | | 4 min | 10 min | 30 min | 60 min | 90 min | | Biege | Druck |
| | P1 | 0,105 | 24,7 | 21,7 | 18,4 | | | | 3,434 | 11,86 |
| | P2 | 0,145 | 25,4 | 21,8 | 19,1 | | | | 2,425 | 7,89 |
| | P4 | 0,135 | 25,2 | 24 | 17,8 | | | | 3,63 | 11,89 |
| 45 | P1 | 0,18 | 25,9 | 27,1 | 24,9 | 24,5 | 23,2 | +6,5 | 3,077 | 10,812 |
| 46 | P1 | 0,235 | 23,4 | 24,3 | 24,2 | 23,4 | 22,3 | +5,8 | | |
| 47 | P1 | 0,25 | 24,5 | 24 | 24,4 | 23,9 | 22,7 | +6,0 | | |
| 48 | P1 | 0,145 | 24,8 | 24,3 | 24,1 | 22,2 | 21,3 | +5,7 | | |
| 49 | P2 | 0,21 | 26,2 | 25,8 | 23,9 | 22,2 | 21,3 | +4,8 | 1,87 | 6,05 |

(fortgesetzt)

| Mörtelergebnisse Eisen | | | | | | | | | | |
|---|---|---|---|---|---|---|---|---|---|---|
| Nr. | Polymer | Dosierung % | Ausbreitmaß (cm) | | | | | Delta 30 min, cm | 16h Festigkeit N/mm2 | |
| | | | 4 min | 10 min | 30 min | 60 min | 90 min | | Biege | Druck |
| 50 | P1 | 0,220 | 23,4 | 24,1 | 22,2 | 21,6 | | +3,8 | | |
| 51 | P1 | 0,21 | 24,9 | 24,2 | 22,9 | 21,4 | | +4,5 | | |
| 52 | P1 | 0,220 | 23,4 | 23,1 | 22,4 | 21,7 | | +4,0 | 3,35 | 11,87 |
| 53 | P1 | 0,22 | 24,8 | 24,2 | 23,1 | 22,5 | 20,7 | | 3,44 | 12,1 |
| 54 | P1 | 0,110 | 25,4 | 24,3 | 22,4 | 20,6 | | +4,0 | | |
| 55 | P1 | 0,24 | 23,2 | 24,7 | 25,8 | 26,4 | 25,6 | +7,4 | | |
| 56 | P1 | 0,24 | 22,7 | 24,2 | 25,8 | 26,5 | 26,0 | +7,4 | | |
| 57 | P4 | 0,27 | 23,2 | 26,1 | 25 | 25,0 | 26,2 | +7,2 | | |

Tab. 9

| Mörtelergebnisse Zink | | | | | | | | | | |
|---|---|---|---|---|---|---|---|---|---|---|
| Nr. | Polymer | Dosierung % | Ausbreitmaß (cm) | | | | | Delta 30 min, cm | 16h Festigkeit N/mm2 | |
| | | | 4 min | 10 min | 30 min | 60 min | 90 min | | Biege | Druck |
| | P4 | 0,135 | 25,2 | 24 | 17,8 | | | | 3,63 | 11,89 |
| 61 | P4 | 0,25 | 24,8 | 25,9 | 25,6 | 24,8 | 23 | +7,8 | 1,81 | 6,91 |
| 62 | P4 | 0,2 | 25,2 | 26,1 | 24,9 | 24,3 | 22,2 | +7,1 | | |

Wie die Mörtelergebnisse zeigen, weisen die erfindungsgemäß modifizierten Kammpolymere durchweg längere Konsistenzhaltung auf, verglichen mit den unmodifizierten ursprünglichen Kammpolymeren. Zudem liegt die Druckfestigkeit der modifizierten Kammpolymere häufig sehr nah bei den ursprünglichen Kammpolymeren oder ist sogar verbessert (siehe Bsp. 40, 51, 52). Die Mörtel-Festigkeitsentwicklung der erfindungsgemäß modifizierten Kammpolymere ist gegenüber dem üblichen Einsatz von Formulierungen aus Kammpolymer und Zement-Hydratationsverzögerer oder dynamischen Superverflüssigern nach EP 1 136 508 A1 überlegen.

Betontests

Als Betontests wurden Standardbetontests nach DIN EN 12350 mit einem Zement-Gehalt von 380 kg durchgeführt. Die eingestellte Sieblinie entspricht der Klassifizierung A/B 16 gemäß DIN 1045-2.

Bei den verwendeten Zementen handelte es sich um Mergelstetten CEM I 42.5 R mit einem w/z Wert von 0.44, sowie Karlstadt CEM I 42.5 R mit einem w/z Wert von 0.47, sowie Bernburg CEM I 42.5 R mit w/z von 0.46.

Vor der Austestung im Beton wurden die Polymerproben mit 1-Gew.% Triisobutylphosphat bezogen auf den Polymerfeststoffgehalt entschäumt.

Mischprozess

Die getrockneten Zuschläge gemäß Sieblinie und der Zement werden in einen Zwangsmischer vorgelegt und für 10 Sekunden vermischt. Danach wird die Mischung im Zwangsmischer mit 10% des Gesamtwassers angefeuchtet und für weitere 2 Minuten gemischt. Anschließend wird das restliche Wasser zugegeben und es wird für eine weitere Minute gemischt. Schließlich wird das Fliessmittel zugegeben, woraufhin erneut für 1 Minute gemischt wird.

Der Slump-Wert ist ein Maß dafür, wie stark der Betonkuchen nach dem Abheben des Metallkonus kollabiert (Höhendifferenz zwischen der Oberkante des Metallkonus und der Höhe des Betonkuchens nach dem Abziehen der Metallform). Der Slump-flow entspricht dem Basisdurchmesser des Betonkuchens nach dem Zusammensacken.

Das Ausbreitmaß erhält man, indem der Ausbreittisch, gemäß dem vorstehend genannten DIN-Verfahren, durch 15-maliges Anheben und Aufstoßen erschüttert wird. Die durch das Klopfen auftretenden Scherkräfte bewirken ein weiteres Ausbreiten des Betons. Der Durchmesser des Betonkuchens nach dem Klopfen wird als Ausbreitmaß bezeichnet.

Das Polymer P1 ist ein starker Wasserreduzierer, d.h. ein Dispergiermittel mit einer starken Anfangsverflüssigung bei niedriger Dosierung, während die Aufrechterhaltung des Setzmaßes eher niedrig ist.

Die angegebenen Dosierungen beziehen sich immer auf den Feststoffgehalt der eingesetzten Polymersuspensionen, nicht auf den Aktivgehalt an Polymer.

Tabelle 10 : Ergebnisse der Betontests, Zement: Mergelstetten CEM I 42,5 R, w/z = 0.44

| Nr. | Polymer | Dos. % | Luft % | Slump (Setzmaß) in cm | | | | Slump flow (Fließmaß) in cm | | | | Ausbreitmaß in cm | | | | Delta 10 min, cm | Druckfestigkeit | MPa |
|---|---|---|---|---|---|---|---|---|---|---|---|---|---|---|---|---|---|---|
| | | | | 0 min | 10 min | 30 min | 60 min | 0 min | 10 min | 30 min | 60 min | 0 min | 10 min | 30 min | 60 min | | 24h | 28d |
| | P1 | 0.105 | 2.1 | 21 | 4.5 | | | 36 | 20 | | | 56.5 | 38.5 | | | | 18.6 | 71.6 |
| 45 | P1 | 0.18 | 1.75 | 23 | 22.5 | 8.5 | | 48 | 44 | 23.5 | | 61 | 58.5 | 45 | | +20,0 | 21.6 | 76.6 |
| 37 | P1 | 0.35 | 1.40 | 24 | 24 | 23 | 22 | 47 | 51 | 46 | 41 | 59 | 60.5 | 58.5 | 55 | +22,0 | 19.2 | 80.9 |
| 10 | P1 | 0.27 | 1.75 | 23 | 23.5 | 21 | 17 | 39.5 | 45 | 34.5 | 29.5 | 57 | 59.5 | 54 | 49 | +21,0 | 21.15 | 79.2 |

Tabelle 11 : Ergebnisse der Betontests, Zement: Karlstadt CEM I 42,5 R, w/z = 0.47

| Nr. | Fließmittel | Dos. % | Luft % | Slump (Setzmaß) in cm | | | | Slump flow (Fließmaß) in cm | | | | Ausbreitmaß in cm | | | | Delta Ausbreitmaß 30 min, cm | Druckfestigkeit | MPa |
|---|---|---|---|---|---|---|---|---|---|---|---|---|---|---|---|---|---|---|
| | | | | 0 min | 10 min | 30 min | 60 min | 0 min | 10 min | 30 min | 60 min | 0 min | 10 min | 30 min | 60 min | | 24h | 28d |
| | P4 | 0,12 | 1,95 | 22 | 11 | 3,5 | | 35 | 23,5 | 20 | | 56 | 44,5 | 36,5 | | | 21,20 | |
| 25 | P4 | 0,23 | 1,3 | | | | | | | | | 55,5 | 61,5 | 55 | | +18,5 | | |
| 26 | P4 | 0,31 | 1,65 | | | | | | | | | 48 | 58 | 57 | | +20,5 | | |

Tabelle 12: Ergebnisse der Betontests, Zement: Bernburg CEM I 42,5 R, w/z = 0.46

| Nr. | Fließmittel | Dos. % | Luft % | Slump (Setzmaß) in cm | | | | Slump flow (Fließmaß) in cm | | | | Ausbreitmaß in cm | | | | Delta Ausbreitmaß | | Druckfestigkeit MPa | |
|---|---|---|---|---|---|---|---|---|---|---|---|---|---|---|---|---|---|---|---|
| | | | | 0 min | 10 min | 30 min | 60 min | 0 min | 10 min | 30 min | 60 min | 0 min | 10 min | 30 min | 60 min | 10-0 min | 30-0 min | 24h | 28d |
| | P1 | 0,115 | 2,0 | 21,5 | 14 | 3 | | 35 | 26 | 20 | | 58,5 | 48,5 | 34,5 | | | | 27,25 | 62,3 |
| | P2 | 0,15 | 1,9 | 21,0 | 17,0 | 3,5 | | 34,5 | 27,5 | 20,5 | | 58,0 | 50,0 | 37,0 | | | | | |
| | P3 | 0,16 | 2,15 | 21,5 | 17,0 | 2 | | 34,5 | 28,0 | 20 | | 57,5 | 49,5 | 35,0 | | | | | |
| | P4 | 0,125 | 2,0 | 22,0 | 15,0 | 3 | | 36,0 | 26 | 20 | | 59,5 | 49,0 | 35,0 | | | | | |
| | | | | | | | | | | | | | | | | | | | |
| 10 | P1 | 0,32 | 1,4 | 17,5 | 25,5 | 25,5 | 23 | 29,5 | 54 | 53,5 | 39 | 52 | 66 | 65,5 | 58,5 | 17,5 | 31 | 29,1 | 66,3 |
| 62 | P4 | 0,195 | 2,2 | 20,5 | 18,5 | 4 | | 32,5 | 31,5 | 20 | | 56 | 54 | 39,5 | | 5 | 4,5 | 26,45 | |
| 8 | P1 | 0,235 | 1,8 | 17 | 22 | 19,5 | 11,5 | 28 | 38,5 | 32 | 25 | 54,5 | 58 | 55,5 | 46 | 9,5 | 21 | 31,05 | |
| 52 | P1 | 0,245 | 1,9 | 21 | 23 | 14,5 | 5 | 34 | 41 | 26 | 20 | 57 | 60,5 | 49,5 | 40 | 12 | 15 | 31,15 | |
| 16 | P1 | 0,23 | 1,95 | 16 | 23 | 16 | 7,5 | 27,5 | 39,5 | 27,5 | 21 | 52,5 | 58,5 | 50 | 41,5 | 10 | 15,5 | 30,15 | |
| 17 | P1 | 0,20 | 2,3 | 16,5 | 19 | 8 | 2,5 | 28,5 | 31,5 | 31 | 20 | 53 | 53,5 | 42,5 | 36 | 5 | 8 | 29,10 | |
| 3 | P1 | 0,3 | 1,7 | 18 | 24 | 22,5 | 19,5 | 29 | 44,5 | 38 | 31 | 53 | 63 | 59,5 | 53 | 14,5 | 25 | 31,35 | |
| 18 | P1 | 0,3 | 1,6 | 15,5 | 25 | 24,5 | 21,5 | 28,5 | 48,5 | 46 | 35 | 52 | 62,5 | 65,5 | 56,5 | 14 | 31 | 30,4 | |
| 19 | P1 | 0,28 | 1,9 | 16 | 23,5 | 22 | 18 | 28 | 42 | 36 | 30,5 | 51,5 | 62,5 | 59 | 52 | 14 | 24,5 | 29,50 | |
| 20 | P1 | 0,33 | 1,75 | 14,5 | 25 | 24,5 | 22,5 | 27,5 | 49 | 49 | 37,5 | 52,5 | 65 | 64 | 58,5 | 16,5 | 29,5 | 28,95 | |
| 42 | P3 | 0,25 | 2,15 | 20,5 | 17,0 | 5,5 | | 32,5 | 29,0 | 20,5 | | 53,5 | 50,5 | 39,5 | | 1 | 4,5 | 26,2 | |
| 43 | P3 | 0,25 | 1,80 | 19,0 | 23,5 | 15,5 | 7,0 | 31,0 | 41,0 | 28,0 | 21,0 | 54,0 | 62,0 | 49,5 | 39,5 | 12,5 | 14,5 | 27,45 | |
| 60 | P3 | 0,4 | 1,80 | 29,5 | 42,0 | 35,5 | 29,0 | 17,5 | 24,0 | 22,0 | 16,0 | 53,0 | 61,5 | 56,5 | 49,5 | 12 | 21,5 | 26,45 | |
| 59 | P2 | 0,24 | 2,20 | 18,5 | 21,0 | 8,0 | 3,0 | 31,0 | 33,0 | 22,0 | 20,0 | 53,5 | 54,0 | 41,5 | 36,5 | 4 | 4,5 | 27,90 | |
| 58 | P3 | 0,27 | 2,05 | 17,0 | 22,0 | 14,5 | 6,5 | 28,0 | 35,5 | 27,5 | 21,5 | 50,0 | 55,5 | 47,0 | 40,0 | 6 | 12,0 | 29,05 | |
| 30 | P3 | 0,70 | 1,90 | 6,5 | 13,5 | 21,0 | 22,5 | 21,5 | 26,5 | 33,0 | 37,0 | 41,0 | 46,5 | 53,0 | 55,5 | -3 | 18,0 | 27,55 | |
| 63 | P3 | 0,5 | 1,85 | 9,0 | 12,5 | 13,0 | 10,5 | 22,0 | 26,0 | 26,0 | 24,0 | 42,5 | 46,0 | 46,0 | 43,5 | -3,5 | 11,0 | 23,20 | |
| 64 | P3 | 0,5 | 1,85 | 18,5 | 23,0 | 18,5 | 13,0 | 29,5 | 42,0 | 29,5 | 25,5 | 54,5 | 62,5 | 54,0 | 45,5 | 13 | 19,0 | 26,20 | |
| 65 | P3 | 0,205 | 1,90 | 22,0 | 23,0 | 15,0 | 4,5 | 34,0 | 38,0 | 26,0 | 20,0 | 59,0 | 59,0 | 48,0 | 37,5 | 9,5 | 13,0 | | |

Die Betonfestigkeiten nach 24h der erfindungsgemäß modifizierten Kammpolymere ist für das Polymer P1 in allen Fällen besser als die Referenz. Dies belegt die hervorragende Eignung der erfindungsgemäßen Zubereitungen als Slump Retainer mit sehr guter Frühfestigkeitsentwicklung.

Man erkennt deutlich aus den Betonsetzmaß- und Betonfließmaßdaten, dass die erfindungsgemäßen Additive deutliche Vorteile haben, was die Konsistenzhaltung betrifft. Das bedeutet, dass die Anfangsdosierung etwas höher ist, dafür aber zu späteren Zeitpunkten (z.B. nach 60 Minuten) eine deutlich verbesserte Fließfahigkeit im Vergleich zu den nicht modifizierten Fließmitteln erhalten wird. Dies geht einher mit Frühfestigkeiten (24h) und Endfestigkeiten (28d), die höher sind als diejenigen der unmodifizierten Fließmittel. Insgesamt bewirken die erfindungsgemäßen Additive eine deutlich verlängerte Konsistenzhaltung des Betons durch die erfindungsgemäß modifizierten Fließmittel, sowie erhöhte Früh- und Endfestigkeiten des Betons.

Wenn man aus den Angaben in den Einwaage-Tabellen den Gehalt an polymerem Dispergiermittel errechnet, wird es weiterhin möglich, die reinen Polymerdosierungen zu vergleichen. Das bedeutet, dass z.B. die Feststoffdosierung aus Beispiel 18 in Bernburg Zement Beton von 0.3% sich in eine Polymerdosierung von 0.23% umrechnen lässt.

Tab. 13: Erdalkalihydroxid (kolloiddispers durch Neutralisation)

| Nr. | Polymer | Metall-Salze | Anion-Verb. | Base / Säure | pH | Reihenfolge | Wasser (M%) | Polymer (M%) | MetallSalz 1 (M%) | Säure (M%) | Anion-Verb. (M%) | Base (M%) | $\frac{\sum_i z_{K,i} * n_{K,i}}{\sum_j z_{S,j} * n_{S,j}}$ | $\frac{\sum_l z_{A,l} * n_{A,l}}{\sum_j z_{K,j} * n_{K,j}}$ |
|---|---|---|---|---|---|---|---|---|---|---|---|---|---|---|
| **66** | P6 | $Ca(OH)_2$ | $H_3PO_4$ | NaOH | 10,0 | $PK_1SAB$ | 78,24 | 14,71 | 1,46 | 3,68[1)] | 0,64 | 1,27 | 3,12 | 0,5 |
| **67** | P6 | $Ca(OH)_2$ | $H_3PO_4$ | NaOH | 9,5 | $PK_1SAB$ | 82,03 | 8,76 | 2,31 | 5,75[1)] | 0,38 | 0,77 | 8,33 | 0,19 |
| **68** | P6 | $Ca(OH)_2$ | $H_3PO_4$ | NaOH | 10,13 | $PK_1SAB$ | 81,1 | 10,3 | 2,0 | 5,3[1)] | 0,4 | 0,9 | 6,25 | 0,25 |
| **69** | P6 | $Ca(OH)_2$ | $H_3PO_4$ | NaOH | 9,3 | $PK_1SAB$ | 73,0 | 18,0 | 1,8 | 5,7[2)] | 0,8 | 0,8 | 3,12 | 0,5 |
| **70** | P6 | $Ca(OH)_2$ | $H_3PO_4$ | NaOH | 10,3 | $PK_1SAB$ | 75,0 | 17,4 | 1,7 | 3,3[2)] | 0,8 | 1,9 | 3,12 | 0,5 |
| **71** | P6 | $Ca(OH)_2$ | $H_3PO$ | NaOH | 10,2 | PK1SAB | 75,7 | 18,3 | 1,8 | 2,2[2)] | 0,8 | 1,2 | 3,12 | 0,5 |
| **72** | P6 | $Ca(OH)_2$ | $H_3PO_4$ | NaOH | 10,0 | $PK_1SAB$ | 77,1 | 16,6 | 1,6 | 3,2[1)] | 0,7 | 0,7 | 3,12 | 0,5 |
| **73** | P1 | $Ca(OH)_2$ | $H_3PO_4$ | NaOH | 9,4 | $PK_1SAB$ | 76,7 | 16,3 | 1,5 | 3,9[1)] | 0,7 | 1,0 | 2,68 | 0,5 |
| **74** | P1 | $Ca(OH)_2$ | $H_3PO_4$ | NaOH | 9,35 | $PK_1SAB$ | 73,5 | 21,7 | 1,0 | 2,6[1)] | 0,4 | 0,8 | 1,34 | 0,5 |
| **75** | P1 | $Ca(OH)_2$ | $H_3PO_4$ | NaOH | 9,7 | $PK_1SAB$ | 66,8 | 28,5 | 1,3 | 1,6[3)] | 0,6 | 1,2 | 1,34 | 0,5 |

1) Amidosulfonsäure
2) Essigsäure
3) Ameisensäure

Tabelle 14: Ergebnisse der Mörteltests Zement: Bernburg CEM I 42,5 R, w/z = 0.42

| Nr. | Polymer | Dosierung % | Ausbreitmaß (cm) | | | | | Delta (30 min, cm) |
|---|---|---|---|---|---|---|---|---|
| | | | 4 min | 10 min | 30 min | 60 min | 90 min | |
| | P6 | 0,13 | 25,6 | 21,0 | 18,1 | | | |
| 66 | P6 | 0,32 | 25,8 | 27,8 | 27,9 | 27,3 | 25,8 | +6,8 |
| 67 | P6 | 0,35 | 26 | 28,1 | 28,3 | 27,8 | 27,4 | +7,1 |
| 68 | P6 | 0,32 | 25,8 | 27,7 | 27,9 | 27,3 | 25,8 | +6,7 |
| 70 | P6 | 0,28 | 23,3 | 25,8 | 25,9 | 25,2 | 23,9 | +4,8 |
| 71 | P6 | 0,28 | 21,7 | 24,2 | 24,2 | 24,1 | 23,3 | +3,2 |
| 72 | P6 | 0,26 | 24,1 | 26,7 | 27,7 | 26,7 | 25,1 | +5,7 |

Tabelle 15: Gemischte Metallsalze und Anionen

| Nr. | Polymer | Metall-Salze K1/K2 | Anion-Verb. | Base / Säure | pH | Reihenfolge | Wasser (M%) | Polymer (M%) | Metall-Salz 1 (M%) | Metall-Salz 2 (M%) | Anion-Verb. 1 (M%) | Anion-Verb. 2 (M%) | Base / Säure (M%) | $\frac{\sum_i z_{K,i} * n_{K,i}}{\sum_j z_{S,j} * n_{S,j}}$ | $\frac{\sum_l z_{A,l} * n_{A,l}}{\sum_j z_{K,j} * n_{K,j}}$ |
|---|---|---|---|---|---|---|---|---|---|---|---|---|---|---|---|
| **76** | P1 | $Ca(NO_3)_2/Mg(NO_3)_2$ | $H_9PO_4$ | NaOH | 10,0 | $PK_1K_2AB$ | 73,3 | 22,4 | 2,3 | 0,7 | 0,5 | 0 | 0,8 | 1,79 | 0,38 |
| **77** | P1 | $Ca(NO_3)_2/Al(NO_3)_3$ | $H_3PO_4$ | NaOH | 9,5 | $PK_1K_2AB$ | 73,3 | 21,3 | 1,5 | 1,9 | 0,4 | 0 | 1,7 | 2,23 | 0,3 |
| **78** | P 1 | $Ca(NO_3)_2/Al(NO_3)_3$ | $H_3PO_4$ | NaOH | 9,4 | $PK_1A_1K_2A_1B$ | 73,3 | 21,3 | 1,5 | 1,9 | 0,2 $A_1$+0,2 $A_1$ | 0 | 1,7 | 2,23 | 0,3 |
| **79** | P1 | $Ca(NO_3)_2/Al(NO_3)_3$ | $H_3PO_4$ | NaOH | 9,11 | $PK_2A_1K_1A_1B$ | 73,3 | 21,3 | 1,5 | 1,9 | 0,2 $A_1$+0,2 $A_1$ | 0 | 1,7 | 2,23 | 0,3 |
| **80** | P1 | $Ca(NO_3)_2$ | $H_3PO_4/NaAlO_2$ | NaOH | 8,3 | $PKA_1A_2B$ | 72,1 | 21,5 | 4,4 | 0 | 0,9 | 0,4 | 0,8 | 2,68 | 0,58 |
| **81** | P1 | $Ca(NO_3)_2$ | $H_3PO_4/Na_2SiO_3$ | NaOH | 8,9 | $PKA_1A_2B$ | 72,4 | 21,8 | 4,5 | 0 | 0,4 | 0,4 | 0,5 | 2,68 | 0,42 |
| **82** | P1 | $Ca(NO_3)_2$ | $H_3PO_4/Na_2CO_3$ | NaOH | 8 | $PKA_1A_2B$ | 72,2 | 21,8 | 4,5 | 0 | 0,4 | 0,5 | 0,6 | 2,68 | 0,42 |
| **83** | P1 | $Ca(NO_3)_2$ | $Na_2SiO_3/NaAlO_2$ | NaOH | 10 | $PKA_1A_2B$ | 71,0 | 22,1 | 4,5 | 0 | 1,0 | 1,1 | 0,3 | 2,68 | 0,42 |

Tabelle 16: Ergebnisse der Mörteltests Zement: Bernburg CEM I 42,5 R, w/z = 0.42

| Nr. | Polymer | Dosierung % | Ausbreitmaß (cm) | | | | | Delta 30 min, cm |
|---|---|---|---|---|---|---|---|---|
| | | | 4 min | 10 min | 30 min | 60 min | 90 min | |
| | P1 | 0,105 | 24,7 | 21,7 | 18,4 | | | |
| 76 | P1 | 0,2 | 23,5 | 22 | 20,8 | 19,9 | | +2,4 |
| 77 | P1 | 0,22 | 23,4 | 27,1 | 28,0 | 27 | 24,9 | +9,6 |
| 78 | P1 | 0,22 | 24,4 | 27,4 | 28,4 | 25,2 | 22,8 | +10,0 |
| 79 | P1 | 0,22 | 28,5 | 27,2 | 26,7 | 25,1 | | +8,3 |
| 80 | P1 | 0,25 | 24,5 | 25,5 | 25,6 | 24,4 | 23,2 | +7,2 |
| 81 | P1 | 0,25 | 24,2 | 28,5 | 28,6 | 26,9 | 25,4 | +10,2 |
| 82 | P1 | 0,25 | 25,0 | 27,5 | 29,1 | 29,4 | 27,3 | +10,7 |
| 83 | P1 | 0,25 | 19,2 | 22,2 | 26 | 26,5 | 25,4 | +7,6 |

Tabelle 17: Pulverförmige Zubereitungen

| Nr. | Polymer | Metall-Salze | Anion-Verb. | Base / Säure | pH | Reihenfolge | Wasser M% | Polymer (M%) | Metall-Salz 1 (M%) | Säure (M%) | Anion-Verb. (M%) | Base (M%) | $\frac{\sum_i z_{K,i} * n_{K,i}}{\sum_j z_{S,j} * n_{S,j}}$ | $\frac{\sum_l z_{A,l} * n_{A,l}}{\sum_j z_{K,j} * n_{K,j}}$ |
|---|---|---|---|---|---|---|---|---|---|---|---|---|---|---|
| **84** | P1 | Ca(NH2SO3)2 | H3PO4 | NaOH | 9,2 | PKAB | | 72,0 | 20,9 | | 2,9 | 4,2 | 2,68 | 0,5 |
| **85** | P1 | Ca(NH2SO3)2 | H3PO4 | NaOH | 10,3 | PKAB | | 83,4 | 12,1 | | 1,7 | 2,8 | 1,34 | 0,5 |
| **86** | P1 | Ca(NH2SO3)2 | H3PO4 | NaOH | 9,6 | PKAB | | 84,9 | 12,3 | | 0,9 | 1,9 | 1,34 | 0,25 |
| **87** | P1 | Ca(NH2SO3)2 | H3PO4 | NaOH | 9,6 | PKAB | | 86,8 | 8,4 | | 1,8 | 3,0 | 0,89 | 0,75 |
| **88** | P1 | Ca(OH)2 | H3PO4 | NaOH | 9,35 | PK1SAB | | 81,9 | 3,8 | 9,7[1)] | 1,7 | 2,9 | 1,34 | 0,5 |
| **89** | P1 | Ca(OH)2 | H3PO4 | NaOH | | | | 85,9 | 4,0 | 4,9[2)] | 1,8 | 3,5 | 1,34 | 0,5 |
| **90** | P1 | Ca(OH)2 | H3PO4 | NaOH | 9,40 | PKSAB | | 69,9 | 6,5 | 16,6 | 2,9 | 4,1 | 2,68 | 0,5 |

1) Amidosulfonsäure
2) Ameisensäure

Die Herstellung der Mörtel erfolgte in Anlehnung an DIN EN 196-1:2005 in einem Mörtelmischer mit einem Fassungsvermögen von rd. 5 l. Zum Anmischen wurden Wasser und Zement in den Mischbehälter gegeben. Unmittelbar danach wurde der Mischvorgang mit niedriger Geschwindigkeit der Wirblers (140 U/min) gestartet. Nach 30 s wurde der Sand gleichmäßig innerhalb von 30 s der Mischung zugegeben. Danach wurde der Mischer auf eine höhere Geschwindigkeit umgeschaltet (285 U/min) und das Mischen für weitere 30 s fortgesetzt. Anschließend wurde der Mischer für 90 s angehalten. Während der ersten 30 s wurde der Mörtel, der an der Wand und am unteren Teil der Schüssel klebte, mit einem Gummischrapper entfernt und in die Mitte der Schüssel gegeben. Nach der Pause wurde der Mörtel für weitere 60 s bei der höheren Mischgeschwindigkeit gemischt. Die Gesamtmischzeit betrug 4 min.

Unmittelbar nach dem Ende des Mischvorgangs wurde von allen Mörteln das Fließmaß mit dem Hägermann-Konus ohne Zuführung von Verdichtungsenergie in Anlehnung an die SVB-Richtlinie des Deutschen Ausschusses für Stahlbeton bestimmt. Der Hägermann-Konus (doben = 70 mm, dunten = 100 mm, h = 60 mm) wurde mittig auf einer trockenen Glasplatte mit einem Durchmesser von 400 mm platziert und bis zur vorgesehenen Höhe mit Mörtel befüllt. Unmittelbar nach dem Ausnivellieren bzw. 5 min nach dem ersten Kontakt von Zement und Wasser wurde der Hägermann-Konus abgezogen, zum Abtropfen 30 s über dem auseinander fließenden Mörtel gehalten und dann entfernt. Sobald das Fließmaß zum Stillstand kam, wurde der Durchmesser mit einem Messschieber an zwei rechtwinklig zueinander liegenden Achsen bestimmt und der Mittelwert berechnet. Es wurde ein Ausbreitmaßtisch mit einem Durchmesser von 40 cm verwendet.

Wenn das Polymer als flüssige Zubereitung zugegeben wird, so wird es dem Anmachwasser zugesetzt, bevor der Mörtel mit Wasser vermischt wird. Wenn das Polymer als Pulver zugegeben wird, so wird das Polymerpulver mit dem Zement vermischt, bevor das Anmachwasser zugegeben wird.

Tabelle 18: Pulver getestet in Milke CEM I 52.5 N Mörtel, w/c 0.35, s/c 1.5, eingestellt auf 28 cm Ausgangsausbreitmaß

| Nr. | Form | Polymer | Dosierung % | Ausbreitmaß (cm) | | | | | Delta 120 min, cm |
|---|---|---|---|---|---|---|---|---|---|
| | | | | 4 min | 10 min | 30 min | 60 min | 120 min | |
| | | P1 flüssig | 0.145 | 28.5 | 27.0 | 21.2 | 18.9 | 16.5 | |
| 84 | Pulver | P1 | 0,26 | 21.4 | 22.8 | 22.5 | 25.4 | 27.8 | +11,3 |
| 85 | Pulver | P1 | 0,22 | 27.3 | 27.5 | 25.6 | 26.8 | 27.5 | +11,0 |
| 86 | Pulver | P1 | 0,18 | 28.6 | 27.6 | 22.8 | 21.7 | 19.8 | +3,3 |
| 87 | Pulver | P1 | 0,19 | 27.4 | 25.9 | 20.8 | 20.1 | 19.7 | +3,2 |
| 88 | Pulver | P1 | 0,23 | 28.5 | 29.2 | 26.3 | 28.2 | 28.8 | +12,3 |
| 90 | Pulver | P1 | 0,31 | 27.1 | 28.9 | 28.4 | 31.6 | 33.4 | +16,9 |
| 73 | Flüssig | P1 | 0,32 | 28.0 | 30.9 | 31.3 | 38.0 | 36.5 | +20,0 |
| 89 | Pulver | P1 | 0,21 | 28.3 | 28.3 | 26.1 | 27.1 | 27.9 | +11,4 |
| 66 | Flüssig | P6 | 0,28 | 27.9 | 29.1 | 25.6 | 27.3 | 27.9 | +11,4 |
| 68 | Flüssig | P6 | 0,34 | 28.6 | 30.1 | 28.4 | 30.9 | 31.7 | +15,2 |
| 67 | Flüssig | P6 | 0,37 | 27.9 | 30.3 | 28.0 | 30.0 | 30.8 | +14,3 |
| 69 | Flüssig | P6 | 0,29 | 27.1 | 28.1 | 22.8 | 22.5 | 23.4 | +6,9 |

**Patentansprüche**

**1.** Additiv für hydraulisch abbindende Massen, umfassend eine wässrige kolloid-disperse Zubereitung wenigstens eines Salzes eines mehrwertigen Metallkations und wenigstens eines polymeren Dispergiermittels, das anionische und/oder anionogene Gruppen und Polyetherseitenketten umfasst,
wobei das mehrwertige Metallkation ausgewählt ist unter $Al^{3+}$, $Fe^{3+}$, $Fe^{2+}$, $Zn^{2+}$, $Mn^{2+}$, $Cu^{2+}$, $Mg^{2+}$, $Ca^{2+}$, $Sr^{2+}$, $Ba^{2+}$ und Gemischen davon, und wobei das Metallkation in solcher Menge vorliegt, dass das folgende Verhältnis (a) größer als 1 und kleiner als 30 ist:

$$1 < \frac{\sum_i z_{K,i} * n_{K,i}}{\sum_j z_{S,j} * n_{S,j}} < 30 \quad (a)$$

wobei

$z_{K,i}$ für den Betrag der Ladungszahl des mehrwertigen Metallkations steht,
$n_{K,i}$ für die Molzahl des eingewogenen mehrwertigen Metallkations steht,
$z_{s,,j}$ für den Betrag der Ladungszahl der im polymeren Dispergiermittel enthaltenen anionischen und anionogenen Gruppe steht,
$n_{s,,j}$ für die Molzahl der im eingewogenen polymeren Dispergiermittel enthaltenen anionischen und anionogenen Gruppe steht,

die Indices i und j voneinander unabhängig und eine ganze Zahl größer als 0 sind, wobei i für die Anzahl verschiedenartiger mehrwertiger Metallkationen steht und j für die Anzahl verschiedenartiger im polymeren Dispergiermittel enthaltener anionischer und anionogener Gruppen steht.

**2.** Additiv nach Anspruch 1, umfassend wenigstens ein Anion, das mit wenigstens einem der mehrwertigen Metallkationen ein schwerlösliches Salz zu bilden vermag.

**3.** Additiv nach Anspruch 1 oder 2, wobei wenigstens ein mehrwertiges Metallkation und wenigstens ein Anion in einer Menge vorliegen, die nach folgenden Formeln berechnet wird:

$$1 < \frac{\sum_i z_{K,i} * n_{K,i}}{\sum_j z_{S,j} * n_{S,j}} < 30 \quad (a)$$

$$0 \leq \frac{\sum_l z_{A,l} * n_{A,l}}{\sum_i z_{K,i} * n_{K,i}} < 3 \quad (b)$$

wobei

$z_{K,i}$ für den Betrag der Ladungszahl des mehrwertigen Metallkations steht,
$n_{K,i}$ für die Molzahl des eingewogenen mehrwertigen Metallkations steht,
$z_{s,j}$ für Ladungszahl der im polymeren Dispergiermittel enthaltenen anionischen und anionogenen Gruppen steht,
$n_{s,j}$ für die Molzahl der im eingewogenen polymeren Dispergiermittel enthaltenen anionischen und anionogenen Gruppen steht,
$z_{A,l}$ für die Ladungszahl des eingewogenen Anions steht,
$n_{A,l}$ für die Molzahl des eingewogenen Anions steht,
die Indices i, j und l voneinander unabhängig und eine ganze Zahl größer als 0 sind, i für die Anzahl verschiedenartiger mehrwertiger Metallkationen steht und j für die Anzahl verschiedenartiger im polymeren Dispergiermittel enthaltener anionischer und anionogener Gruppen steht, l für die Anzahl verschiedenartiger Anionen, welche mit dem Metallkation ein schwerlösliches Salz bilden können, steht.

**4.** Additiv nach Anspruch 2 oder 3, wobei das Anion ausgewählt ist unter Carbonat, Oxalat, Silikat, Phosphat, Polyphosphat, Phosphit, Borat, Aluminat und Sulfat.

**5.** Additiv nach einem der vorhergehenden Ansprüche, zusätzlich umfassend wenigstens ein Neutralisierungsmittel.

**6.** Additiv nach Anspruch 5, wobei das Neutralisierungsmittel ein organisches Monoamin, Polyamin, Ammoniak oder ein Alkalihydroxyd ist.

**7.** Additiv nach einem der vorhergehenden Ansprüche, das einen pH-Wert von 2 bis 11,5 aufweist.

**8.** Additiv nach einem der vorhergehenden Ansprüche, wobei das polymere Dispergiermittel als anionische oder anionogene Gruppe zumindest eine Struktureinheit der allgemeinen Formeln (Ia), (Ib), (Ic) und/oder (Id) aufweist:

(Ia)

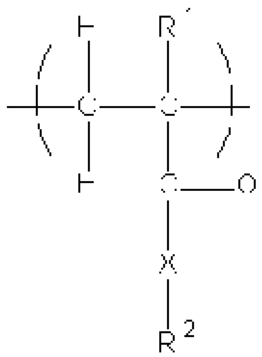

worin

$R^1$ für H oder eine unverzweigte oder verzweigte $C_1$-$C_4$-Alkylgruppe oder $CH_2CO$-X-$R^2$ steht;
X für NH-($C_nH_{2n}$) oder O-($C_nH_{2n}$) mit n = 1, 2, 3 oder 4 oder für eine chemische Bindung steht, wobei das Stickstoffatom bzw. das Sauerstoffatom an die CO-Gruppe gebunden ist;

$R^2$ für OM, $PO_3M_2$, oder O-$PO_3M_2$ steht; mit der Maßgabe, dass X für eine chemische Bindung steht, wenn $R^2$ für OM

steht;

(Ib)

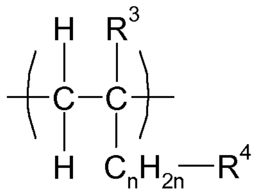

worin

$R^3$ für H oder eine unverzweigte oder verzweigte $C_1$-$C_4$-Alkylgruppe steht;
n für 0, 1, 2, 3 oder 4 steht;
$R^4$ für $PO_3M_2$, oder O-$PO_3M_2$ steht;

(Ic)

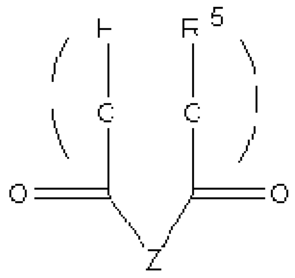

worin

$R^5$ für H oder eine unverzweigte oder verzweigte $C_1$-$C_4$-Alkylgruppe steht;
Z für O oder $NR^7$ steht;
$R^7$ für H, $(C_nH_{2n})$-OH, $(C_nH_{2n})$-$PO_3M_2$, $(C_nH_{2n})$-$OPO_3M_2$, $(C_6H_4)$-$PO_3M_2$, oder $(C_6H_4)$-$OPO_3M_2$ steht, und n für 1, 2, 3 oder 4 steht;

(Id)

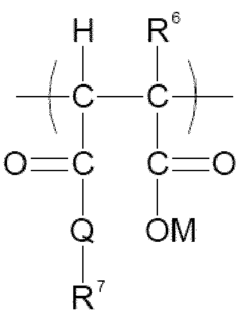

worin

$R^6$ für H oder eine unverzweigte oder verzweigte $C_1$-$C_4$-Alkylgruppe steht;
Q für $NR^7$ oder O steht;
$R^7$ für H, $(C_nH_{2n})$-OH, $(C_nH_{2n})$-$PO_3M_2$, $(C_nH_{2n})$-$OPO_3M_2$, $(C_6H_4)$-$PO_3M_2$, oder $(C_6H_4)$-$OPO_3M_2$ steht,

n für 1, 2, 3 oder 4-steht; und

wobei jedes M unabhängig voneinander für H oder ein Kationäquivalent steht;

**9.** Additiv für hydraulisch abbindende Massen nach einem der vorhergehenden Ansprüche, wobei das polymere Dispergiermittel als Polyetherseitenkette zumindest eine Struktureinheit der allgemeinen Formeln (IIa), (IIb), (IIc) und/oder (IId) aufweist:

(IIa)

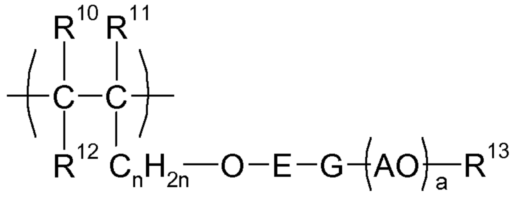

$R^{10}$, $R^{11}$ und $R^{12}$ unabhängig voneinander für H oder eine unverzweigte oder verzweigte $C_1$-$C_4$-Alkylgruppe

stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht;
G für O, NH oder CO-NH steht; oder
E und G gemeinsam für eine chemische Bindung stehen;
A für $C_xH_{2x}$ mit x = 2, 3, 4 oder 5 oder $CH_2CH(C_6H_5)$ steht;
n für 0, 1, 2, 3, 4 und/oder 5 steht;
a für eine ganze Zahl von 2 bis 350 steht;
$R^{13}$ für H, eine unverzweigte oder verzweigte $C_1$-$C_4$-Alkylgruppe, CO-$NH_2$ und/oder $COCH_3$ steht;

worin

(IIb)

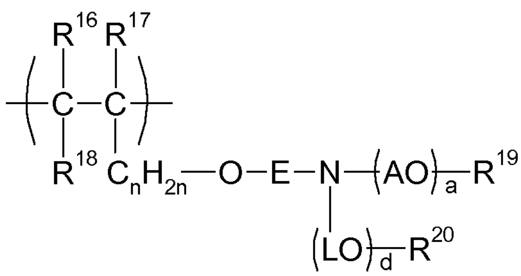

worin

$R^{16}$, $R^{17}$ und $R^{18}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht oder für eine chemische Bindung steht;
A für $C_xH_{2x}$ mit x = 2, 3, 4 oder 5 oder $CH_2CH(C_6H_5)$ steht; n für 0, 1, 2, 3, 4 und/oder 5 steht; L für $C_xH_{2x}$ mit x = 2, 3, 4 oder 5 oder $CH_2$-$CH(C_6H_5)$ steht;
a für eine ganze Zahl von 2 bis 350 steht;
d für eine ganze Zahl von 1 bis 350 steht;
$R^{19}$ für H oder eine unverzweigte oder verzweigte $C_1$-$C_4$-Alkylgruppe steht;
$R^{20}$ für H oder eine unverzweigte $C_1$-$C_4$-Alkylgruppe steht; und
n für 0, 1, 2, 3, 4 oder 5 steht;

(IIc)

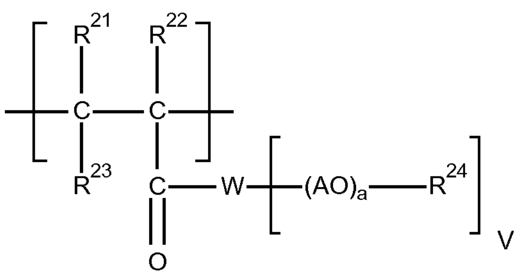

worin

$R^{21}$, $R^{22}$ und $R^{23}$ unabhängig voneinander für H oder eine unverzweigte oder verzweigte $C_1$-$C_4$-Alkylgruppe

stehen;
W für O, $NR^{25}$, N steht
V für 1 steht, wenn W = O oder $NR^{25}$, und für 2 steht, wenn W = N;
A für $C_xH_{2x}$ mit x = 2, 3, 4 oder 5 oder $CH_2CH(C_6H_5)$ steht;
a für eine ganze Zahl von 2 bis 350 steht;
$R^{24}$ für H oder eine unverzweigte oder verzweigte $C_1$-$C_4$-Alkylgruppe steht;
$R^{25}$ für H oder eine unverzweigte oder verzweigte $C_1$-$C_4$-Alkylgruppe steht;

(IId)

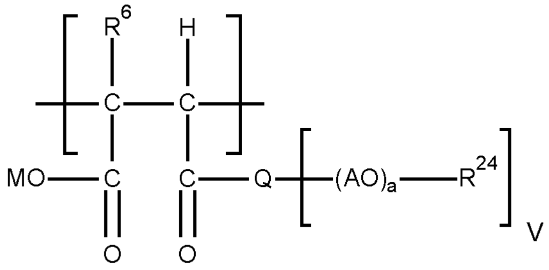

worin

$R^6$ für H oder eine unverzweigte oder verzweigte $C_1$-$C_4$-Alkylgruppe steht;
Q für $NR^{10}$, N oder O steht;
V für 1 steht, wenn W = O oder $NR^{10}$ und für 2 steht, wenn W = N;
$R^{10}$ für H oder eine unverzweigte oder verzweigte $C_1$-$C_4$-Alkylgruppe steht;
A für $C_xH_{2x}$ mit x = 2, 3, 4 oder 5, oder $CH_2C(C_6H_5)H$ steht; und
a für eine ganze Zahl von 2 bis 350 steht.

**10.** Additiv für hydraulisch abbindende Massen nach einem der Ansprüche 1 bis 7, wobei das polymere Dispergiermittel ein Polykondensationsprodukt umfassend Struktureinheiten (III) und (IV) ist:

(III)

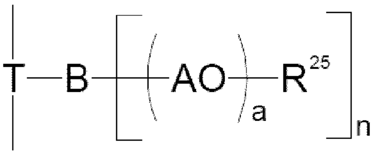

worin

T für einen substituierten oder unsubstituierten Phenyl oder Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
n für 1 oder 2 steht;
B für N, NH oder O steht, mit der Maßgabe, dass n für 2 steht, wenn B für N steht und der Maßgabe, dass n für 1 steht, wenn B für NH oder O steht;
A für $C_xH_{2x}$ mit x = 2, 3, 4 oder 5 oder $CH_2CH(C_6H_5)$ steht;
a für eine ganze Zahl von 1 bis 300 steht;
$R^{25}$ für H, einen verzweigten oder unverzweigten $C_1$- bis $C_{10}$-Alkylrest, $C_5$- bis $C_8$-Cycloalkylrest, Arylrest, oder Heteroarylrest mit 5 bis 10 Ringatomen, wovon 1 oder 2 Atome Heteroatome sind, die ausgewählt sind unter N, O und S, steht;

wobei die Struktureinheit (IV) ausgewählt ist unter den Struktureinheiten (IVa) und (IVb):

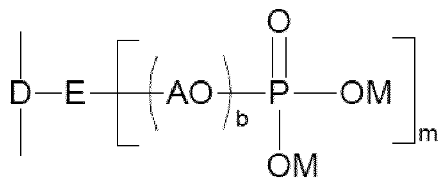

(IVa)

D für einen substituierten oder unsubstituierten Phenyl oder Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
E für N, NH oder O steht, mit der Maßgabe, dass m für 2 steht, wenn E für N steht und der Maßgabe, dass m für 1 steht, wenn E für NH oder O steht;
A für $C_xH_{2x}$ mit x = 2, 3, 4 oder 5 oder $CH_2CH(C_6H_5)$ steht;
b für eine ganze Zahl von 1 bis 300 steht;
M unabhängig voneinander für H oder ein Kationäquivalent stehen;

worin

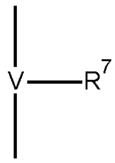

(IVb)

worin

V für einen substituierten oder unsubstituierten Phenyl- oder Naphthylrest steht und gegebenenfalls durch 1 oder zwei Reste substituiert ist, die ausgewählt sind unter $R^8$, OH, $OR^8$, $(CO)R^8$, COOM, $COOR^8$, $SO_3R^8$ und $NO_2$;
$R^7$ für COOM, $OCH_2COOM$, $SO_3M$ oder $OPO_3M_2$ steht;
M für H oder ein Kationäquivalent steht; und
$R^8$ für $C_1$-$C_4$-Alkyl, Phenyl, Naphthyl, Phenyl-$C_1$-$C_4$-alkyl oder $C_1$-$C_4$-Alkylphenyl steht.

**11.** Additiv nach einem der vorhergehenden Ansprüche, dadurch erhältlich, dass man das Salz des mehrwertigen Metallkations in Gegenwart des polymeren Dispergiermittels fällt, um eine kolloid-disperse Zubereitung des Salzes zu erhalten oder
dadurch erhältlich, dass man ein frisch gefälltes Salz des mehrwertigen Metallkations in Gegenwart des polymeren Dispergiermittels dispergiert, um eine kolloid-disperse Zubereitung des Salzes zu erhalten.

**12.** Additiv für hydraulisch abbindende Massen nach Anspruch 11, wobei man die kolloid-disperse Zubereitung mit einem Neutralisierungsmittel versetzt.

**13.** Additiv für hydraulisch abbindende Massen nach einem der Ansprüche 1 bis 10, dadurch erhältlich, dass man ein Hydroxid und/oder Oxid des mehrwertigen Metallkations mit einer Säure peptisiert, um eine kolloid-disperse Zubereitung des Salzes des mehrwertigen Metallkations zu erhalten , wobei die Säure insbesondere ausgewählt ist unter Borsäure, Kohlensäure, Oxalsäure, Kieselsäure, Polyphosphorsäure, Schwefelsäure, Phosphorsäure und/oder phosphorige Säure.

**14.** Verfahren zur Herstellung des Additivs für hydraulisch abbindende Massen nach einem der Ansprüche 1 bis 13, wobei man das Salz des mehrwertigen Metallkations in Gegenwart des polymeren Dispergiermittels fällt, um eine kolloid-disperse Zubereitung des Salzes zu erhalten oder
wobei man ein frisch gefälltes Salz des mehrwertigen Metallkations in Gegenwart des polymeren Dispergiermittels dispergiert, um eine kolloid-disperse Zubereitung des Salzes zu erhalten.

**15.** Verwendung des Additivs für hydraulisch abbindende Massen nach einem der Ansprüche 1 bis 13 als Konsistenzhalter in wasserhaltigen Baustoffmischungen, die ein hydraulisches Bindemittel enthalten.

**16.** Verwendung nach Anspruch 15, wobei das hydraulische Bindemittel ausgewählt ist unter (Portland)zement, Hüttensand, Flugasche, Silikastaub, Metakaolin, natürlichen Puzzolanen, gebranntem Ölschiefer, Calcium-Aluminat-Zement und Mischungen zweier oder mehrerer dieser Komponenten.

**17.** Baustoffmischung, umfassend ein Additiv nach einem der Ansprüche 1 bis 13 und ein Bindemittel, ausgewählt unter (Portland)zement, Hüttensand, Flugasche, Silikastaub, Metakaolin, natürliche Puzzolanen, gebranntem Ölschiefer und Calcium-Aluminat-Zement und Gemischen davon.

**Claims**

**1.** Additive for hydraulically setting compositions, comprising an aqueous, colloidally disperse preparation of at least one salt of a polyvalent metal cation and of at least one polymeric dispersant which comprises anionic and/or anionogenic groups and polyether side chains,
where the polyvalent metal cation is selected from $Al^{3+}$, $Fe^{3+}$, $Fe^{3+}$, $Zn^{2+}$, $Mn^{2+}$, $Cu^{2+}$, $Mg^{2+}$, $Ca^{2+}$, $Sr^{2+}$, $Ba^{2+}$ and mixtures thereof, and where the metal cation is present in a quantity such that the following ratio (a) is greater than 1 and less than 30:

$$1 < \frac{\sum_i z_{K,i} * n_{K,i}}{\sum_j z_{S,j} * n_{S,j}} < 30 \qquad \text{(a)}$$

where

$z_{K,i}$ is the amount of the charge number of the polyvalent metal cation,
$n_{K,i}$ is the number of mols of the weighed-in polyvalent metal cation,
$z_{s,j}$ is the amount of the charge number of the anionic and anionogenic groups present in the polymeric dispersant,
$n_{s,j}$ is the number of mols of the anionic and anionogenic groups present in the weighed-in polymeric dispersant,
the indices i and j are independent of one another and are an integer greater than 0, where i is the number of different kinds of polyvalent metal cations and j is the number of different kinds of anionic and anionogenic groups present in the polymeric dispersant.

**2.** Additive according to Claim 1, comprising at least one anion which is able to form a low-solubility salt with at least one of the polyvalent metal cations.

**3.** Additive according to Claim 1 or 2, where at least one polyvalent metal cation and at least one anion are present in an amount calculated according to the following formulae:

$$1 < \frac{\sum_i z_{K,i} * n_{K,i}}{\sum_j z_{S,j} * n_{S,j}} < 30 \qquad \text{(a)}$$

$$0 \leq \frac{\sum_l z_{A,l} * n_{A,l}}{\sum_i z_{K,i} * n_{K,i}} < 3 \qquad \text{(b)}$$

where

$z_{K,i}$ is the amount of the charge number of the polyvalent metal cation,
$n_{K,i}$ is the number of mols of the weighed-in polyvalent metal cation,
$z_{s,j}$ is the charge number of the anionic and anionogenic groups present in the polymeric dispersant,

$n_{s,j}$ is the number of mols of the anionic and anionogenic groups present in the weighed-in polymeric dispersant,
$z_{A,l}$ is the charge number of the weighed-in anion,
$n_{A,l}$ is the number of mols of the weighed-in anion, the indices i, j and 1 are independent of one another and are an integer greater than 0, i is the number of different kinds of polyvalent metal cations and j is the number of different kinds of anionic and anionogenic groups present in the polymeric dispersant, and 1 is the number of different kinds of anions which are able to form a low-solubility salt with the metal cation.

**4.** Additive according to Claim 2 or 3, where the anion is selected from carbonate, oxalate, silicate, phosphate, polyphosphate, phosphite, borate, aluminate and sulphate.

**5.** Additive according to any of the preceding claims, further comprising at least one neutralizing agent.

**6.** Additive according to Claim 5, where the neutralizing agent is an organic monoamine, polyamine, ammonia or an alkali metal hydroxide.

**7.** Additive according to any of the preceding claims, having a pH of 2 to 11.5.

**8.** Additive according to any of the preceding claims, where the polymeric dispersant comprises as anionic or anionogenic group at least one structural unit of the general formulae (Ia), (Ib), (Ic) and/or (Id):

(Ia)

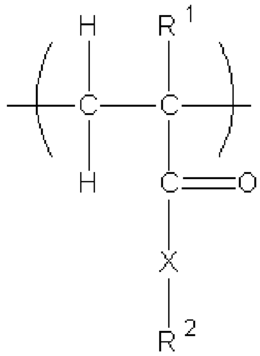

in which

$R^1$ is H or an unbranched or branched $C_1$-$C_4$ alkyl group or $CH_2CO$-X-$R^2$;
X is NH-($C_nH_{2n}$) or O-($C_nH_{2n}$) with n = 1, 2, 3 or 4, or is a chemical bond, where the nitrogen atom or the oxygen atom is bonded to the CO group;
$R^2$ is OM, $PO_3M_2$, or O-$PO_3M_2$; with the proviso that X is a chemical bond if $R^2$ is OM;

(Ib)

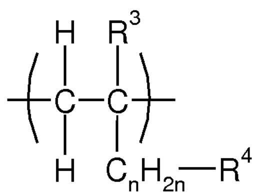

in which

$R^3$ is H or an unbranched or branched $C_1$-$C_4$ alkyl group;
n is 0, 1, 2, 3 or 4;
$R^4$ is $PO_3M_2$, or O-$PO_3M_2$;

(Ic)

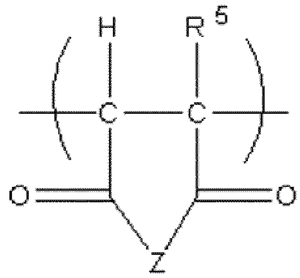

in which

$R^5$ is H or an unbranched or branched $C_1$-$C_4$ alkyl group;
Z is 0 or $NR^7$;
$R^7$ is H, $(C_nH_{2n})$-OH, $(C_nH_{2n})$ -$PO_3M_2$, $(C_nH_{2n})$ -$OPO_3M_2$, $(C_6H_4)$-$PO_3M_2$, or $(C_6H_4)$ -$OPO_3M_2$, and
n is 1, 2, 3 or 4;

(Id)

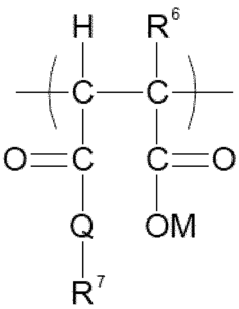

in which

$R^6$ is H or an unbranched or branched $C_1$-$C_4$ alkyl group;
Q is $NR^7$ or 0;
$R^7$ is H, $(C_nH_{2n})$-OH, $(C_nH_{2n})$ -$PO_3M_2$, $(C_nH_{2n})$ -$OPO_3M_2$, $(C_6H_4)$-$PO_3M_2$, or $(C_6H_4)$ -$OPO_3M_2$,

n is 1, 2, 3 or 4; and

where each M independently of any other is H or a cation equivalent.

**9.** Additive for hydraulically setting compositions according to any of the preceding claims, where the polymeric dispersant comprises as polyether side chain at least one structural unit of the general formulae (IIa), (IIb), (IIc) and/or (IId):

(IIa)

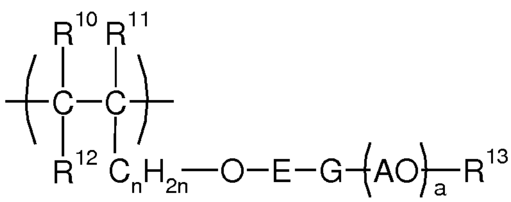

in which

$R^{10}$, $R^{11}$ and $R^{12}$ independently of one another are H or an unbranched or branched $C_1$-$C_4$ alkyl group;
E is an unbranched or branched $C_1$-$C_6$ alkylene group, a cyclohexylene group, $CH_2$-$C_6H_{10}$, 1,2-phenylene, 1,3-phenylene or 1,4-phenylene;
G is 0, NH or CO-NH; or
E and G together are a chemical bond;
A is $C_xH_{2x}$ with x = 2, 3, 4 or 5, or is $CH_2CH(C_6H_5)$ ;
n is 0, 1, 2, 3, 4 and/or 5;
a is an integer from 2 to 350;
$R^{13}$ is H, an unbranched or branched $C_1$-$C_4$ alkyl group, CO-$NH_2$ and/or $COCH_3$;

(IIb)

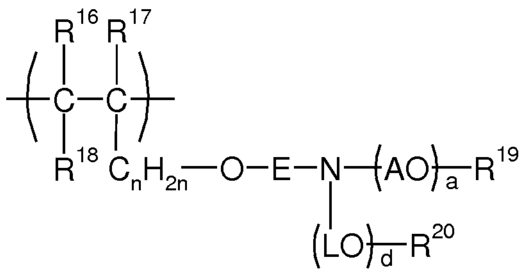

in which

$R^{16}$, $R^{17}$ and $R^{18}$ independently of one another are H or an unbranched or branched $C_1$-$C_4$ alkyl group;
E is an unbranched or branched $C_1$-$C_6$ alkylene group, a cyclohexylene group, $CH_2$-$C_6H_{10}$, 1,2-phenylene, 1,3-phenylene, or 1,4-phenylene, or is a chemical bond;
A is $C_xH_{2x}$ with x = 2, 3, 4 or 5, or is $CH_2CH(C_6H_5)$; n is 0, 1, 2, 3, 4 and/or 5; L is $C_xH_{2x}$ with x = 2, 3, 4 or 5, or is $CH_2$-$CH(C_6H_5)$;
a is an integer from 2 to 350;
d is an integer from 1 to 350;
$R^{19}$ is H or an unbranched or branched $C_1$-$C_4$ alkyl group;
$R^{20}$ is H or an unbranched $C_1$-$C_4$ alkyl group; and
n is 0, 1, 2, 3, 4 or 5;

(IIc)

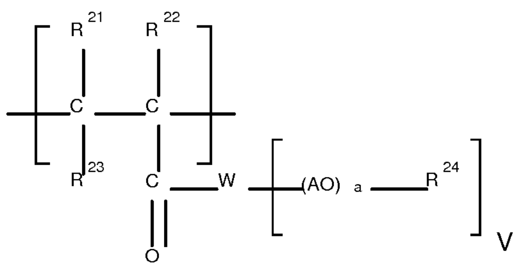

in which

$R^{21}$, $R^{22}$ and $R^{23}$ independently of one another are H or an unbranched or branched $C_1$-$C_4$ alkyl group;
W is 0, $NR^{25}$, or is N;
V is 1 if W = 0 or $NR^{25}$, and is 2 if W = N;
A is $C_xH_{2x}$ with x = 2, 3, 4 or 5, or is $CH_2CH(C_6H_5)$ ;
a is an integer from 2 to 350;

$R^{24}$ is H or an unbranched or branched $C_1$-$C_4$ alkyl group;
$R^{25}$ is H or an unbranched or branched $C_1$-$C_4$ alkyl group;

(IId)

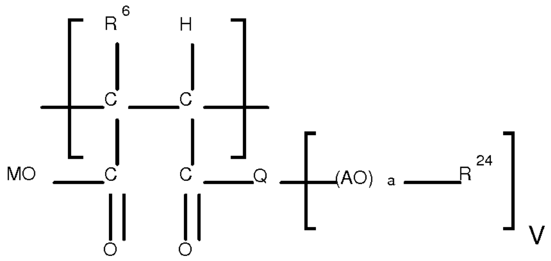

in which

$R^6$ is H or an unbranched or branched $C_1$-$C_4$ alkyl group;
Q is $NR^{10}$, N or 0;
V is 1 if W = 0 or $NR^{10}$ and is 2 if W = N;
$R^{10}$ is H or an unbranched or branched $C_1$-$C_4$ alkyl group;
A is $C_xH_{2x}$ with x = 2, 3, 4 or 5, or is $CH_2C(C_6H_5)H$; and
a is an integer from 2 to 350.

**10.** Additive for hydraulically setting compositions according to any of Claims 1 to 7, where the polymeric dispersant is a polycondensation product comprising structural units (III) and (IV):

(III)

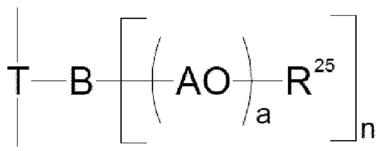

in which

T is a substituted or unsubstituted phenyl or naphthyl radical or a substituted or unsubstituted heteroaromatic radical having 5 to 10 ring atoms, of which 1 or 2 atoms are heteroatoms selected from N, 0 and S;
n is 1 or 2;
B is N, NH or 0, with the proviso that n is 2 if B is N and with the proviso that n is 1 if B is NH or 0;
A is $C_xH_{2x}$ with x = 2, 3, 4 or 5, or is $CH_2CH(C_6H_5)$ ;
a is an integer from 1 to 300;
$R^{25}$ is H, a branched or unbranched $C_1$ to $C_{10}$ alkyl radical, $C_5$ to $C_8$ cycloalkyl radical, aryl radical, or heteroaryl radical having 5 to 10 ring atoms, of which 1 or 2 atoms are heteroatoms selected from N, 0 and S;

where the structural unit (IV) is selected from the structural units (IVa) and (IVb):

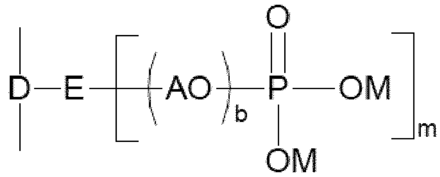

(IVa)

in which

D is a substituted or unsubstituted phenyl or naphthyl radical or a substituted or unsubstituted heteroaromatic radical having 5 to 10 ring atoms, of which 1 or 2 atoms are heteroatoms selected from N, 0 and S;
E is N, NH or 0, with the proviso that m is 2 if E is N and with the proviso that m is 1 if E is NH or 0;
A is $C_xH_{2x}$ with x = 2, 3, 4 or 5, or is $CH_2CH(C_6H_5)$ ;
b is an integer from 1 to 300;
M independently at each occurrence is H or a cation equivalent;

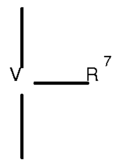

(IVb)

in which

V is a substituted or unsubstituted phenyl or naphthyl radical and is optionally substituted by 1 or two radicals selected from $R^8$, OH, $OR^8$, $(CO)R^8$, COOM, $COOR^8$, $SO_3R^8$ and $NO_2$;
$R^7$ is COOM, $OCH_2COOM$, $SO_3M$ or $OPO_3M_2$;
M is H or a cation equivalent; and
$R^8$ is $C_1$-$C_4$ alkyl, phenyl, naphthyl, phenyl-$C_1$-$C_4$ alkyl or $C_1$-$C_4$ alkylphenyl.

**11.** Additive according to any of the preceding claims, obtainable by precipitating the salt of the polyvalent metal cation in the presence of the polymeric dispersant, to give a colloidally disperse preparation of the salt, or
obtainable by dispersing a freshly precipitated salt of the polyvalent metal cation in the presence of the polymeric dispersant, to give a colloidally disperse preparation of the salt.

**12.** Additive for hydraulically setting compositions according to Claim 11, where a neutralizing agent is added to the colloidally disperse preparation.

**13.** Additive for hydraulically setting compositions according to any of Claims 1 to 10, obtainable by peptizing a hydroxide and/or oxide of the polyvalent metal cation with an acid, to give a colloidally disperse preparation of the salt of the polyvalent metal cation, where the acid is selected more particularly from boric acid, carbonic acid, oxalic acid, silicic acid, polyphosphoric acid, sulphuric acid, phosphoric acid and/or phosphorous acid.

**14.** Process for preparing the additive for hydraulically setting compositions according to any of Claims 1 to 13, where the salt of the polyvalent metal cation is precipitated in the presence of the polymeric dispersant, to give a colloidally disperse preparation of the salt, or
where a freshly precipitated salt of the polyvalent metal cation is dispersed in the presence of the polymeric dispersant, to give a colloidally disperse preparation of the salt.

**15.** Use of the additive for hydraulically setting compositions according to any of Claims 1 to 13 as a slump retainer in water-containing building material mixtures which comprise a hydraulic binder.

**16.** Use according to Claim 15, where the hydraulic binder is selected from (Portland) cement, slag sand, flyash, silica dust, metakaolin, natural pozzolans, burnt oil shale, calcium aluminate cement and mixtures of two or more of these components.

**17.** Building material mixture comprising an additive according to any of Claims 1 to 13 and a binder selected from (Portland) cement, slag sand, flyash, silica dust, metakaolin, natural pozzolans, burnt oil shale and calcium aluminate cement and mixtures thereof.

## Revendications

**1.** Additif pour matériaux à durcissement hydraulique, comprenant une préparation aqueuse colloïdale dispersée d'au moins un sel d'un cation métallique polyvalent et d'au moins un dispersant polymère qui comprend des groupes

anioniques et/ou anionogènes et des chaînes latérales polyéther, le cation métallique polyvalent étant choisi parmi $Al^{3+}$, $Fe^{3+}$, $Fe^{3+}$, $Zn^{2+}$, $Mn^{2+}$, $Cu^{2+}$, $Mg^{2+}$, $Ca^{2+}$, $Sr^{2+}$, $Ba^{2+}$ et leurs mélanges, et le cation métallique étant présent en une quantité telle que le rapport (a) suivant soit supérieur à 1 et inférieur à 30 :

$$1 < \frac{\sum_i z_{K,i} * n_{K,i}}{\sum_j z_{S,j} * n_{S,j}} < 30 \qquad (a)$$

$z_{K,i}$ représentant le montant du nombre de charges du cation métallique polyvalent,
$n_{K,i}$ représente le nombre de moles du cation métallique polyvalent pesé,
$z_{s,j}$ représentant le montant du nombre de charges du groupe anionique et anionogène contenu dans le dispersant polymère,
$n_{s,j}$ représentant le nombre de moles du groupe anionique et anionogène contenu dans le dispersant polymère pesé,
les indices i et j représentant indépendamment l'un de l'autre un nombre entier supérieur à 0, i représentant le nombre de cations métalliques polyvalents de type différent et j représentant le nombre de groupes anioniques et anionogènes de type différent contenus dans le dispersant polymère.

2. Additif selon la revendication 1, comprenant au moins un anion, qui peut former un sel difficilement soluble avec au moins un des cations métalliques polyvalents.

3. Additif selon la revendication 1 ou 2, dans lequel au moins un cation métallique polyvalent et au moins un anion sont présents en une quantité qui est calculée par les formules suivantes :

$$1 < \frac{\sum_i z_{K,i} * n_{K,i}}{\sum_j z_{S,j} * n_{S,j}} < 30 \qquad (a)$$

$$0 \leq \frac{\sum_l z_{A,l} * n_{A,l}}{\sum_i z_{K,i} * n_{K,i}} < 3 \qquad (b)$$

$z_{K,i}$ représentant le montant du nombre de charges du cation métallique polyvalent,
$n_{K,i}$ représente le nombre de moles du cation métallique polyvalent pesé,
$z_{s,j}$ représentant le nombre de charges des groupes anioniques et anionogènes contenus dans le dispersant polymère,
$n_{s,j}$ représentant le nombre de moles des groupes anioniques et anionogènes contenus dans le dispersant polymère pesé,
$z_{A,l}$ représentant le nombre de charges de l'anion pesé, $n_{A,l}$ représentant le nombre de moles de l'anion pesé,
les indices i, j et l représentant indépendamment les uns des autres un nombre entier supérieur à 0, i représentant le nombre de cations métalliques polyvalents de type différent et j représentant le nombre de groupes anioniques et anionogènes de type différent contenus dans le dispersant polymère, l représentant le nombre d'anions de type différent qui peuvent former un sel difficilement soluble avec le cation métallique.

4. Additif selon la revendication 2 ou 3, dans lequel l'anion est choisi parmi carbonate, oxalate, silicate, phosphate, polyphosphate, phosphite, borate, aluminate et sulfate.

5. Additif selon l'une quelconque des revendications précédentes, comprenant en outre au moins un agent de neutralisation.

6. Additif selon la revendication 5, dans lequel l'agent de neutralisation est une monoamine organique, une polyamine,

l'ammoniac ou un hydroxyde alcalin.

**7.** Additif selon l'une quelconque des revendications précédentes, qui présente un pH de 2 à 11,5.

**8.** Additif selon l'une quelconque des revendications précédentes, dans lequel le dispersant polymère comprend en tant que groupe anionique ou anionogène au moins une unité structurale de formule générale (Ia), (Ib), (Ic) et/ou (Id) :

(Ia)

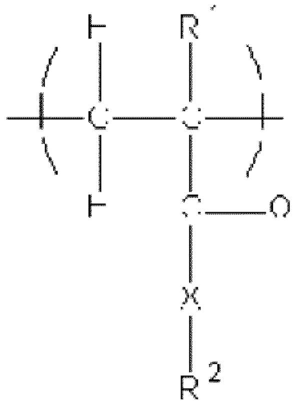

dans laquelle

$R^1$ représente H ou un groupe alkyle en $C_1$-$C_4$ non ramifié ou ramifié ou $CH_2CO$-X-$R^2$ ;
X représente NH-($C_nH_{2n}$) ou O-($C_nH_{2n}$) avec n = 1, 2, 3 ou 4, ou une liaison chimique, l'atome d'azote ou l'atome d'oxygène étant relié au groupe CO ;
$R^2$ représente OM, $PO_3M_2$ ou O-$PO_3M_2$ ; à condition que X représente une liaison chimique lorsque $R^2$ représente OM ;

(Ib)

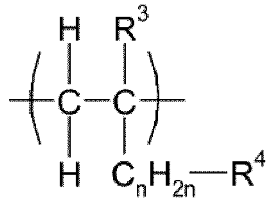

dans laquelle

$R^3$ représente H ou un groupe alkyle en $C_1$-$C_4$ non ramifié ou ramifié ;
n représente 0, 1, 2, 3 ou 4 ;
$R^4$ représente $PO_3M_2$ ou O-$PO_3M_2$ ;

(Ic)

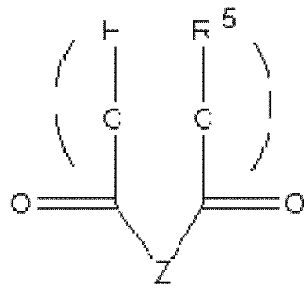

dans laquelle

$R^5$ représente H ou un groupe alkyle en $C_1$-$C_4$ non ramifié ou ramifié ;
Z représente 0 ou $NR^7$ ;
$R^7$ représente H, $(C_nH_{2n})$-OH, $(C_nH_{2n})$ -$PO_3M_2$, $(C_nH_{2n})$-$OPO_3M_2$, $(C_6H_4)$-$PO_3M_2$ ou $(C_6H_4)$-$OPO_3M_2$, et
n représente 1, 2, 3 ou 4 ;

(Id)

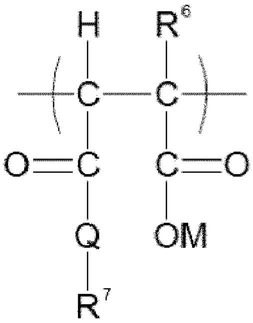

dans laquelle

$R^6$ représente H ou un groupe alkyle en $C_1$-$C_4$ non ramifié ou ramifié ;
Q représente $NR^7$ ou O ;
$R^7$ représente H, $(C_nH_{2n})$-OH, $(C_nH_{2n})$ -$PO_3M_2$, $(C_nH_{2n})$-$OPO_3M_2$, $(C_6H_4)$-$PO_3M_2$ ou $(C_6H_4)$-$OPO_3M_2$,
n 1, 2, 3 ou 4 ; et
chaque M représente indépendamment les uns des autres H ou un équivalent cationique.

**9.** Additif pour matériaux à durcissement hydraulique selon l'une quelconque des revendications précédentes, dans lequel le dispersant polymère comprend en tant que chaîne latérale polyéther au moins une unité structurale de formule générale (IIa), (IIb), (IIc) et/ou (IId) :

(IIa)

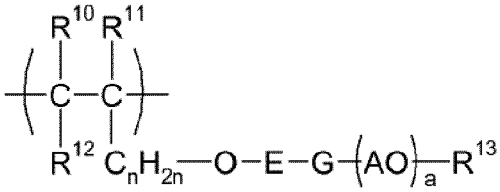

dans laquelle

$R^{10}$, $R^{11}$ et $R^{12}$ représentent indépendamment les uns des autres H ou un groupe alkyle en $C_1$-$C_4$ non ramifié ou ramifié ;
E représente un groupe alkylène en $C_1$-$C_6$ non ramifié ou ramifié, un groupe cyclohexylène, $CH_2$-$C_6H_{10}$, 1,2-phénylène, 1,3-phénylène ou 1,4-phénylène ;
G représente 0, NH ou CO-NH ; ou
E et G représentent ensemble une liaison chimique ;
A représente $C_xH_{2x}$ avec x = 2, 3, 4 ou 5, ou $CH_2CH(C_6H_5)$ ;
n représente 0, 1, 2, 3, 4 et/ou 5 ;
a représente un nombre entier de 2 à 350 ;
$R^{13}$ représente H, un groupe alkyle en $C_1$-$C_4$ non ramifié ou ramifié, CO-$NH_2$ et/ou $COCH_3$ ;

(IIb)

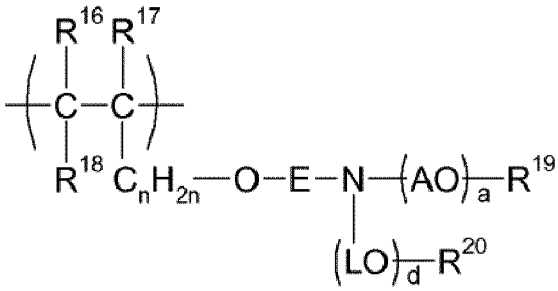

dans laquelle

$R^{16}$, $R^{17}$ et $R^{18}$ représentent indépendamment les uns des autres H ou un groupe alkyle en $C_1$-$C_4$ non ramifié ou ramifié ;
E représente un groupe alkylène en $C_1$-$C_6$ non ramifié ou ramifié, un groupe cyclohexylène, $CH_2$-$C_6H_{10}$, 1,2-phénylène, 1,3-phénylène ou 1,4-phénylène, ou représente une liaison chimique ;
A représente $C_xH_{2x}$ avec x = 2, 3, 4 ou 5, ou $CH_2CH(C_6H_5)$ ; n représente 0, 1, 2, 3, 4 et/ou 5 ; L représente $C_xH_{2x}$ avec x = 2, 3, 4 ou 5, ou $CH_2$-$CH(C_6H_5)$ ;
a représente un nombre entier de 2 à 350 ;
d représente un nombre entier de 1 à 350 ;
$R^{19}$ représente H ou un groupe alkyle en $C_1$-$C_4$ non ramifié ou ramifié ;
$R^{20}$ représente H ou un groupe alkyle en $C_1$-$C_4$ non ramifié ; et
n représente 0, 1, 2, 3, 4 ou 5 ;

(IIc)

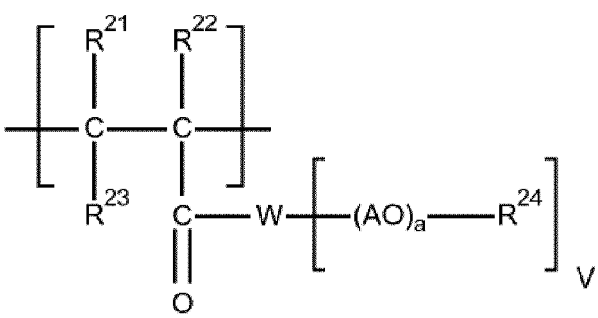

dans laquelle

$R^{21}$, $R^{22}$ et $R^{23}$ représentent indépendamment les uns des autres H ou un groupe alkyle en $C_1$-$C_4$ non ramifié ou ramifié ;
W représente 0, $NR^{25}$, N ;

V représente 1 lorsque W = 0 ou $NR^{25}$, et 2 lorsque W = N ;
A représente $C_xH_{2x}$ avec x = 2, 3, 4 ou 5, ou $CH_2CH(C_6H_5)$ ;
a représente un nombre entier de 2 à 350 ;
$R^{24}$ représente H ou un groupe alkyle en $C_1$-$C_4$ non ramifié ou ramifié ;
$R^{25}$ représente H ou un groupe alkyle en $C_1$-$C_4$ non ramifié ou ramifié ;

(IId)

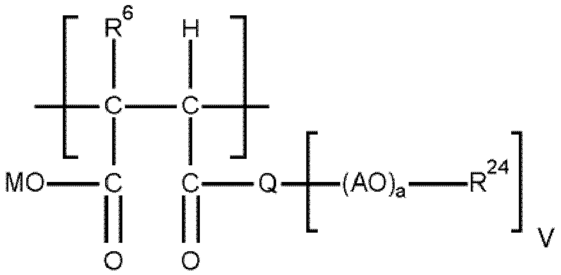

dans laquelle

$R^6$ représente H ou un groupe alkyle en $C_1$-$C_4$ non ramifié ou ramifié ;
Q représente $NR^{10}$, N ou O ;
V représente 1 lorsque W = 0 ou $NR^{10}$, et 2 lorsque W = N ;
$R^{10}$ représente H ou un groupe alkyle en $C_1$-$C_4$ non ramifié ou ramifié ;
A représente $C_xH_{2x}$ avec x = 2, 3, 4 ou 5, ou $CH_2C(C_6H_5)H$ ; et
a représente un nombre entier de 2 à 350.

**10.** Additif pour matériaux à durcissement hydraulique selon l'une quelconque des revendications 1 à 7, dans lequel le dispersant polymère est un produit de polycondensation comprenant les unités structurales (III) et (IV) :

(III)

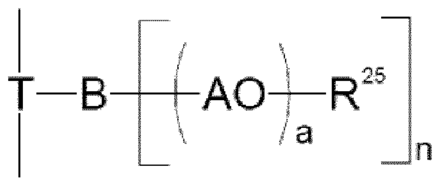

dans laquelle

T représente un radical phényle ou naphtyle substitué ou non substitué ou un radical hétéroaromatique substitué ou non substitué comprenant 5 à 10 atomes de cycle, parmi lesquels 1 ou 2 atomes sont des hétéroatomes, qui sont choisis parmi N, 0 et S ;
n représente 1 ou 2 ;
B représente N, NH ou 0, à condition que n représente 2 lorsque B représente N, et à condition que n représente 1 lorsque B représente NH ou 0 ;
A représente $C_xH_{2x}$ avec x = 2, 3, 4 ou 5, ou $CH_2CH(C_6H_5)$ ;
a représente un nombre entier de 1 à 300 ;
$R^{25}$ représente H, un radical alkyle en $C_1$-$C_{10}$ ramifié ou non ramifié, un radical cycloalkyle en $C_5$ à $C_8$, un radical aryle ou un radical hétéroaryle comprenant 5 à 10 atomes de cycle, parmi lesquels 1 ou 2 atomes sont des hétéroatomes, qui sont choisis parmi N, 0 et S ; l'unité structurale (IV) étant choisie parmi les unités structurales (IVa) et (IVb) :

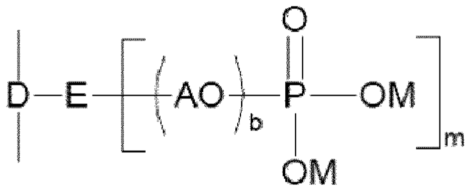

(IVa)

dans laquelle

D représente un radical phényle ou naphtyle substitué ou non substitué ou un radical hétéroaromatique substitué ou non substitué comprenant 5 à 10 atomes de cycle, parmi lesquels 1 ou 2 atomes sont des hétéroatomes, qui sont choisis parmi N, 0 et S ;
E représente N, NH ou 0, à condition que m représente 2 lorsqu'E représente N, et à condition que m représente 1 lorsqu'E représente NH ou 0 ;
A représente $C_xH_{2x}$ avec x = 2, 3, 4 ou 5, ou $CH_2CH(C_6H_5)$ ;
b représente un nombre entier de 1 à 300 ;
les M représentent indépendamment les uns des autres H ou un équivalent cationique ;

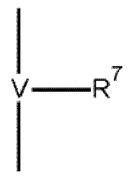

(IVb)

dans laquelle

V représente un radical phényle ou naphtyle substitué ou non substitué et est éventuellement substitué par 1 ou deux radicaux qui sont choisis parmi $R^8$, OH, $OR^8$, $(CO)R^8$, COOM, $COOR^8$, $SO_3R^8$ et $NO_2$ ;
$R^7$ représente COOM, $OCH_2COOM$, $SO_3M$ ou $OPO_3M_2$ ;
M représente H ou un équivalent cationique ; et
$R^8$ représente alkyle en $C_1$-$C_4$, phényle, naphtyle, phényl-alkyle en $C_1$-$C_4$ ou alkylphényle en $C_1$-$C_4$.

**11.** Additif selon l'une quelconque des revendications précédentes, pouvant être obtenu par précipitation du sel du cation métallique polyvalent en présence du dispersant polymère, afin d'obtenir une préparation colloïdale dispersée du sel, ou
pouvant être obtenu par dispersion d'un sel fraîchement précipité du cation métallique polyvalent en présence du dispersant polymère, afin d'obtenir une préparation colloïdale dispersée du sel.

**12.** Additif pour matériaux à durcissement hydraulique selon la revendication 11, dans lequel la préparation colloïdale dispersée est mélangée avec un agent de neutralisation.

**13.** Additif pour matériaux à durcissement hydraulique selon l'une quelconque des revendications 1 à 10, pouvant être obtenu par peptisation d'un hydroxyde et/ou oxyde du cation métallique polyvalent avec un acide, afin d'obtenir une préparation colloïdale dispersée du sel du cation métallique polyvalent, l'acide étant notamment choisi parmi l'acide borique, l'acide carbonique, l'acide oxalique, l'acide silicique, l'acide polyphoshorique, l'acide sulfurique, l'acide phosphorique et/ou l'acide phosphoreux.

**14.** Procédé de fabrication de l'additif pour matériaux à durcissement hydraulique selon l'une quelconque des revendications 1 à 13, dans lequel le sel du cation métallique polyvalent est précipité en présence du dispersant polymère afin d'obtenir une préparation colloïdale dispersée du sel, ou
un sel fraîchement précipité du cation métallique polyvalent est dispersé en présence du dispersant polymère afin d'obtenir une préparation colloïdale dispersée du sel.

**15.** Utilisation de l'additif pour matériaux à durcissement hydraulique selon l'une quelconque des revendications 1 à 13, en tant qu'agent de maintien de la consistance dans des mélanges de construction contenant de l'eau qui

contiennent un liant hydraulique.

**16.** Utilisation selon la revendication 15, dans laquelle le liant hydraulique est choisi parmi le ciment (de Portland), le laitier granulé, les cendres volantes, la poussière de silice, le métakaolin, la pouzzolane naturelle, le schiste bitumineux calciné, le ciment d'aluminate de calcium et les mélanges de deux ou plus de ces composants.

**17.** Mélange de construction, comprenant un additif selon l'une quelconque des revendications 1 à 13 et un liant, choisi parmi le ciment (de Portland), le laitier granulé, les cendres volantes, la poussière de silice, le métakaolin, la pouzzolane naturelle, le schiste bitumineux calciné et le ciment d'aluminate de calcium et leurs mélanges.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2009004348 A
- JP 57067057 A
- EP 1136508 A1
- WO 2010029117 A
- WO 2000048961 A
- US 7879146 B2
- EP 2412689 A
- EP 0894811 A
- EP 1851256 A
- EP 2463314 A
- EP 0753488 A
- WO 2006042709 A
- WO 2010026155 A
- DE 102004050395

### In der Beschreibung aufgeführte Nicht-Patentliteratur

- **J. PLANK et al.** *Cem. Conr. Res.,* 2009, vol. 39, 1-5